# EUROPEAN PATENT SPECIFICATION

(11) **EP 0 802 413 B1**
(45) Date of publication and mention of the grant of the patent: **09.07.2003**
(21) Application number: 97301109.1
(22) Date of filing: 20.02.1997
(51) Int. Cl.: G01N 35/02, G01N 21/64, G01N 35/00

(54) **Automatic sample testing machine**
Automatische Probenanalysevorrichtung
Machine d'essai automatique d'échantillons

(30) Priority: 21.02.1996 US 604472; 21.02.1996 US 604475; 21.02.1996 US 604725; 21.02.1996 US 604461; 21.02.1996 US 604672
(43) Date of publication of application: 22.10.1997
(60) Divisional application: 03075139.0
(73) Proprietor: bioMerieux Vitek, Inc., Hazelwood, Missouri 63042-2905 (US)
(72) Inventor: Fanning, Mark Joseph, Florissant, Missouri 63031 (US); Gayral, Jean-Pierre-Bernard, 01500 Amberieu en Buyey (FR); Karl, Clifford W., St. Louis, MO 63114 (US); Williams, Daniel Ray, Chesterfield, MO 63017 (US); Limon, Bernard Jean Marie, 01250 Rignat (FR); Anthon, Eric William, Santa Rosa, CA 95404 (US); Meyer, Donald, O'Fallon, MO 63366 (US); Bishop, James Clement, Columbia, Mo 65203 (US); Morris, Roger James, St. Louis, Mo 63146 (US); Drager, Craig, Ballwin, MO 63005 (US); Robinson, Ron, Bridgeton, MO 63044 (US); Burchard, Thomas H., Winchester, MA 01890 (US); Seaton, William Ernest, Chesterfield, MO 63005 (US); Chastain, David, Acton, MA 01720 (US); Shine, David, University City, MO 63105 (US); Guerrera, Stephen, Milford, MA 01757 (US); Springer, Paul, Florrissant, MO 63031 (US); Porat, David, Newton, MA 02158 (US); Moore, Andrew, Austin, TX 87859 (US); Gerst, Joanne T, St. Louis, MO 63131 (US); Rousmaniere, Arthur, Andover, MA 01810 (US); Ryall, Richard James, Santa Rosa, CA 95405 (US); Zeigler, Andrew, Arlington, MA 02174 (US); O'Bear, Raymond E., Granite City, IL 62040 (US); Smith, Kent C., Andover, MA 01810 (US); Flender, Gregg, Quincy, MA 02169 (US)
(74) Representative: Froud, Clive

(56) References cited:
- EP-A- 0 390 315
- EP-A- 0 516 274
- EP-A- 0 588 236
- EP-A- 0 594 108
- EP-A- 0 663 589
- WO-A-92/19949
- WO-A-93/03383
- WO-A-94/01780
- DE-A- 3 539 372
- DE-A- 19 521 044
- JP-A- 8 271 527
- US-A- 3 476 515
- US-A- 4 038 030
- US-A- 4 040 533
- US-A- 4 118 280
- US-A- 4 236 825
- US-A- 4 342 407
- US-A- 4 448 534
- US-A- 4 656 007
- US-A- 4 750 837
- US-A- 4 766 714
- US-A- 4 960 566
- US-A- 5 260 030
- US-A- 5 340 747
- US-A- 5 364 598
- US-A- 5 374 395

## Description

This invention relates to machines and systems for automatically loading a test sample card having one or more reagent-filled sample wells with fluid samples (e.g., samples containing microbiological agents), and for conducting optical analysis of the samples after reaction with the reagents. The invention is particularly suitable for use in biological, blood or chemical analysis machines, as well as immunochemistry and nucleic acid probe assay machines.

Biological samples can be reacted and subjected to chemical or optical analysis using various techniques, including transmittance and/or fluorescence optical analysis. The purpose of the analysis may be to identify an unknown biological agent or target in the sample, to determine the concentration of a substance in the sample, or determine whether the biological agent is susceptible to certain antibiotics, as well as the concentration of antibiotics that would be effective in treating an infection caused by the agent.

A technique has been developed for conducting optical analysis of biological samples that involves the use of a sealed test sample card containing a plurality of small sample wells. Typically, during manufacture of the cards, e.g. for microbiological analysis, the wells are filled with either various types of growth media for various biological agents, or also various concentrations of different antibiotics. The cards have an internal fluid passageway structure for allowing fluid to enter the wells of the card through a transfer tube port. An L-shaped integral transfer tube extends outwardly from the transfer tube port. The prior art method involved the manual insertion of one end of the transfer tube into the card and the other end into a test tube, and then the manual placement of the card with attached transfer tube and test tube into a vacuum filling sealing machine, such as the Vitek® Filler Sealer. The filling and sealing machine generates a vacuum, causing the fluid in the test tube to be drawn into the wells of the sample card. After the wells of the card are loaded with the sample, the cards are manually inserted into a slot in a sealer module in the machine, where the transfer tube is cut and melted, sealing the interior of the card. The cards are then manually removed from the filler/sealer module and loaded into a reading and incubating machine, such as the VITEK® Reader. The reading and incubating machine incubates the cards at a desired temperature. An optical reader is provided for conducting transmittance testing of the wells of the card. Basically, the cards are stacked in columns in the reading machine, and an optical system moves up and down the column of cards, pulling the cards into the transmittance optics one at a time, reading the cards, and placing the cards back in the column of cards. The VITEK® Reader is described generally in the Charles et al. patent, U.S. No. 4,188,280.

This arrangement has limitations, in that two machines, a filler/sealer and a reader, are required to process and analyze the cards. Furthermore, additional time and labor are required to conduct the complete analysis of the card.

Combining the several functions of biological sample processing and optical reading into a single automatic sample processing and reading machine poses substantial challenges. One particularly difficult challenge is to provide a way of conducting the vacuum loading of the cards, and to provide a way for moving the loaded sample card to incubation and optical reading stations. Another challenge is to design a transport system for moving the sample cards and receptacles about the machine to the various stations.

The present inventive automated sample testing machine achieves these goals by providing a machine that performs dilution for susceptibility testing, fills the cards with the samples at a vacuum station, and seals the card by cutting the transfer tube, and conducts incubation and optical transmittance and fluorescence analysis of the cards, all automatically. The machine is capable of conducting susceptibility and identification testing of a sample placed in a single test tube in one test run. The machine provides for rapid, automatic identification and susceptibility testing of the sample. In a preferred form of the invention, a number of different test samples are tested in one test run, and moved in a sample tray or "boat" around the machine among the various stations. The tray receives a cassette that contains a plurality of test tubes and associated test sample cards. The machine provides for novel pipetting and diluting stations, permitting fluids to be added to the test tubes or transferred from one test tube to another.

The machine further has a unique test sample positioning system that moves the tray (with test tubes and cards) about the machine over a base pan. The design of the positioning system is such that it permits essentially a custom configuration of stations above the base pan. Expansion of the machine to include additional carousels and reading stations can be readily accomplished.

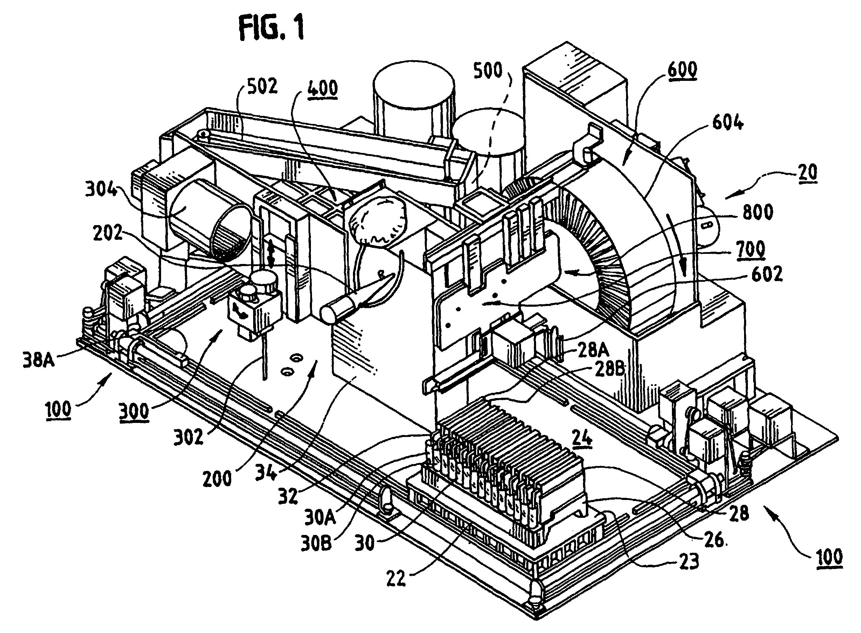

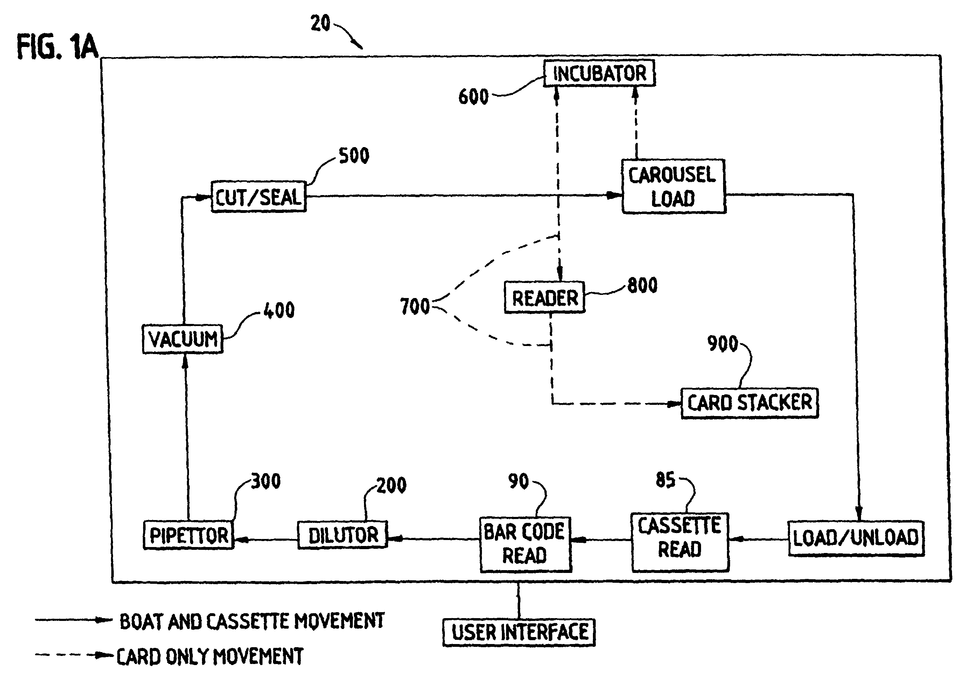

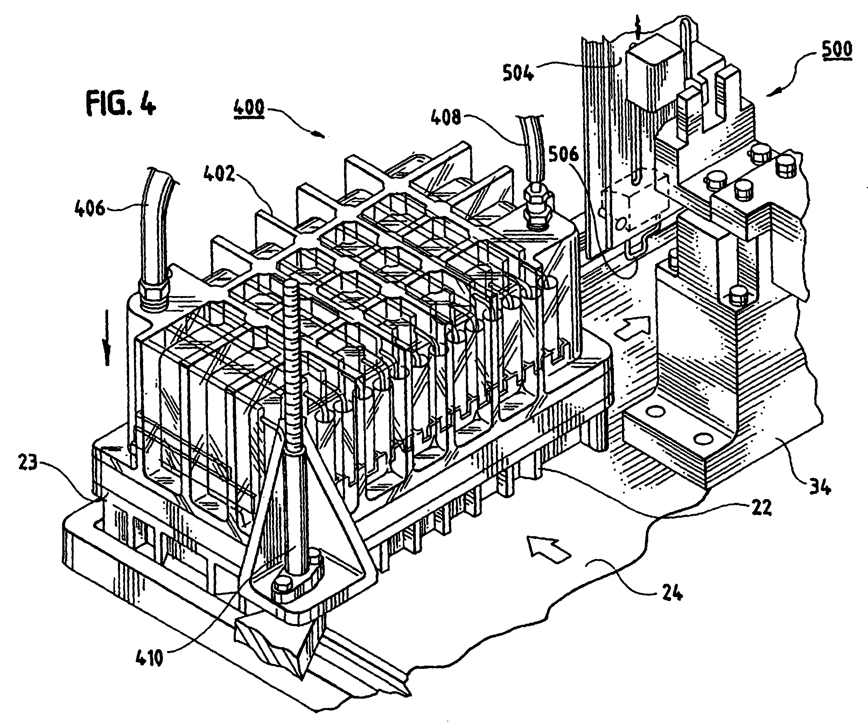

US-A-4 118 280 discloses an automatic analysis system. As mentioned in col. 6, line 7, of D1, a **vacuum station** is provided into which **test cards** with **sample tubes** in a **loading device** (see fig. 4) are introduced for transferring the samples into internal chambers in the test cards. The test cards are then loaded into a **tray** 130, fig. 1, which is inserted in the carrousel H. The cabinet D containing the carrousel also acts as an **Incubation station**. Also contained in the cabinet D is the **optical card reader** (see col. 10, lines 39-49). Various **positioning** and **transport** means are employed for moving the cards, either on trays or individually within the cabinet D.

WO-A- 93 03383 describes a system in which carriers 12, each including a sample holder and a reaction vessel, are transported to an optical decoder 14, then moved to a processing chamber, where at block 20, the sample and reagent are transferred to the reaction vessel of the carrier, and then the carrier transported through an incubator. As mentioned at the top of page 12, the carriers are removed for analysis.

WO-A- 94 01780 describes a system in which a transport system conveys from a loading station 39 a tray with a plurality of sample containers, to a pipette device which could be a vacuum station. Sample liquids are aspirated and applied to a turntable carrying an assay module. The turntable enclosure is temperature controlled, i.e. acts as an incubator.

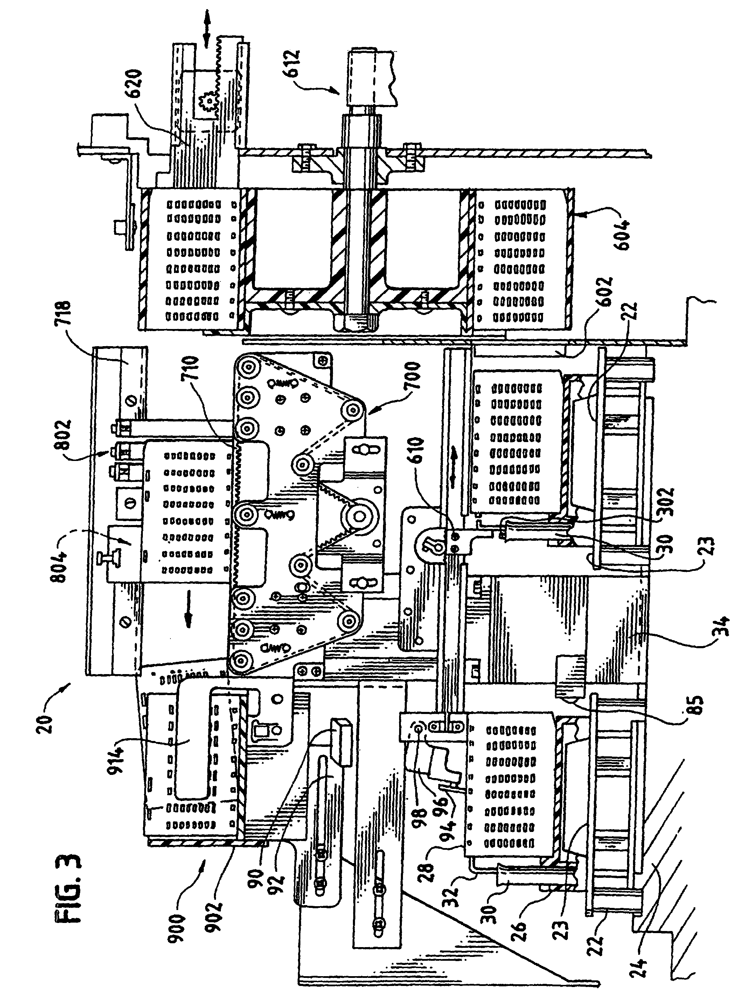

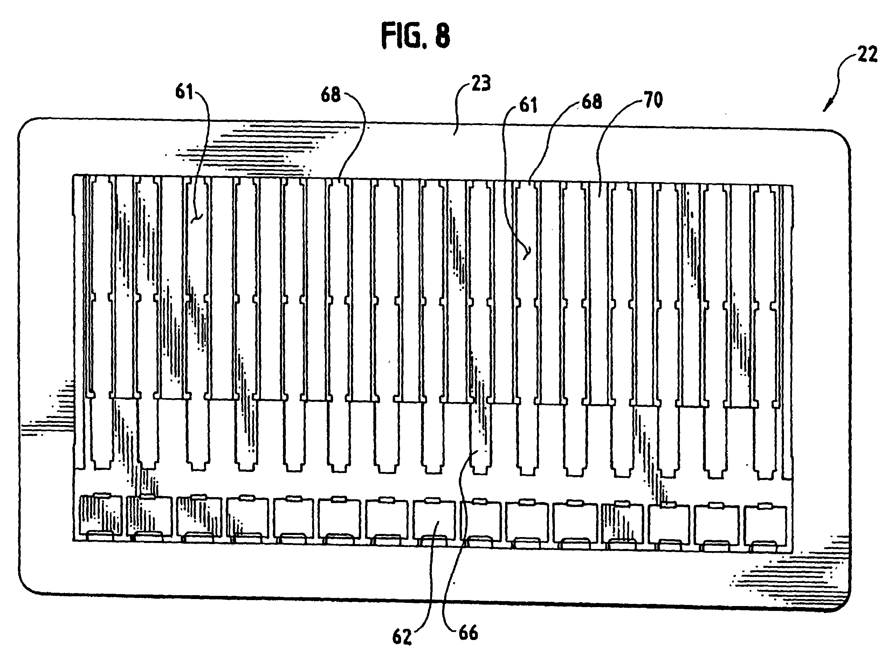

US-A-5 374 395 discloses an automatic analysis similar to that of the present application. Test packs are loaded into the system (see e.g. fig. 3. In the processing station 602 (fig. 8 and col. 17 line 3, the samples are transferred within the pack, by mechanical means. The packs are put on carousel 400 for incubation and optical reading (see col. 11 line 45).

US-A-4 236 825 relates to an automatic analysis system with a carrier for a plurality of sample holders, and a transport mechanism for moving the carrier through a number of stations, e.g. washing , evacuation, reagent addition, analysis.

According to the invention, a machine is provided for automatically testing a sample delivered to reagent-filled wells of a test sample card, which is as defined in claim 1.

The machine has a loading station and a sample tray moveable within the machine from the loading station to various stations, where operations are performed on the test sample and the test sample card. The samples are placed in fluid communication with the test sample cards when the samples and cards are loaded into the tray.

The machine includes a vacuum station having a vacuum chamber moveable relative to the tray between upper and lower positions. When the vacuum chamber is lowered to its lower position, the vacuum chamber cooperates with a peripheral horizontal surface in the tray to make a sealing engagement with the tray. The vacuum station has a vacuum source for supplying vacuum to the chamber and valves for controlling the drawing of vacuum and releasing the vacuum. The fluid samples are loaded in the cards when the vacuum is released from the vacuum chamber.

Vacuum loading techniques are provided for the vacuum station in order to prevent air bubbles from entering the wells of the card. These techniques include maintaining a predetermined rate of change of pressure in the vacuum pressure as vacuum in drawn, and maintaining the vacuum level at a threshold or set point for a short period of time in order to properly fill the card. After the vacuum loading process is completed, the tray is then advanced to a sealing station, where a hot cutting wire is used to cut off the transfer tube for the card and seal the interior of the card from the atmosphere.

The machine also has an incubation station for incubating the card. A test sample positioning system is provided for moving the tray from the loading station to the vacuum station and from the vacuum station to the incubation station. The cards are unloaded automatically from the tray in to the incubation station. An optical reading station is provided for reading the cards during incubation of the cards in the incubation station. A test sample card transport station is provided for transporting the test sample card from the incubation station to the optical reading station where the optical reading station conducts optical analysis of the sample loaded into the test sample card.

In a preferred form of the invention, a diluting station is provided for selectively adding diluent to the receptacles or test tubes in the tray. A pipetting station is also provided for transferring fluid samples from one receptacle to another. The diluting and pipetting stations are preferably placed dose to each other, so as to permit simultaneous pipetting and diluting operations to be performed on the receptacles in the tray.

The sample cards and receptacles are loaded onto a cassette, and the cassette placed in the tray in the machine. A stand-alone information system is provided for associating fluid or test sample and test card information with the cassette. A machine-readable memory storage device is applied to the cassette. A machine-readable indicator is applied to the sample cards and is identified with each of the test sample cards. An information loading station reads the machine-readable indicators for a plurality of the sample cards when they are loaded in the cassette, and stores information regarding the test sample cards onto the machine-readable memory storage device. As the cassette is moved within the automated sample testing machine, it passes by an information retrieving station which retrieves information stored in the machine-readable memory storage device.

In a preferred embodiment, the information loading station has a memory, a human interface for transferring testing information input from a user of the system into the memory, a reader for the machine readable indicator, and a software program responsive to the human interface for associating in the memory testing information from the user with the machine-readable indicator applied to the test sample card.

Presently preferred embodiments of the invention are depicted in the drawings, wherein like reference numerals refer to like elements in the various views, and wherein:
Figure 1 is a perspective view of a preferred automatic biological sample testing machine in accordance with the invention. The card disposal station and machine cover panels are removed in order to more clearly show the other features of the machine.
Figure 1A is a block diagram of the all of the principal stations in the machine of Figure 1.
Figure 2 is a perspective view of the machine of Figure 1, with the diluting and pipetting stations removed to better illustrate the vacuum station of the machine, and with the stacking disposal station included to show its relationship to the sample card transport station and optical systems.
Figure 3 is an end view of the machine, partially in section, as seen from the right-hand side of the machine looking toward the center mount.
Figure 4 is a detailed perspective view of the vacuum chamber of the vacuum station of Figure 2 engaging the top surface of the boat, as it would be when the fluid samples are loaded into the cards.
Figure 5 is a detailed perspective view of the cut and seal station, showing the hot cutting wire cutting through the transfer tubes for the cards when the boat is advanced past the hot cutting wire, thereby sealing the interior of the cards.
Figure 6 is a detailed perspective view of the test sample positioning system of Figures 1 and 2.
Figure 7 is a detailed perspective view of the boat and cassette of Figures 1-3.
Figure 8 is a plan view of the cassette and boat of Figure 7 in an assembled condition.
Figure 9 is a side view of the cassette and boat of Figure 7.
Figure 10 is a sectional view of the cassette and boat of Figure 9 along the lines 10-10.
Figure 11 is a side view of the cassette and boat of Figure 7, as seen from the opposite side of Figure 9, showing the apertures in the cassette that receive touch memory buttons that store information as to the cards carried by the cassette.
Figure 12 is a bottom plan view of the boat of Figures 1 and 7-11.
Figure 13 is a plan view of the base pan of Figure 6.
Figure 14 is a more detailed perspective view of the diluting and pipetting stations of Figure 1.
Figure 15 is an elevational view of the diluting and pipetting stations of Figure 14.
Figure 16 is a side view of the diluting station of Figure 15.
Figure 17 is an exploded view of the solenoid and shot tube assembly of Figure 14;
Figure 18 is an isolated view of the diluting station of Figure 14, partially in section, showing the shot tube and thimble valve in greater detail.
Figure 19 is an isolated, sectional view of the thimble valve of Figure 18.
Figure 20 is an isolated, sectional view of the shot tube and thimble valve of Figure 18, showing the relationship of the plunger relative to the thimble valve when the valve is in a closed condition relative to the fluid intake port;
Figure 21 is an isolated, sectional view of the shot tube and thimble valve of Figure 18, showing the relationship of the plunger relative to the thimble valve when the valve is in an open condition relative to the fluid intake port.
Figure 22 is an end view of the pipetting hopper system showing the movement of a horizontal slide between two positions, controlling the ability of pipettes to be removed from the housing via a slot in the housing.
Figure 23 is an exploded view of the pipette hopper system of Figure 22.
Figure 23A is a more detailed exploded view of the rotatable drum of Figure 23, showing the couplings that couple the motor 312 to the drum 340.
Figure 24 is a perspective view of the pipetting hopper system of Figure 1 when the pipette housing is rotated to a pipette fill position, with the cover swung open to permit the housing to be filled with pipettes.
Figure 25 is an elevational view of the pipetting station 300 with the tubular tapered transfer pin assembly rotated to fluid withdrawal position where the straw can be lowered into a receptacle.
Figure 26 is a side view of the tubular tapered transfer pin assembly as seen from the straw hopper 304 in Figure 25.
Figure 27 is a top plan view of the tubular tapered transfer pin assembly along the lines 27-27 of Figure 26.
Figure 28 is a detailed view, partially in section, of a portion of the pipette hopper system of Figure 25, showing the insertion of the tapered tubular transfer pin into a pipette to make a friction fit with the pipette, permitting the pipette to be removed from the pipette housing.
Figure 29 is a schematic diagram of the vacuum station of Figure 3.
Figure 30 is a graph of showing the change in vacuum inside the vacuum chamber of Figure 29 as a function of time during the loading of the cards.
Figure 31 is an elevational view of a preferred sample card transport system for the machine of Figures 1 and 2.
Figure 32 is a side view of the sample card transport station of Figure 31, looking in the direction of the carousel and incubation station of Figures 1 and 2.
Figure 33 is a sectional view of the carriage and slide assembly of Figures 31, which permits the drive subassembly to move relative to the bulkhead.
Figure 34 is a perspective view of a push mechanism that pushes the cards out of the slots in the carousel of FIG. 2 into the sample card transport system of Figure 31.
Figure 35 is a perspective view of the push mechanism as seen from the rear of the bulkhead.
Figure 36 is an elevational view of the movement of the card out of the sample card transport station into the stacking disposal station.
Figure 37 is a perspective view of the fluorescence optical substation of the optical reading system of Figures 1 and 2, with the reflector assembly in an open position to better illustrate the optical head.
Figure 38A is a plan view of the front of the reflector assembly of Figure 37.
Figure 38B is a plan view of the rear of the reflector assembly of Figure 37.
Figure 38C is a side view of the reflector assembly of Figure 37.
Figure 39 is an exploded view of the flash lamp cassette of Figure 37.
Figure 40 is a sectional view of the fluorescence optical substation of Figure 37.
Figure 40A is a graph of the reflectance as a function of wavelength for the UV cold mirror of Figure 40.
Figure 40B is a graph of the filter transmittance as a function of wavelength for the 365 nM bandpass filter of Figure 40.
Figure 41 is a cross section of the solid standard of Figure 40.
Figure 42 is a graph of the excitation and emission spectra of the solid standard of Figure 40.
Figure 43 is a front view of the optical head of Figure 37, showing the optical interrupt channel and the six channels for reading six wells of the card.
Figure 44 is a rear view of the optical head of Figure 37.
Figure 45A is a top view of the lens assembly holder of Figure 37.
Figure 45B is a rear view of the lens assembly holder.
Figure 45C is a side view of the lens assembly holder.
Figure 45D is an end view of the lens assembly holder.
Figure 46 is a schematic diagram showing the relationship of the flash lamp of Figure 39 and the optical channels of the optical head of Figure 40.
Figure 47A is a rear view of the optical interface block of Figure 37, showing the detector board mounted to the optical interface block.
Figure 47B is a front view of the optical interface block of Figure 47A, showing the placement of the bandpass filters in front of the optical channels.
Figure 48A is a front view of the detector board of Figure 40, showing the photodiode detectors that are placed behind the six channels of the optical interface block.
Figure 48B is a rear view of the detector board of Figure 48A.
Figure 49 is a block diagram of a preferred peak detector board for the fluorescence substation of Figure 37.
Figure 50 is a graph of the responsivity as a function of incident radiation wavelength of the photodiode detectors of Figure 48A.
Figure 51 is a graph of the filter transmittance as a function of wavelength for the 445 nM bandpass filter of Figure 40.
Figure 52 is a graph of the reflectance (and transmittance) as a function of wavelength for the beam splitter of Figure 40.
Figure 53 is a detailed elevational view of the transmittance substation of Figure 3.
Figure 54 is a perspective view of one of the three LED transmittance emission sources of Figure 53.
Figure 55 is a sectional view of the transmittance substation of Figure 53, showing the relationship between the LED transmittance light source, sample well, and photodiode detector.
Figure 56 is an elevational view of the sample well and LED output for the transmittance substation of Figure 55.
Figure 57 is an isolated, perspective view of the stacking disposal station of Figure 2.
Figure 58 is another perspective view of the stacking disposal station of Figure 57, with the latch and pressure plate removed in order to better illustrate the card slot and snap element 910A.
Figure 59 is a perspective view of the stacking disposal station of Figures 57 and 58, as seen from below, showing the pair of guide rails along which the pressure plate is slid.
Figure 60 is another perspective view of the stacking disposal system of Figure 57, as seen from below and the opposite side shown in Figure 57.
Rgure 61 is another perspective view of the stacking disposal system of Figure 60 as seen from below and behind the left or front support plate of Figure 57.
Figure 62 is a fragmentary, top plan view of the stacking disposal system of Figures 57-61, showing the insertion of a card into the card slot and the push plate pushing the card over the snap elements to join the other cards stacked in the region between the rear surface of the snap elements and the pressure plate.
Figure 63 is an elevational view of a preferred test sample card for use with the stacking disposal system and overall sample testing machine.
Figure 64 is an elevational view, partially in section, showing the loading of the cards into the card slot by the sample card transport system 700 of Figure 1.
Figure 65 is an isolated, perspective view of the front support of Figure 57.
Figure 66 is an isolated, perspective view of the bottom vertical support of Figure 61.
Figure 67 is an isolated, perspective view of the magazine of Figure 60.
Figure 68 is an isolated, perspective view of the horizontal support of Figure 60.
Figure 69 is an perspective view of the pressure plate of Figure 57.
Figure 70 is a side view, partially in section, of the pressure plate of Figure 69.
Figure 71 is an end view of the pressure plate of Figure 69.
Figure 72 is an isolated, perspective view of the push plate of Figure 57.
Figure 73 is a perspective view of the push slide from the push plate drive assembly of Figure 61.
Figure 74 is a front elevational view of the push slide of Figure 61.
Figure 75 is a side view of the push slide of Figure74.
Figure 76 is a perspective view of the push rack of the push plate drive assembly of Figure 61.
Figure 77 is a perspective view of a stand-alone data input station that loads information from bar codes placed across the top of the cards 28 onto a pair of touch memory buttons.
Figure 78 is a illustration of a portion of the center mount and base pan of Figure 1, showing the placement of touch memory button reading station along the side of the center mount. The two contacts of the reading station touching the two touch memory buttons on the side of the cassette as the boat and cassette are moved past the station.
Figure 79 is a side view of a portion of the cards and cassette as they pass by the card separation device and the bar codes on the cards are red by a bar code reading station.

### Overview of Preferred Automatic Sample Testing Machine

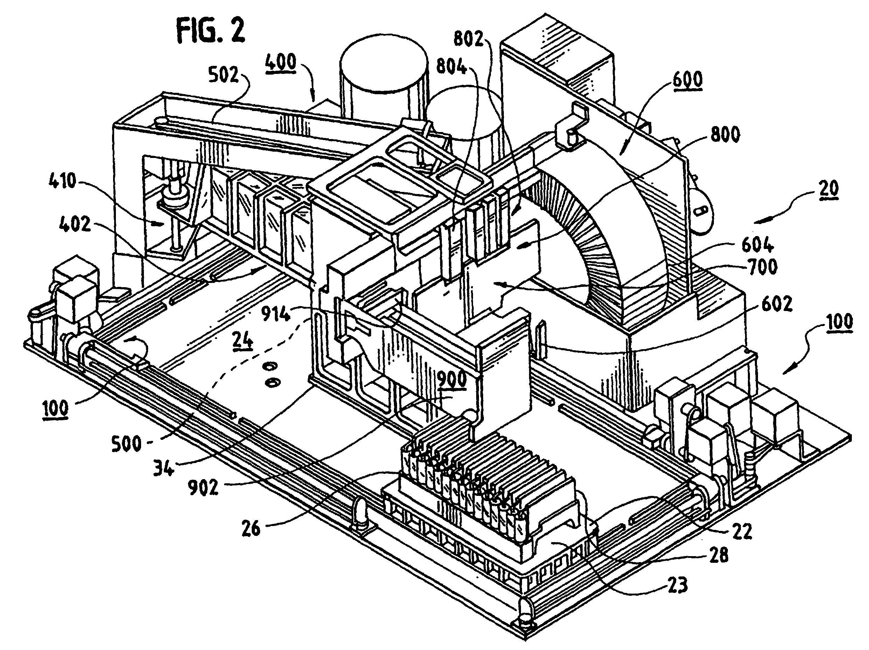

Figure 1 is a perspective view of a biological sample testing machine 20 that conducts analysis of test sample filled cards 28 according to a preferred embodiment of the invention. The machine has a set of removable cover panels covering the machine and presenting an aesthetically pleasing appearance and allowing user access to system components that are not shown in order to better illustrate the functional aspects of the machine. In Figure 1, a stacking card disposal station for the cards 28 has been removed in order to illustrate the other components of the machine. The card disposal station 900 is shown in Figure 2. Figure 3 is an end view of the machine, partially in section, showing the position of the test sample cards 28 as they are processed in several of the stations in the machine 20. Figure 1A is a block diagram of the machine 20 as a whole, showing the layout of the stations and the path of a boat and cassette assembly and test sample cards through the machine in a preferred embodiment of the invention.

Referring now primarily to Figures 1,1A and 3, the biological sample testing machine 20 includes a biological test sample positioning system 100, consisting of four independent motor-driven paddles, which pulls a sample tray 22 (referred to herein as a "boat") incorporating a cassette 26 across a base pan 24 around the machine 20 to several discrete stations, where various operations are performed on the cards and receptacles in the cassette 26. Prior to the start of the procedure, a technician loads a cassette 26 with a plurality of test cards 28 and receptacles such as test tubes 30 containing biological or control samples to be tested. Each test card 28 has an L-shaped transfer tube 32 protruding therefrom for permitting the fluids containing biological samples to be drawn from the test tubes 30 into the reagent-filled wells of the test cards 28. The technician places the loaded cassette 26 into the boat 22 at a loading station for the machine, such as the front, right hand comer of the base pan 24 shown in Figure 1. The combined boat 22 and loaded cassette 26 are then moved as a unit over the surface of the base pan 24 about the machine 20 by the test sample positioning system 100.

In a typical microbiological testing scenario, described below for purposes of illustration but not limitation, the test cards 28 come in two varieties: (1) identification cards, in which particular different growth media are placed in each of the wells of the card 28 when the cards are manufactured, and (2) susceptibility cards, in which different concentrations of different antibiotics are also placed in each of the wells of the card 28. The identification cards are used to identify the particular unknown biological agent, i.e., microorganism, present in the sample. The susceptibility cards are used to determine the susceptibility of the biological agent to various concentrations of antibiotics or other drugs. In the test procedure described below, identification and susceptibility tests can be performed on a single sample in one cycle of operation of the machine 20 (i.e., one test run). To accomplish this, the cassette 26 is loaded such that a test tube 30A containing a biological sample, connected via a transfer tube 32 to an identification card 28A, is placed adjacent to an empty test tube 30B connected via a transfer tube 32 to a susceptibility card 28B.

The cards 28 preferably contain bar codes as well as other identifying indicia on the card for reading by a bar code reader built into the machine 20. The bar codes are unique to each card, and identify card information such as card type, expiration date, and serial number, and are used to correlate test data and/or results from the cards with the patient and the biological sample. In addition, the entire boat or cassette may have sample information for all of the cards loaded in the cassette stored on one or more memory devices affixed to the cassette 26, such as a memory button or "touch button" available from Dallas Semiconductor Corp., 4401 S. Beltwood Parkway, Dallas Texas.

In the representative example shown in Figure 1, seven or eight of the test tubes 30 in the boat 22 contain biological samples, and are in fluid communication with identification cards 28A by the straw-like transfer tube 32. The biological sample test tube 30A and its associated identification card 28A can be thought of as a set. The biological sample test tubes and identification cards are typically arranged in an alternating pattern in the cassette 26. Each biological sample test tube 30A and identification card 28A set is adjacent to an empty test tube 30B placed in communication with a susceptibility card 28B via a transfer tube 32. It will be appreciated that the cards and associated test tubes could be ordered in any order in the cassette 26 depending on the particular testing requirements for the samples. For example, the cards could be arranged as follows: identification (ID), susceptibility (SU), ID, ID, ID, SU, SU, ID, SU .... Further examples would be all identification cards and all susceptibility cards.

The test sample positioning system 100 operates to move the boat 22 and cassette 26 over the base pan 24 first to a diluting station 200. The diluting station contains a rotating shot tube 202, by which a predetermined volume of diluent (such as saline solution) is added to the empty susceptibility test tubes in the cassette 26, e.g. test tube 30B. Other types of fluids may be added to the test tubes by a rotating shot tube, such as reagents, thus diluting station 200 is not limited to just adding a diluent to the test tubes. As the leading edge of the boat 22 is moved to the left during this process, it passes under a pipetting station 300. The pipetting station 300 includes a mechanism that automatically removes a pipette 302 from a source of pipettes 304, lowers the pipette 302 into the biological sample test tube 30A, and removes with vacuum a predetermined volume of biological fluid from the biological sample test tube 30A using the pipette 302.

The test sample positioning system 100 then moves the boat 22 to the left by an amount equal to the separation distance between adjacent test tubes 30A and 30B, e.g. 15 mm. The pipetting station 300 then lowers the pipette 302 containing the biological fluid from the biological sample test tube 30A into the adjacent susceptibility test tube 30B (having already received a quantity of diluent from the diluting station 200), expels the fluid into the test tube 30B, and drops the pipette 302 into the susceptibility test tube 308. The process of movement of the boat 22 by the test sample positioning system 100, adding diluent to the susceptibility test tubes 30B at the diluting station 200, and transferring of biological samples from the biological sample test tubes 30A to the adjacent susceptibility test tubes 30B at the pipetting station 300, continues until all of the identification andlor susceptibility test tubes sets (if any) in the boat 22 have been so processed. By virtue of the close spacing of the pipetting station 300 and the diluting station 200, simultaneous diluting and pipetting operations can be performed on multiple test tubes in a single boat 22. After the last pipetting operation has been performed, the test sample positioning system 100 then moves the boat 22 all the way to the left-hand edge of the base pan 24.

It will be understood by persons skilled in the art that the cassette 26 may be loaded entirely with biological samples in the test tubes 30 and identification cards 28, such as the case where a batch of biological samples are to be tested to identify the contents of the samples. In this example, the diluting and pipetting operations are not necessary. However, in other types of sample testing, other diluents or reagents or fluids may be added to or withdrawn from the test tubes. In the example of where no diluting or pipetting operations are performed (e.g., where the pipetting and diluting operations were performed off-line), the cassette 26 is loaded with test tubes and cards, and the positioning system 100 would simply move the boat 22 and loaded cassette 26 directly past the diluting station 200 and the pipetting station 300 without stopping, all the way to the left hand edge of the base pan 24.

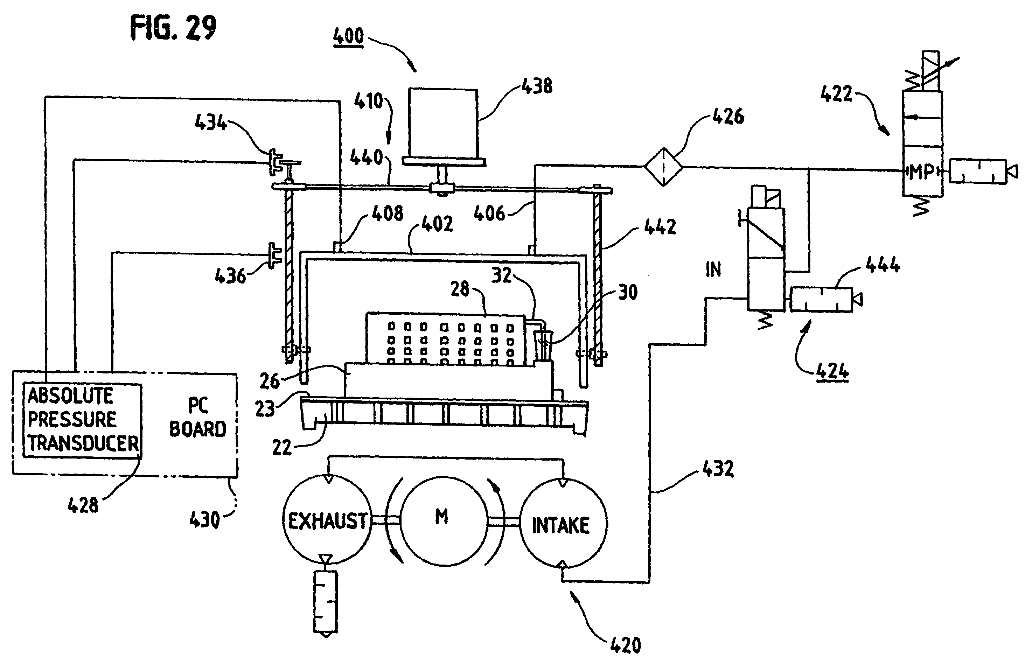

Once at the left hand edge of the base pan 24, the test sample positioning system 100 operates to move the boat 22 along the left hand edge to a vacuum station 400. The vacuum station 400 is seen better in Figure 2, which is a perspective view of the machine 20 with the diluting station 200 and the pipetting station 300 removed, and in Figures 4, and 29. At the vacuum station 400, a vacuum chamber 402 is lowered onto the boat 22 such that the bottom surface of the vacuum chamber 402 sealingly engages the top peripheral surface 23 of the boat 22. The vacuum chamber has hoses 406, 408 (Figure 4) that are in communication with a conventional vacuum source for the machine (not shown in Figure 4). Vacuum is applied to the chamber 402 under microprocessor control, causing air in the interior of the test sample cards 28 to evacuate out of their associated test tubes and to be withdrawn from the chamber 402. The vacuum cycle is precisely managed to optimize filling by using a dosed loop servo system to regulate the rate of change of vacuum and the timing of the complete vacuum cycle. After a predetermined period, the chamber 402 is vented to atmosphere under microprocessor control. The venting of the cards causes the fluid in the test tubes 30 to be drawn into the cards 28, filling the wells in the cards 28. After the chamber 402 is vented, the chamber is raised up by a vacuum chamber drive mechanism 410 so as to permit the boat to be moved to the other stations of the machine 20.

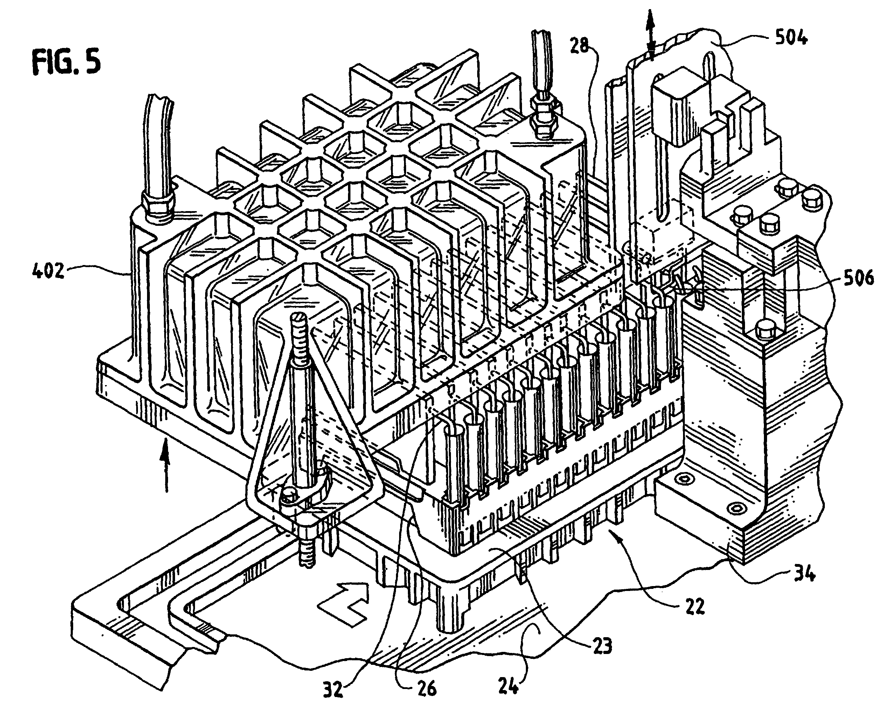

The test sample positioning system 100 then operates to advance the boat 22 to the right across the rear of the base pan 24 to a cut and seal station 500, located behind the center mount 34 in Figures 1 and 2. Referring to Figures 4 and 5, the cut and seal station 500 consists of a hot cutting wire 506 and attached support plate 504, and a drive mechanism 502 (e.g., stepper motor, drive belt and lead screw) that lowers the cutting wire and support plate 504 to the same elevation as the top portion of the transfer tubes 32 adjacent to where the transfer tubes 32 enter the test cards 28. As the boat 22 is advanced past the cut and seal station 500, the transfer tubes 32 are forced past the hot cutting wire 506. By virtue of the assistance of fore and aft constraints placed on the movement of the cards 28 by the walls of the cassette 26, and the lateral constraints on the movement of the card 28 by the cassette and wall structures of the machine 20, the hot cutting wire cuts the transfer tubes 32 by melting of the transfer tube material as the boat 22 is slowly advanced past the hot cutting wire 506. A small stub of transfer tube material is left on the exterior of the card 28. The stub seals the interior of the card 28 from the atmosphere (except, in certain types of cards, for possible diffusion of gasses such as oxygen through oxygen permeable tape covering the sample wells). When the boat is advanced past the station 500, the wire 506 is raised up to its upper position.

Referring to Figures 1 and 3, the test sample positioning system 100 then advances the boat 22 across the rear of the base pan 24 behind the center mount 34 to a carousel incubation station 600. A reciprocating rack and pinion driver 610 is mounted to the center mount 34 opposite a slot 602 in the machine that pushes the cards off the cassette 26 one at a time through the slot 602 into a carousel 604. The carousel 604 is housed in an enclosure that is maintained at an appropriate incubation temperature. The enclosure is partially broken away in Figures 1 and 2 in order to show the carousel 604. The carousel 604 is rotated by a drive system 612 in synchronism with the movement of the boat 22 over the rear of the base pan 24 by the test sample positioning system 100, so as to place the next slot in the carousel 604 in line with the slot 602 opposite the next card in the cassette 26. If the carousel is only going to be partially loaded with cards, the operating system of the machine may control the carousel 604 rotation to load the cards into non-adjacent slots to equally distribute the cards in the carousel in order to balance out the weight distribution in the carousel 604. For example, where the carousel has 60 slots and only 30 cards are to be processed, the cards could be loaded into every other slot.

Additional incubation capacity required for processing a larger number of cards at one time can be provided by adding an additional incubation station(s) to the rear of the basepan, and adjusting the dimension of the base pan and drive system components as necessary. Additional optics stations may be provided for additional carousels. For example, if the carousel 604 has sixty slots and each cassette holds 15 cards, four boats can be processed at once. If a second carousel is added, up to 120 cards could be processed at once. Of course, different capacities could be provided for the cassette 26 and the carousel 604.

After all of the cards 28 have been loaded into the slots of the carousel 604, the boat 22 is advanced along the right hand edge of the base pan 24 back to its starting position (shown in Figures 1 and 2) or to an exit position for removal of the cassette 26 (containing the test tubes, pipettes 302, if any, and transfer tubes remnants) and receipt of a new cassette. Alternatively, the boat 22 could be moved to an exit station located, for example, in the rear or right hand side of the base pan 24.

As the cards 28 are being incubated in the incubation station 600, the cards are periodically, sequentially pushed out of the slots of the carousel 604 at the top of the carousel 604, one at a time, by a reciprocating rack and pinion driver 620 and an associated stepper motor. The cards 28 are moved by an optical scanner card transport station 700 past a fluorescence and transmittance optics station 800 having a transmittance substation 802 and a fluorescence substation 804. The wells of the card 28 are selectively subject to sets of transmittance and/or fluorescence optical testing according to the analysis needed to be performed by the transmittance and fluorescence optics station 800. The transmittance and fluorescence optics station 800 includes detectors and processing circuitry to generate transmittance and fluorescence data for the wells in the cards 28, and to report the data to a central processing unit for the machine 20. If the test is not complete, the transport station 700 moves the card 28 back into its slot in the carousel 604 for more incubation and additional reading.

Typically, each card will be read every 15 minutes as the carousel makes one revolution. Typical incubation times for the cards 28 are on the order of two to eighteen hours, consisting of roughly four transmittance and/or fluorescence data sets per hour, each data set consisting of multiple readings, for each of the wells in the card 28 subject to the optical analysis requirements.

After the testing is complete, the cards are moved by the optical scanner transport system 700 into a card output station 900 shown in Figure 2 and Figure 3. The card output station 900 consists of a detachable tray or magazine 902 and associated support structure that is positioned to the side of the optical station 800 at approximately the same elevation as the optical station 800. The station 900 has a pressure slide 914 that is moveable within the magazine 902 and a constant force spring biasing the pressure slide towards the front of the magazine. The cards are stacked in the magazine between the pressure slide 914 and oppositely opposed resilient snap elements integrally formed in the sides of the magazine 902. The technician removes the magazine 902 from the machine 20 as needed or when the magazine is full of cards, empties the cards into a suitable biohazard disposal unit, and replaces the magazine 902 back into the machine 20.

An automated microbiological testing system or machine 20 for testing fluids containing microbiological samples contained in open receptacles 30 is thus described. The system 20 is for use in conjunction with test sample cards 28 having a plurality of sample wells, the test sample cards comprising susceptibility cards and identification cards. The system comprises a base pan, a tray 22 for carrying the receptacles 30 and test cards across the base pan 24, a diluting station 200 for adding a predetermined volume of fluid to at least one of said receptacles 30, and a pipetting station 300 for transferring test samples from one of the receptacles in the tray 22 to another of the receptacles 30B in the tray 22. A vacuum station 400, 402 is provided which is moveable with respect to the tray 22 and cooperating with the peripheral edge of the tray 23 to form a vacuum enclosure around the receptacles 30 and cards 28. The vacuum station further comprises a vacuum source for loading the fluid samples into the wells of the cards 28. A sealing station 500 is provided for sealing the cards after loading of the cards 28. An incubation station 600 is provided for incubating the cards 28, and a reading system 802, 804 is provided for conducting optical analysis of the wells in the cards 28. A positioning system 100 moves the tray 22 over the base pan 24 from the vacuum station 400 to the incubation station 600 and has a driver 610 loading the cards from the tray 22 into the incubation station 600. A drive system 700 is proved for moving the cards from the incubation station 700 to the reading station 802, 804. Thus, the entire process for processing the cards and conducting optical analysis of the cards is automated.

The automated sample testing machine 20 thus performs a method for conducting identification and susceptibility testing of a biological agent in a fluid sample, the fluid sample containing the biological agent is placed in a first open receptacle or test tube 30A. The method comprises the steps of:
placing the first receptacle 30A in a sample holder or cassette 26 with the fluid sample placed in fluid communication via the L-shaped transfer tube with an identification test sample card 28A received by said sample holder 26;
placing a second open receptacle 30B in the sample holder 26, the second open receptacle 30B in fluid communication with a susceptibility test sample card 28B received by the sample holder 26;
placing the sample holder 26 with the first and second receptacles 30A, 30B and identification and susceptibility test sample cards 28A and 28B into the automated sample testing machine 20;
thereafter, within said machine,
adding a predetermined volume of diluent to the second receptacle 30B (via the diluting station 200);
transferring a portion of the fluid sample from the first receptacle 30A to the second receptacle 30B (via the pipetting station 300);
loading the identification and susceptibility cards with fluids from the first and second receptacles 30A, 30B, respectively at the vacuum station 400; and subsequently
conducting optical analysis at stations 802 and/or 804 of the identification and susceptibility cards 30A and 30B.

It is of significant advantage in the above method that the steps of adding a predetermined volume of a diluent to the receptacle 30B, transferring a portion of the fluid from receptacle 30A to receptacle 30B, vacuum loading and conducting optical analysis of the identification and susceptibility cards are performed automatically within the automated sample testing machine 30 without any human intervention.

### Boat 22 and Cassette 24 Operational Features

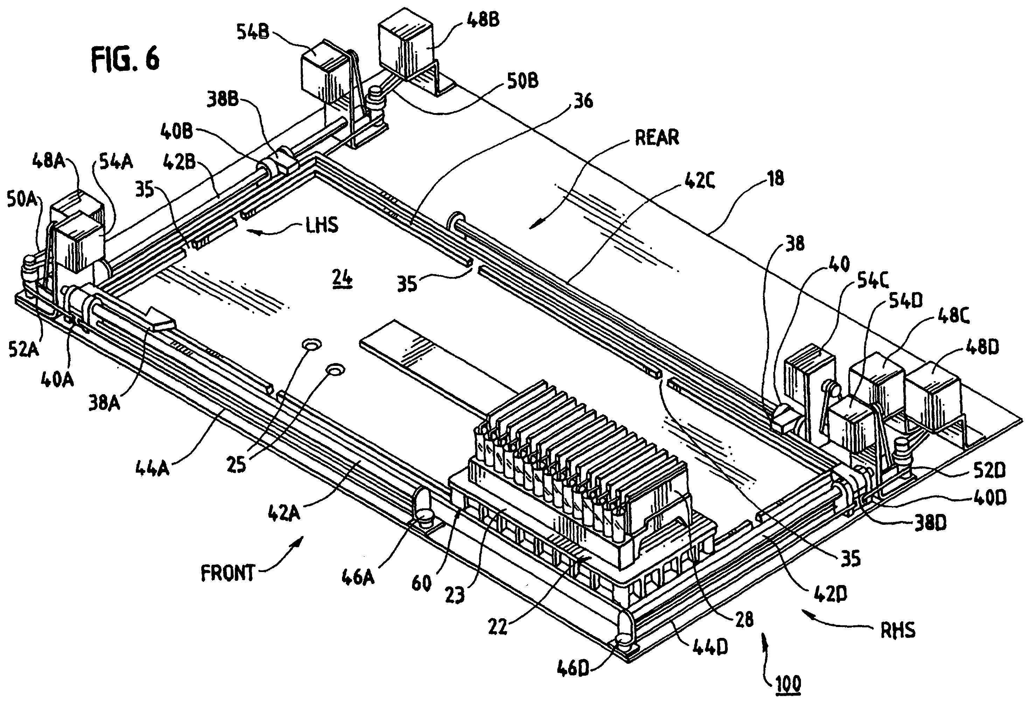

In the preferred embodiment of the invention, the boat 22 is not rotated during its cycle of movement around the machine, and hence the general orientation of the boat 22 is unchanged. Since the boat is moved along four sides of a rectangle in the preferred embodiment, the boat 22 is preferably given a rectangular shape with four sides, each side having a complimentary surface for engaging one of the four paddles 38A-D in the drive system 100 (see Figure 6).

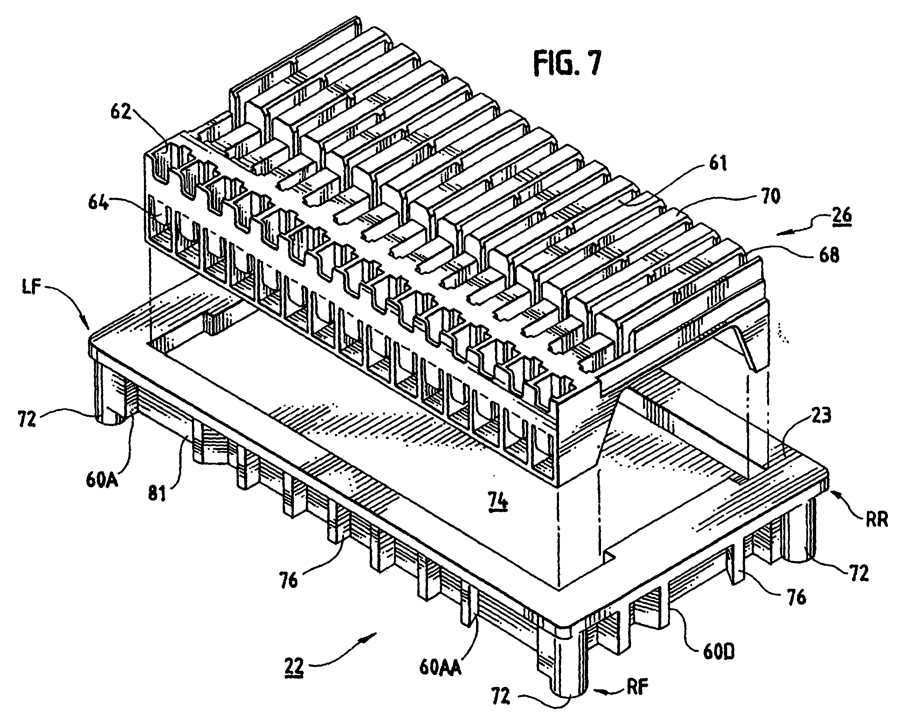

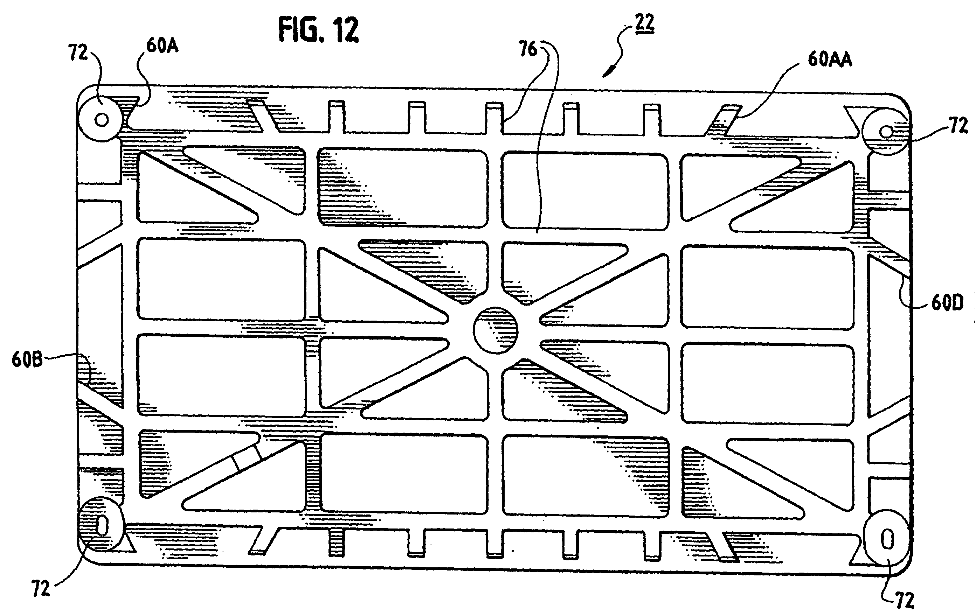

The boat 22 and cassette 26 are shown in several views in Figures 7-12. The boat and cassette are separate units in the preferred embodiment, with the boat 22 typically remaining in the machine 20 after processing of the cards in the cassette 26 (except for removal for cleaning). The cassette 26 is loaded with cards 28 and test tubes 30 off line, and, following data entry functions described later, the loaded cassette is placed in the boat 22 in the machine 20 by a technician at the start of the entire processing procedure. In an alternative embodiment, the boat and cassette could be an integral unitary sample holder that is removed from the machine 20 for loading with cards and test tubes, and placed into the loading station of the machine for subsequent processing.

Referring to Figures 7-12, the boat 22 has a paddle engaging surface 60A which is slanted at an angle relative to the side wall 81 of the boat 22. This planar surface 60A is engaged with a complimentary planar angled surface of the head of the paddle 38A as the paddle slides the boat over the front side of the base pan 24. A second angled engaging surface 60AA is provided, which allows the paddle 38A (Figure 6) to engage a second surface on the boat 22. This second engaging surface 60AA reduces the collar travel on the shaft 42A needed to move the boat 22 to the extreme front left comer of the base pan 24. The paddle 38A may be rotated out of engagement with surface 60A, moved down the shaft 42A to a position adjacent to surface 60AA, and rotated back into engagement with surface 60AA.

The right hand side of the boat 22 has a surface 60D that is engaged by the paddle 38D when the paddle 38D moves the boat along the right hand side of the base pan 24. Similar engaging surfaces are provided on the rear and left hand sides of the boat 22.

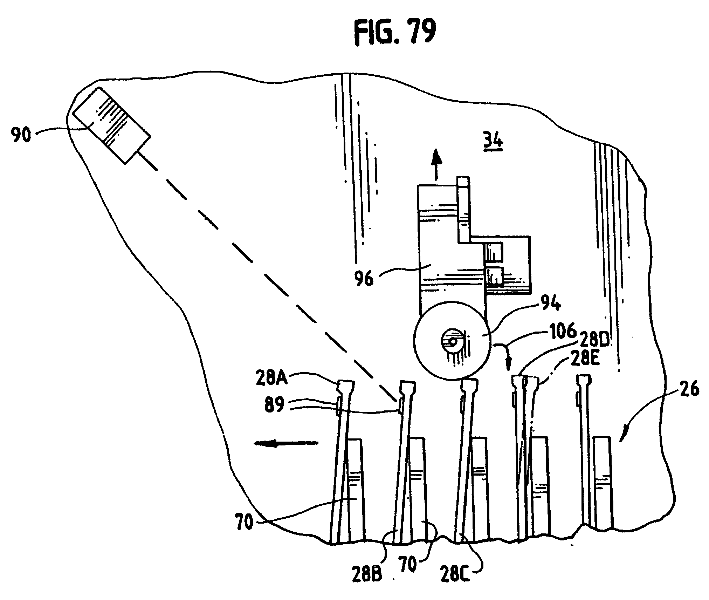

The cassette 26 has a plurality of slots 61 for sample cards 28 (Figure 1), each of which is adjacent to a test tube holding slot 62 securely retaining a test tube. A tang 64 or other suitable resilient member extends inwardly in the test tube holding slot 62 and prevents the test tubes from moving in the slot 62. The card slots 61 are separated from each other by a wall 70. The slots 61 are given a dimension so as to permit a slight amount of fore and aft movement of the sample cards between adjacent walls 70. The walls 70 extend only about a third of the way up the cards 28, permitting fore and aft rocking motion of the cards by the separation device 94 (see Figures 3, 79), allowing a bar code reader to read bar codes placed at the top of the cards.

The cards 28 rest on the floor 66 of the slots 61. An open side 68 in the slots permits the cards to be slid out of the cassette 26 into the incubation station 600 (Figure 1).

Referring to Figure 7, the boat 22 has a flat floor 74 which contains any spills from the test tubes. The floor 74 is given a shape so as to snugly receive the cassette 26 when the cassette 26 is loaded into the boat 22.

The boat 22 has a substantially flat top planar surface 23 that is supported by a plurality of reinforcing ribs 76 along the sides and bottom of the boat 22. The surface 23 sealingly engages the bottom surface of the vacuum chamber 402 (Figure 2). The ribs 76 help the boat 22 bear the compressive forces placed on the peripheral sealing surface 23 of the boat 22 by the chamber 402.

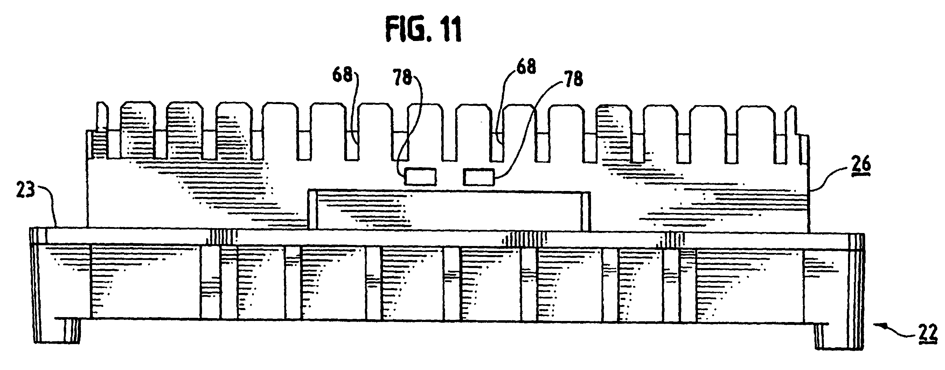

Referring to Figure 11, a pair of apertures 78 are provided in the rear of the cassette 26 which receive touch memory storage buttons (not shown). The touch buttons identify the contents of the cards 28 loaded into the cassette 26. This information is then read by touch button readers 85 mounted to the center mount 34 of the machine 20 (see Figure 3). Preferably, a stand-alone cassette identification station is provided for the machine 20. The station has a computer terminal and touch button contacts. The contacts load information as to the cards for the cassette into two touch buttons placed in the touch button apertures 78.

### Test Sample Positioning System Operational Features

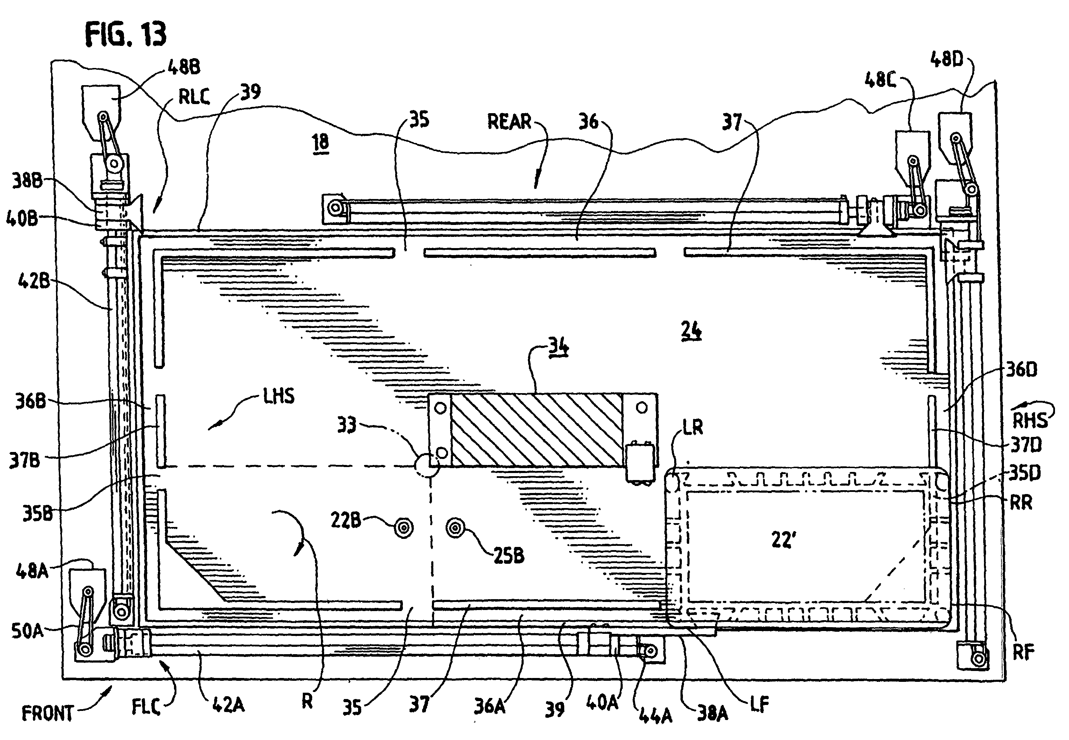

Referring now in particular to Figures 6 and 13, the test sample positioning system 100 will be described in detail. The system 100 is shown in a perspective view in Figure 6 with all of the stations mounted to the center mount 34 and the incubation station 600 removed in order to more clearly illustrate the components of the positioning system 100.

The system 100 has a base pan 24 mounted to a table support structure 18, across which the boat 22 is pulled from station to station in the machine 22. The base pan 24 in the preferred embodiment is of rectangular shape having four sides at right angles to each other a front side, a left hand side (LHS), a rear side, and a right hand side (RHS). The four sides allow the boat 22 to be moved clockwise in a loop about the machine back to its starting position at a loading station (shown in Figures 1-2) after all of the operations on the sample card 28 have been completed. However, the inventive principles of the test sample positioning system are applicable to other geometries for a base pan 24. Additionally, the paddles and motors are capable of moving the boat 22 in a counter-clockwise direction.

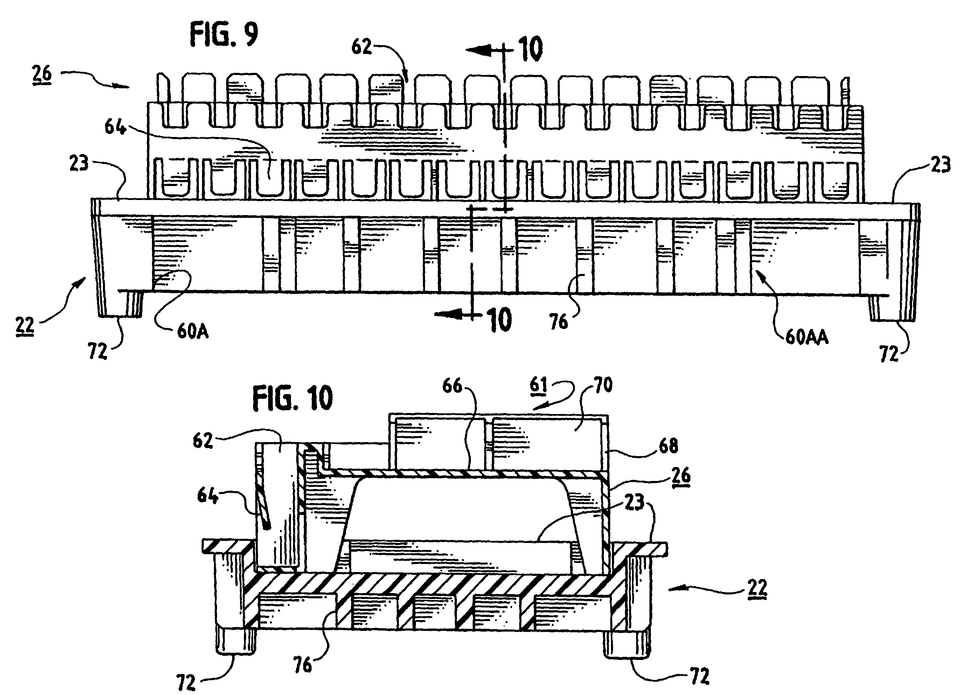

The boat 22 has four downwardly depending feet 72 (Figures 9 and 10) at its four comers which fit in a pattern of track sections comprising grooves 36 formed between a set of raised ridges 37 and a raised rim 39 extending around the perimeter of the base pan 24. The grooves 36 help prevent any rotation of the boat 22 as the boat 22 is pulled over the base pan 24.

When the boat 22 is initially located at the loading station, as shown in Figure 13, the left front LF and right front RF feet of the boat 22 are positioned in groove 36A, the right rear (RR) foot 72 is in groove 36D, with the RF foot at the intersection of grooves 36A and 36D. A plurality of slots 35 are provided in the raised ridges 37 so as to permit the feet of the boat 22 to move through the ridges 36 as the boat 22 is moved about the base pan 24. For example, slot 35D permits the right rear RR foot to move past raised ridge 37D, and slot 35B permits the left rear LR foot to move past the ridge 37B into the groove 36B. The center mount 34 has a comer 33 that is preferably given a sharp contour, as shown, so as to prevent the boat from undergoing rotation as it is slid along the left hand side of the base pan.

In order to move the boat 22 clockwise about the base pan, four independent drive systems are provided for moving the boat 22. Each drive system moves the boat 22 in one direction along one of the four sides of the base pan 24. Referring now in particular to Figure 6, a first drive system is provided for moving the boat 22 along the front edge of the base pan 24, and consists of a rotatable shaft 42A having a square cross section, a collar 40A slideably mounted on the shaft 42A, a drive belt 44A mounted to the collar for sliding the collar 40A along the shaft 42A, a stepper drive motor 48A driving a belt 50A, a pulley 52A for moving the drive belt 44A back and forth along the front edge of the base pan, and a second pulley 46A for the drive belt 44A. A paddle 38A is mounted to the collar 40A, and is provided for engaging one or more complimentary surfaces (e.g. surface 60A) on the side of the boat 22. When the drive motor 48A is operative to move the belt 44A such that the collar 40A is moved to the left along the shaft 42A, the paddle 38A pulls the boat 22 to the left across the base pan 24.

A shaft rotate motor 54A is also provided with an associated belt and pulley (not shown) for rotation of the shaft 42A by an angle of 90 degrees. When the shaft rotate motor 54A rotates the shaft 42A such that the head of the paddle 38A is in a horizontal position in the direction of the boat 22, the paddle 38A is in a position to engage a complimentary surface on the side of the boat 22 so as to pull the boat 22 as the paddle 38A and collar 40A are moved along the shaft 42A. When the boat has reached the end of its travel along the front edge of the base pan 24, the shaft rotate motor 54 rotates the shaft 42A 90 degrees in a direction such that the paddle 38A is rotated upwards and away from the side of the boat 22, thereby disengaging the paddle 38A from the boat 22.

Each of the other three drive systems in the sample positioning system 100 is functionally equivalent to the drive system described above for the front edge of the base pan 24, and each is composed of like components. For example, the left hand side LHS drive system has a shaft 42B, collar 40B with attached paddle 388, drive belt motor 488, shaft rotation motor 54B etc. Like components for the rear edge of the base pan include a rotatable shaft 42C, belt drive motor 48C, etc. Similarly, right hand side (RHS) drive system has a rotatable shaft 42D, collar 40D and attached paddle 38D, etc.

### Dilution Station Operational Features

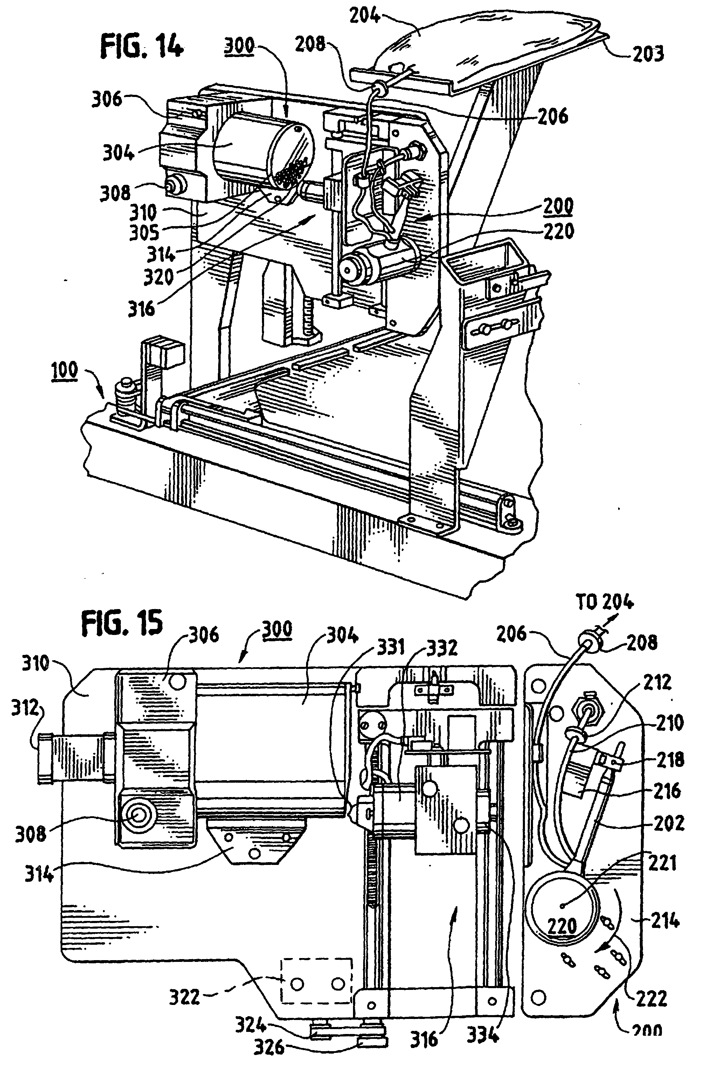

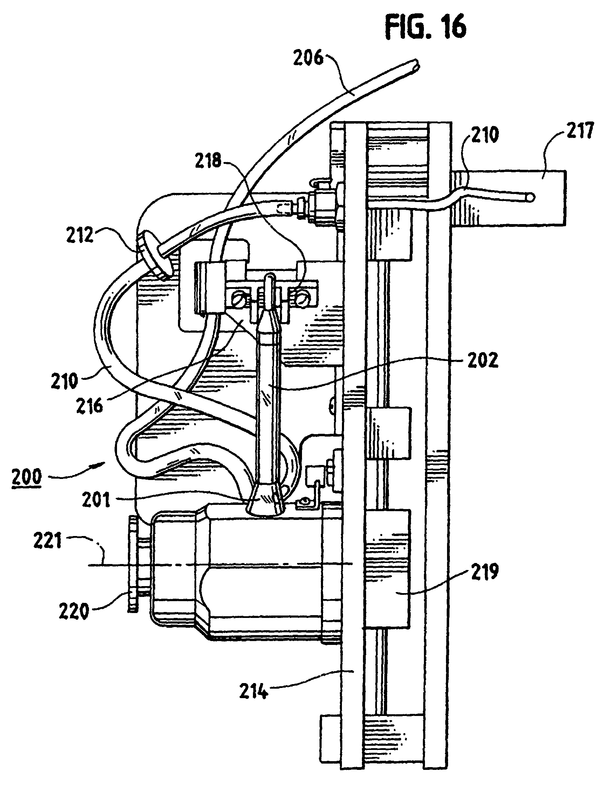

The diluting station 200 of Figure 1 is shown in more detail in Figures 14-16. Figure 14 is a perspective view of the diluting and pipetting stations 200 and 300, respectively. Figure 15 is an elevational view of the stations, and Figure 16 is a side elevational view of the diluting station 200.

Referring to Figures 14-16, the diluting station 200 can be thought of as a system for dispensing a controlled volume of fluid into a receptacle such as a test tube. The station 200 has a source of diluent fluid 204, such as a flexible bag of saline solution, that rests on a suitable inclined shelf 203. A rotating shot tube 202 having a predetermined volume receives the fluid from the source 204 via a conduit or tube 206. A filter 208 is placed in the conduit 206, and serves to prevent contaminants from entering the line 206.

A solenoid 220 is provided for controlling the opening of a thimble valve placed within the open end 201 of the shot tube 202. The thimble valve controls the flow of the fluid from the conduit 206 into the shot tube 202. Since the source of fluids 204 is placed above the shot tube 202, the fluid fills the shot tube 202 by gravity flow. The shot tube 202 is mounted to the solenoid 220 housing. The solenoid 220 and attached shot tube rotates relative to the bulkhead 214 by means of a motor 219 (Figure 16) having a drive belt and pulley (not shown). The motor 219 is placed directly behind the solenoid 202 on the back side of the bulkhead 214.

When the shot tube 202 is rotated to a generally upward orientation (i.e., the tip of the shot tube is elevated with respect to the end 201 of the shot tube), such as that shown in Figures 14-16, the shot tube can be filled with fluid such that the shot tube is automatically primed as it is filled. The upward orientation of the shot tube 202 permits air within the shot tube to be eliminated from the shot tube 202 as the fluid enters the end 201 of the shot tube and works its way up to the tip of the shot tube 202. An optical sensor 218 mounted to a bracket 216 is provided for detecting when the diluent fills the shot tube up to the fill zone adjacent to the tip of the shot tube 202.

When the shot tube is filled, the motor 219 behind the bulkhead 214 rotates the solenoid 220 and shot tube 202 in the direction of the arrow 222 (Figure 15) to a second position, wherein the tip portion of the shot tube 202 is oriented downward towards a test tube in the boat 22 (Figure 1). A second conduit 210 is provided which is in communication with a source of compressed air 217 mounted behind the bulkhead 214. A filter 212 is provided in the conduit 210, and prevents contaminants from entering the line 210. The conduit 210 is fitted over an exhaust tube in the shot tube 202 in the vicinity of the thimble valve. When the shot tube 202 is in the second downward position, compressed air is injected into the shot tube in a stream to exhaust the diluent from the shot tube 202 into the test tube 308 (Figure 1).

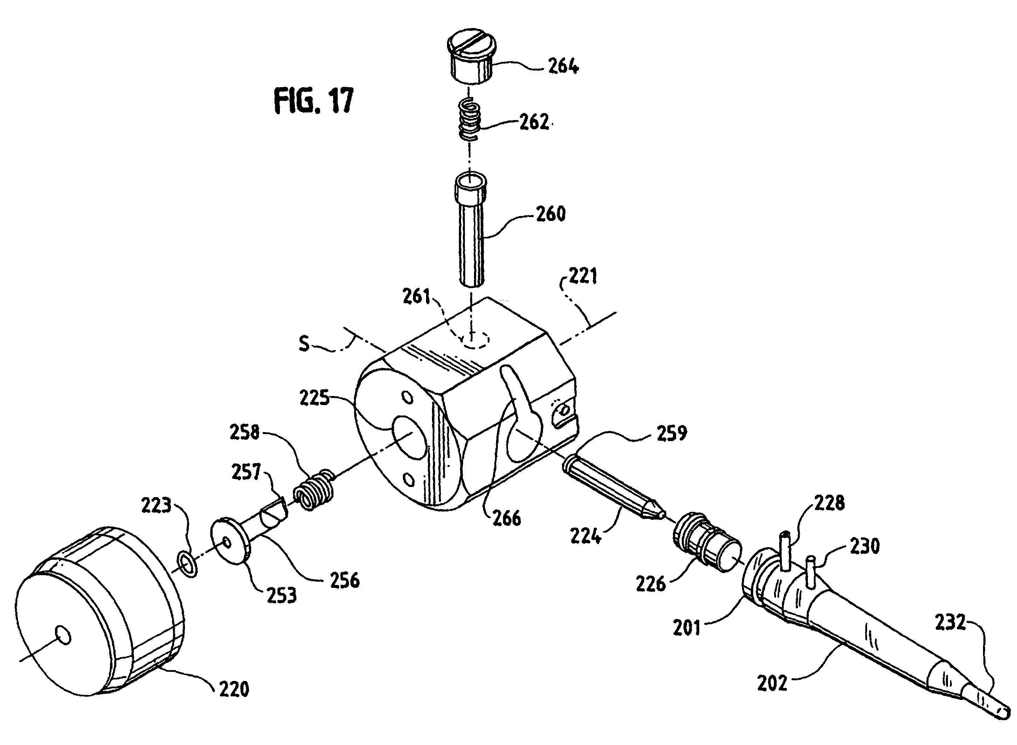

Referring now to Figure 17, the solenoid 220 and shot tube 202 are shown in an exploded view. The solenoid 220, when energized, actuates a cam slide 256 placed within the aperture 225 along the solenoid axis 221. The solenoid 220 has a cam spring 258 that biases the cam slide 236 to a valve closed position, towards the left in Figure 17. A rubber O-ring 223 seats onto the head 253 of the cam slide 256. The cam slide 256 has a cam surface 258 which cooperates with a cam surface 259 on a plunger 224 so as to translate cam slide motion along axis 221 into orthogonal plunger 224 motion along the shot tube axis S. The plunger 224 is moved into and out of engagement with the thimble valve 226 as described below, and opens the valve 226 when the plunger is moved to an extended position by the cam slide 256. This arrangement permits the solenoid to be mounted at a right angle to the shot tube 202, decreasing the amount of space between the pipetting and diluting stations and enabling simultaneous pipetting and diluting operations to performed on different test tubes in the boat.

The solenoid assembly of Figure 17 further includes a shot tube opening 266 that receives the shot tube 202 and thimble valve 226 when the shot tube 202 is in an assembled condition. The shot tube 202 has an exhaust tube 230 connected to the exhaust conduit 210 and a fill tube 228 connected to the diluent conduit 206. A release pin 260, a spring 262 and a release pin cap 264 are provided to permit the user to engage and disengage the shot tube 202 and thimble valve from the rest of the assembly, such as when the user replaces the saline bag 204 and shot tube 202. The release pin 260 mounts to the top of the housing 221 through an aperture and recessed region 261 in the housing 221. When the release pin cap 264 is rotated, the spring 262 lifts the release pin 264 out of engagement with the end 201 of the shot tube 202, permitting the shot tube 202 to be removed from the housing 221.

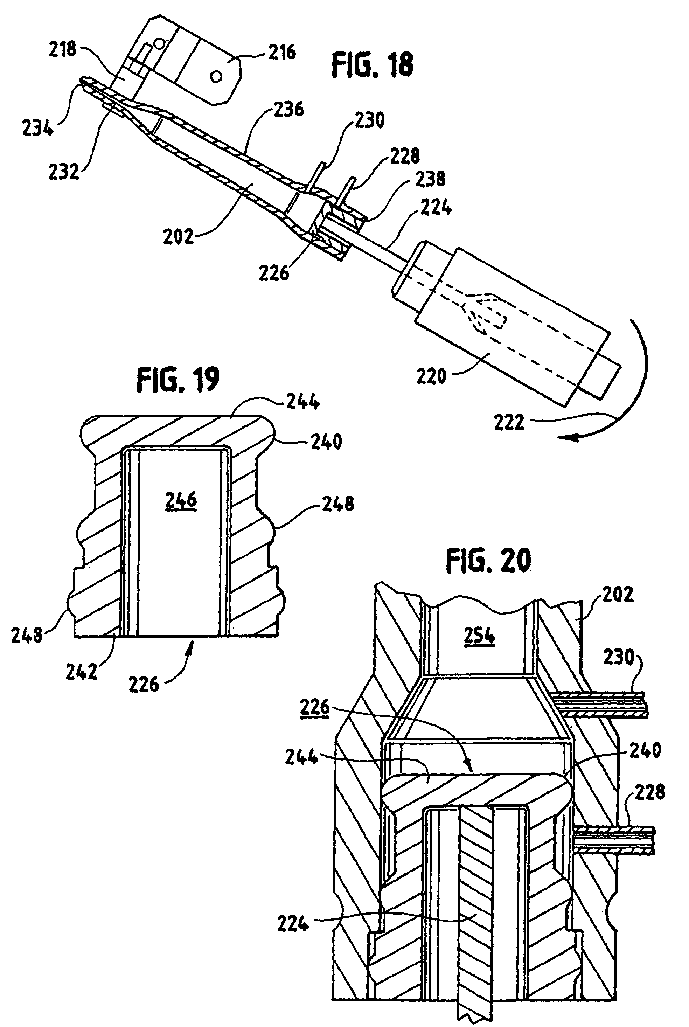

Referring now to Figure 18, the shot tube 202, solenoid 220 and optical sensor 218 are shown isolated from the machine 20, with the shot tube 202 and thimble valve 226 shown in section. The solenoid 220 includes a valve plunger 224 that is disposed within the interior of the thimble valve 226. Referring to Figure 19, the thimble valve 226 is shown isolated in a sectional view. The thimble valve 226 is a thimble-shaped member made of a resilient material such as silicone. The valve 226 has a wall portion 244 and a front sealing rib 240 that sealingly engages the interior of the shot tube in a compression fit to seal off the fill tube 228 connected to the source 204 of diluent. The thimble valve 226 has an annular body portion 242 that defines rear sealing ribs 248 that fit into complementary recessed regions in the interior of the shot tube 202 adjacent to the end 201 of the shot tube 202, and constrain the thimble valve 226 in the open end 201 of the shot tube 202. The body portion 242 defines a central chamber 246 for receiving the plunger 224.

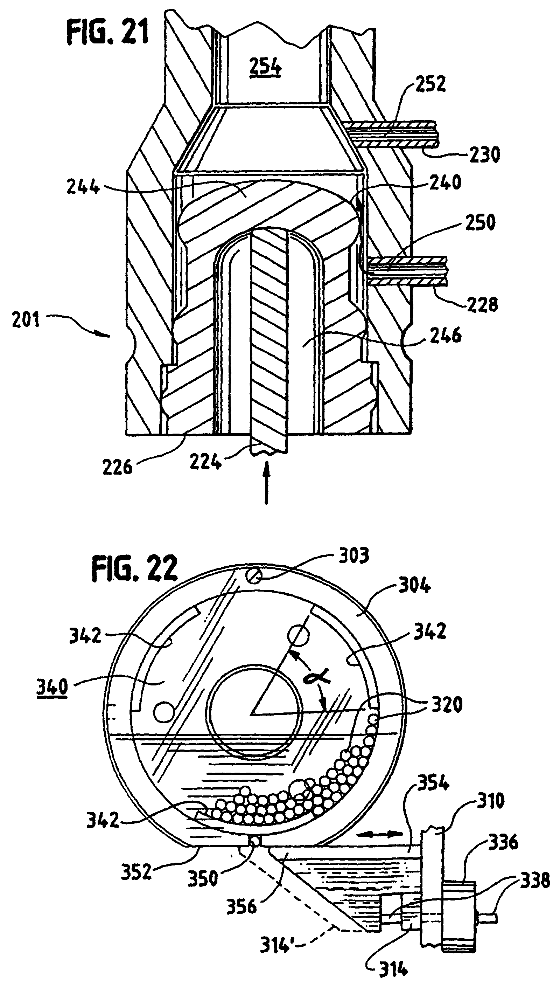

Figure 20 shows the position of the plunger 224, thimble valve 226, fill tube 228 and shot tube 202 when the thimble valve 226 is in a dosed condition. The front sealing rib 240 seals off the fill tube 228, preventing fluid from entering the interior region or chamber 254 of the shot tube 202. Figure 21 shows the position of the plunger 224 and thimble valve 226 when the plunger 224 is pushed by the solenoid 220 against the wall 244 to an extended position. The plunger 224 pushes against the wall 244 to extend and stretch the thimble valve 226 in a manner to cause the front sealing rib 240 to move away from the interior surface of the shot tube 202 towards the interior 254 of the shot tube 202, permitting fluid to flow from the fill tube port 250 around and past the rib 240 into the interior 254 of the shot tube 202.

Referring to Figures 18-21, when the tube 202 is filled with diluent up to the shot tube optical sensor zone 232, the plunger 224 retracts to the position shown in Figure 20, shutting off the flow of fluid. Preferably, the optical sensor fill zone 232 is given a tapered shape as shown so as to define a small volume for the diluent, permitting filling of the shot tube with precision. The tapered optical sensor fill zone 232 and resulting small volume allows only a very small volume of fluid to travel beyond the optical sensor 218 during the dosing of the thimble valve 336. The shot tube 202 is then rotated to a downward vertical position above the susceptibility test tube, whereupon compressed air is supplied via conduit 210 and exhaust tube 230 to an exhaust port 252 and into the interior of the shot tube 202. The stream of compressed air forces the fluid in the interior region out the tip 234 of the shot tube 202.

From Figures 20-21, it can be seen that in its relaxed, normal position, the thimble valve 226 is dosed. The retraction of the plunger 224 from the wall 244 of the thimble valve 226 to dose the valve helps prevent any pressure surges or "water hammer" effect to be generated in the filled shot tube 202, as would be the case if the thimble valve were to be designed to be pushed to an extended position to dose the port 250. If pressure surges were to cause diluent to eject out of the tip 234 of the shot tube 202, contamination of the shot tube could potentially result. Hence, a design of a thimble valve 226 that is retracted to dose the valve, preventing pressure surges, is a preferred design.

In a preferred form of the invention, the saline bag 204, conduit 206 and shot tube 202 are combined and installed in the machine 20 as a replaceable, disposable fluid delivery unit. When the saline bag 204 is empty, the user simply replaces the saline bag 204, shot tube 202 (including thimble valve 226) and conduit 206 as a single unit, avoiding any problems with contamination or disinfection of the shot tube 202. The conduit 210 may or may not be part of the fluid delivery unit, and, if not, it would fit over the exhaust tube 230 when the shot tube 202 and saline bag 204 are mounted in the machine 22.

Referring again to Figures 14-16, in a preferred embodiment the solenoid 220 is oriented relative to the shot tube 202 in a manner to save space and allow the shot tube 202 and solenoid 220 to be placed as dose as possible to the pipetting station 300. The axis of the shot tube is perpendicular to the axis of movement 221 of the solenoid (into the page in Figure 15). The cam slide 256 in the solenoid 220 translates motion in the direction of the axis 221 (Figure 16) into plunger motion in the direction of the thimble valve and shot tube 202 along the axis S of the shot tube 202. This is shown in Figure 17.

Thus, a system 200 for dispensing a controlled volume of fluid into a receptacle such as a test tube has been described, comprising a source of said fluid (such as a diluent stored in a flexible bag 204), a shot tube 202 comprising a tip portion 230, a hollow body, and a fluid entrance port, and a conduit 206 for conducting said fluid from said source 204 to the fluid port of the shot tube 202. A motor 219 rotates the shot tube from a first or fill position, wherein the tip portion of the shot tube 202 is oriented at an incline above horizontal relative to the hollow body during filling of the shot tube, to a second or dispensing position, wherein the tip portion is oriented downward towards the receptacle during dispensing of the fluid. A valve controls the flow of the fluid into the hollow body of the shot tube 202. By virtue of the above arrangements, air within the shot tube 202 may be eliminated from the shot tube through the elevated tip portion 230 during the filling of the shot tube, resulting in an effective priming of the shot tube and a loading of the shot tube with a precise amount of the fluid.

### Pipetting Station Operational Features

The pipetting station 300 is shown in Figures 14 and 15 in an overall aspect. The station 300 includes a pipette hopper 304 and dispensing assembly shown in an end view in Figure 22 and an exploded view in Figure 13.

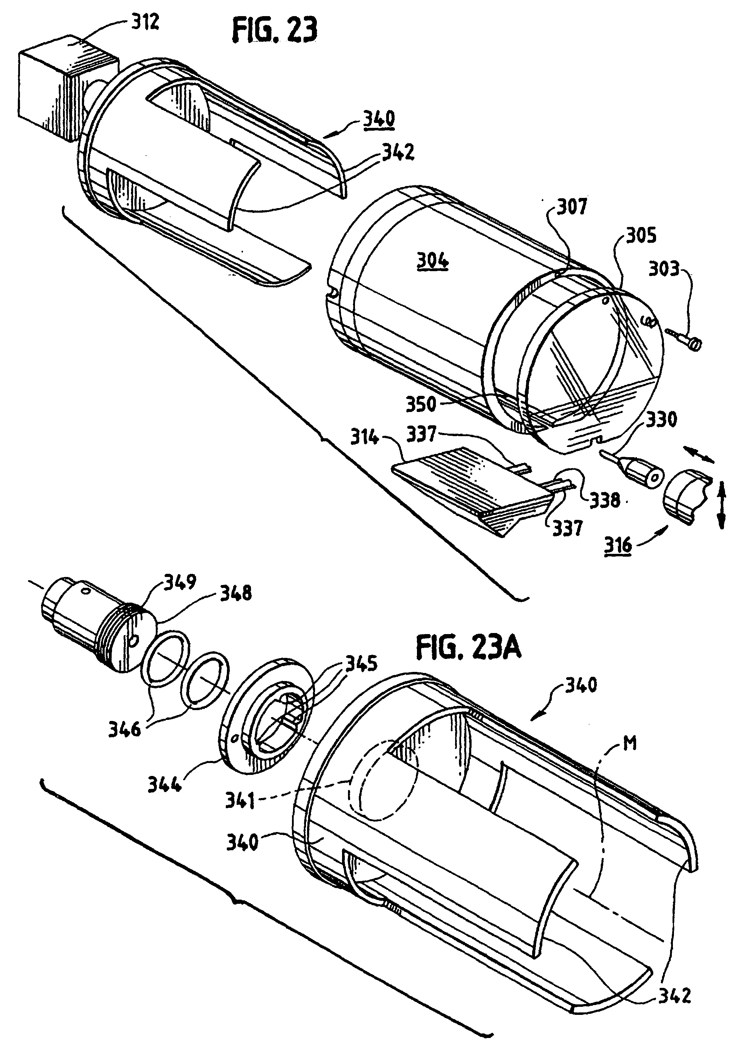

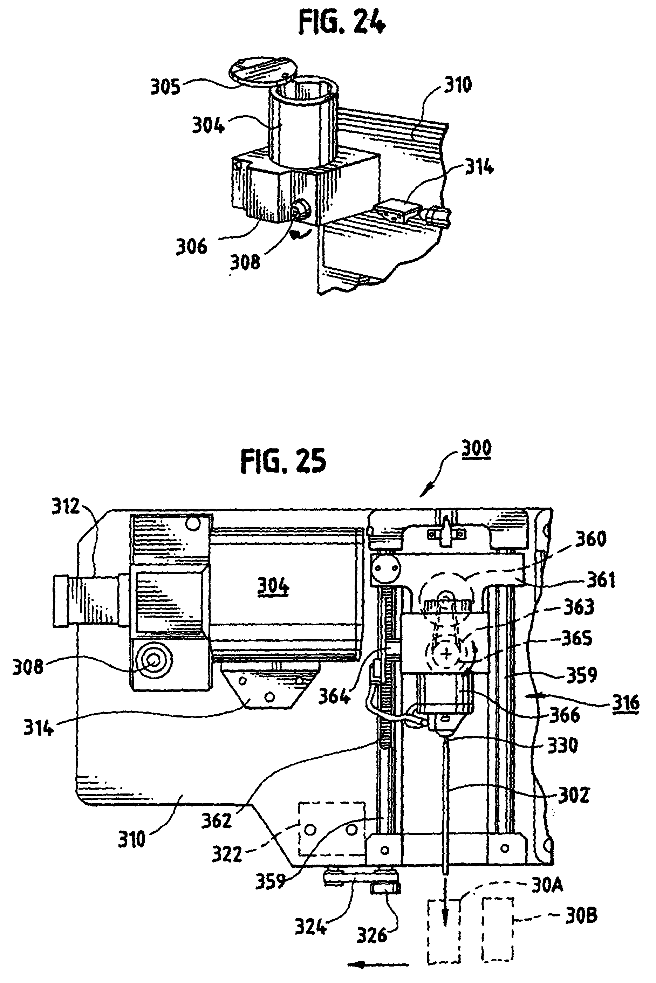

Referring to Figures 14, 15 and 22-24 in particular, the station 300 includes a generally cylindrical housing or hopper 304 that contains a plurality of hollow pipette straws 320. As seen in Figure 22, the housing 304 has a horizontally disposed straw withdrawal opening slot 350 at the bottom of the housing 304. The housing 304 is mounted to a block 306 which is rotatable relative to a bulkhead 310 by a pin 308 secured to the bulkhead 310, so as to permit the housing 304 to rotate upwards from the orientation shown in Figure 1 to the orientation shown in Figure 24. The housing includes a dear plastic cover 305 which prevents the straws 320 from falling out of the housing 304. The plastic cover 305 is mounted to the housing 304 via a screw 303 and a mounting hole 307 (Figure 23) in the housing 304. As shown in Figure 24, the plastic cover 305 swings out from a position covering the housing 304 opening so as to permit a technician to refill the housing 304 with straws 320.

When the housing 304 is in the normal, horizontal position in Figures 1 and 22, the slot 350 is positioned immediately above a horizontal slide member 314. Referring to Figure 22, the horizontal slide 314 has a solenoid 336 that is mounted to the back side of the bulkhead 310 for moving the slide between extended and retracted positions. The solenoid 336 could be mounted to the front of the bulkhead in a different configuration if desired. The movement of the slide 314 is accomplished by moving a shaft 338 that the slide 314 is mounted to back and forth. The slide 314 is slid along guides 337.

A stepping motor 312 (Figures 15 and 23) mounted to the rear wall of the drum 340 is provided to sweep a rotatable drum 340 having three equidistantly spaced fingers 342 about the interior surface of the housing 304. In a preferred embodiment, each of the fingers 340 define a sweep angle α of approximately 60 degrees. As best seen in Figure 22, as the fingers 342 sweep along the interior surface of the housing 304, one of the fingers sweeps a straw 320 in the housing 304 into the slot 350. The fingers 342 stop their movement such that a portion of the finger 342 covers the slot 350, with a straw positioned below the finger in the slot, as shown in Figure 22. When the horizontal slide 314 is in the position 314' shown in dashed lines in Figure 22, the top surface 354 of the end portion 356 of the slide 314 is positioned below the slot 350 in contact with a bottom housing surface 352, preventing a straw 320 from falling out of the housing 304 through the slot 350. As shown best in Figure 22, the sides of the slot 350, the finger 342 and the slide 314 all cooperate to firmly retain the straw 320 in the slot, permitting the tapered tubular transfer pin 330 to be inserted into the end of the straw 320.

Referring to Figure 22, the housing 304 is made from a low friction material. Preferably, the housing 304 is constructed such that the inside diameter of the housing 304 is less than the length of the housing, so as to maintain the straws 320 in a condition oriented parallel to the length of the housing 304, so that they can be readily swept into the slot 350.

Referring now in particular to Figure 23A, the drum 340 is shown in greater detail. A drive lug 348 is rotated by the motor 312 of Figure 23. The drive lug 348 has pair of circumferential recesses 348. A pair of drive O-rings 346 fit over the recesses 349. The drive lug 348 fits into a grip sleeve 344 by means of a set of three inwardly projecting points 345, which securely grip the O-rings 346. The grip sleeve 344 in tum is securely mounted to the central aperture 341 in the rear wall of the drum 340. When the lug 348 is rotated by the motor 312, the drum 340 is rotated about the motor and drum axis M. The grip sleeve and O-ring construction of Figure 23A reduces noise and vibration.

While the slide 314 is in the extended position 314' and the straw is trapped in the slot 350 as shown in Figure 22, a tapered tubular transfer pin 330 (Figures 15, 23) is moved from a retracted position in a transfer pin assembly 316 into an extended position directly into the straw 320 in the slot 350, so as to frictionally engage the tip of the straw 320. At this point, the horizontal slide 314 retracts towards the bulkhead 310. The transfer pin 330 now is rotated by a motor 360 (Figures 24-26) to a vertical position as shown in Figure 1, permitting the straw 320 to be moved through the slot 350 out of the housing 304. As soon as the straw 320 is rotated out of the slot 350, the slide 314 is moved back to the position 314' shown in dashed lines in Figure 22, and the motor 312 is operated to sweep another straw 320 into the slot 350.

The tapered tubular transfer pin 330 with attached straw 302, now in a vertical orientation directly above one of the test tubes in the cassette 26, is lowered so that the end of the straw 302 (Figure 1) is immersed sufficiently into the fluid in one of the test tubes (e.g. test tube 30A), such as a test tube containing a biological or control fluid sample. Vacuum is applied to the tubular transfer pin 330 and attached straw 302 for a predetermined period of time, drawing a precise and controlled volume of fluid into the straw 302. The tubular transfer pin 330 and attached straw (with fluid) is raised up so as to dear the top of the test tube. The boat and test tube are advanced by the positioning system 100 by an amount equal to the separation distance of adjacent test tubes. The tubular transfer pin 330 and straw 302 are lowered into the susceptibility test tube 308, whereupon the vacuum applied to the transfer pin 330 is released, causing the fluid contents of the straw 302 to fall into the susceptibility test tube 30B. At this point, the tubular transfer pin 330 is moved to a position wholly within the tubular transfer pin housing so as to eject the straw 302, dropping the straw into the susceptibility test tube. The transfer pin assembly 316 is then raised back to the elevation of the hopper 304, rotated into a horizontal position, and the process repeats.

Referring to Figures 25-27, the transfer pin assembly 316 and associated motor and vacuum system for the transfer pin 330 are illustrated in greater detail. Referring to Figure 25 in particular, a motor 322 is mounted behind the bulkhead and includes a drive belt 324 that turns a pulley 326 and a threaded shaft 362, referred to in the art as an ACME thread or lead screw. A transfer pin plate 361 is mounted to the threaded shaft via a pair of collars 364. Depending on the direction that the motor 322 rotates the shaft 362, the plate 361 and attached transfer pin assembly 316 is slid either up or down the two pillars 359 between an upper position, in which the transfer pin 330 is at the same elevation as the straw withdrawal slot 350 in the housing 304, and a lower position in which the straw 302 is in a position to withdraw fluid from a receptacle placed below the transfer pin assembly 316.

A second motor 360 having a drive belt 363 and pulley 365 is mounted to the rear of the transfer pin plate 361, and is provided for rotation of the entire transfer pin assembly 316 in the direction of the arrow of Figure 25 between a first position, in which the transfer pin 330 is oriented in the direction of the straw withdrawal slot 350, to a second position, in which the straw 302 is oriented vertically downward in the position shown in Figures 1 and 25.

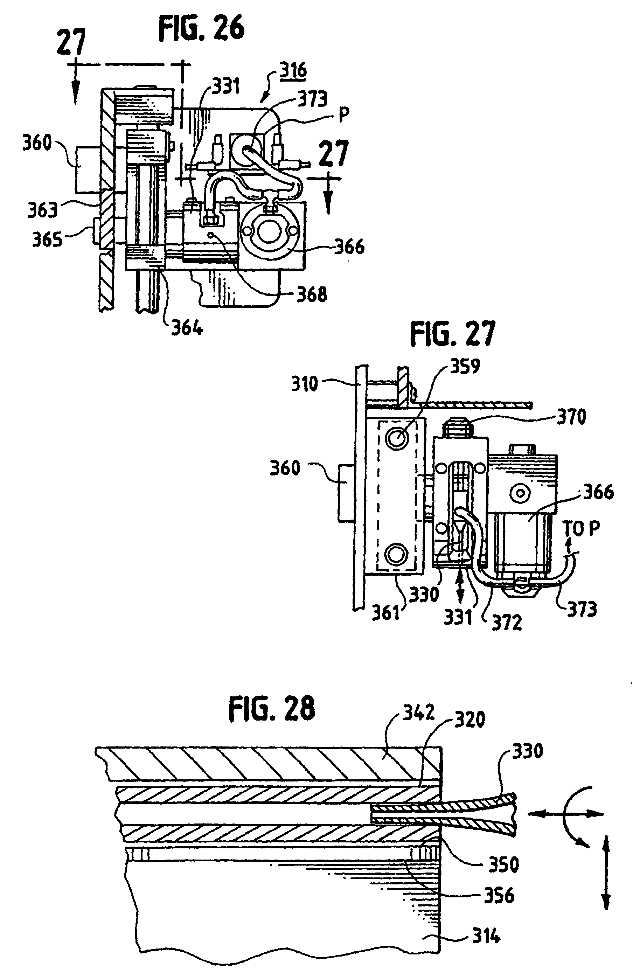

Referring to Figure 26, the transfer pin assembly 316 is illustrated in a side view as seen from the pipette housing 304. The transfer pin assembly has a transfer pin housing 331 which defines a transfer pin aperture 368. The tapered tubular transfer pin 330 (Figure 27) reciprocates between a retracted position in the housing (shown in Figures 26 and 27), and an extended position shown in Figure 25 at which it engages a straw in the straw withdrawal slot 350 as shown in Figure 28. A transfer pin actuation solenoid 370 is mounted to the rear of the transfer pin assembly 316 to move the tubular tapered transfer pin 330 between the retracted and extended positions. A source of vacuum 366 is mounted adjacent to the transfer pin housing 331, and provides vacuum to the end of the transfer pin 330 via a tube 372. A vacuum pressure transducer P is provided which monitors the vacuum generated by the source 366 to ensure that a straw is attached to the tapered tubular transfer pin 330, that fluid is withdrawn into the straw, and that a sufficient volume of liquid is transferred. This pressure transducer P is positioned at the end of a secondary vacuum line 373 in communication with the vacuum source. A suitable pressure transducer P is the Motorola model MPX 5010D sensor.

When the transfer pin 330 and straw 302 are rotated from a horizontal position to the vertical position shown in Figure 25, the straw 302 is rotated out of the slot 350 in the housing 304. The motor 322 then operates to lower the transfer pin assembly 316 to the appropriate level such that the straw 302 is immersed in the test tube 30A. After withdrawal of the fluid from the test tube 30A, the motor 322 raises the transfer pin assembly 316 up such that straw 302 clears the top of the test tube 30A, and then lowers the assembly 316 into test tube 308 after test tube 308 is placed below the straw 302. To remove the straw 302, the transfer tube 330 is retracted into the transfer tube housing 331. The diameter of the straw 302 is slightly larger than the diameter of the transfer pin aperture 368, forcing the straw 302 off of the transfer pin 330 as the transfer pin 330 with completely withdrawn into the transfer pin housing 331 in the position shown in Figure 27. In this embodiment, the straw 302 falls into test tube 308. The transfer pin assembly is then rotated back into a horizontal position and raised to the level of the straw withdrawal slot 350 in the housing 304, and the process is repeated for the next set of test tubes.

From the above description, it will be appreciated that there has been described a method of automatically dispensing straws comprising the steps of placing the straws in a cylindrical housing 304 having an interior surface, the cylindrical housing defining a straw withdrawal slot 350 therein, sweeping the straws around the periphery of the interior region of the housing and sweeping a straw into the straw withdrawal slot 350, placing an obstruction (e.g., the horizontal slide 314) in front of the straw withdrawal slot 350 during a time period in which the straw is not to be removed from the cylindrical housing 350, and removing the obstruction 314 from in front of the straw removal slot 350 during a time period in which a straw is to be removed from said cylindrical housing. The transfer pin engages the straw when it is retained in the straw withdrawal slot 350 by the obstruction 314, and rotates the straw out of the slot 350 into a position for pipetting when the obstruction 314 has bee removed from the slot. It will be appreciated that an alternative to the rotational removal of the straw from the slot may be accomplished by a linear retracting motion of the transfer pin.

There has also been described a system for removing liquid from a receptacle 30, comprising a housing 304 containing a plurality of hollow straws and defining a straw withdrawal opening 350, a tapered, tubular transfer pin 330 having a tip portion, a source of vacuum connected to said transfer pin, and a drive mechanism for said transfer pin 330. The drive mechanism comprises a solenoid 370 means for moving the transfer pin along a first axis towards and away from the straw withdrawal opening 350, the tip portion of the pin 330 engaging a straw disposed in the straw withdrawal opening 350 when the transfer pin 330 is moved towards the straw withdrawal opening 330, a means 360 for rotating the transfer pin and straw in an assembled condition to a vertical orientation above the receptacle 30; and a means 322 for lowering the transfer pin and straw such that the straw is placed into contact with the liquid in the receptacle and for raising the transfer pin so as to withdraw fluid from the receptacle 330 when vacuum is applied to the transfer pin 330.

### Vacuum Control of Card Loading

At the vacuum station 400 of Figure 1, the vacuum loading of the cards 28 with fluid samples from the test tubes takes place. The vacuum created in the vacuum chamber 402 is controlled in a manner to prevent the formation of bubbles in the wells of the cards 28. Such bubbles can interfere in the accuracy of the reading of the wells by the optical stations. The preferred vacuum loading station 400 is shown schematically in Figure 29.

The vacuum filing station 400 consists of the following components:
. A vacuum pump 420 (Gast P/N: SAA-V110-NB, 115 VAC, 50/60 Hz, 29.5 inch Hg max. Vacuum: 1.75 cfm open flow).
. A proportional vacuum control valve 422 (Honeywell/Skinner P/N: BP2EV0006, 12-24 VDC, 0-5 VDC Control. 0.078 inch diameter orifice).
. A 4-way direct acting solenoid valve 424 (Humphrey P/N: 420, 24 VDC, 60 scfm @ 1100 PSIG inlet pressure, 24 VDC, .250 inch diameter orifice).
. An air filter 426 (Norgren P/N: F39-222EOTA, 4 scfm @ 100 PSIG inlet pressure, 0.01 micron filtration).
. An absolute pressure transducer 428 (Dara Instruments P/N: XCA415AN, Range: 0-15 PSIA, 5 VDC Excitation, 0.25-4.25 V F.S.O., +/-0.5% of F.S.O. Combined Linearity & Hysteresis, +/-0.3% of F.S.O. Repeatability).
. A standard sample preparation node (SPN) printed circuit board 430.
. Vacuum tubing 432, 0.250 inch inside diameter.

The drive system 410 for the station 400 includes a stepping motor 438 and associated belts 440 and threaded shafts 442 that raise and lower the vacuum chamber 402. An optical encoder 434 and optical interrupt 436 sense when the vacuum chamber 402 is at its upper and lower positions, respectively.

When the vacuum pump 420 is tumed on, it pulls free air through the filter/muffler 444 attached to the 4-way solenoid valve 424. To fill the card 28 in the boat 22, the following sequence occurs: The vacuum chamber 402 is lowered onto the boat 22 with the sample cards 28. The proportional and vacuum control valve 422 is opened 100%. The 4-way solenoid valve 424 is energized and air is pumped out of the vacuum chamber 402 through the air filter 426 and the 4-way solenoid valve 424. The absolute pressure transducer 428 gauges the vacuum chamber 402 pressure decrease and sends a proportional continuously changing voltage output to the SPN Board 430. The continuously changing voltage is sampled by the SPN Board 430 at regular intervals and the rate of change is compared to the programmed rate to pump down the vacuum chamber.

If the rate of change is too fast, the proportional valve 422 is sent a higher control voltage to open wider, if possible, and increase the size of the air leak into the vacuum line 406. If the rate of changes is too slow, the proportional valve 422 is sent a lower control voltage to close down, if possible, and decrease the size of the air teak into the vacuum line 406. The control of the rate of change of pressure insures that vacuum is not drawn too quickly, which can cause splashing and bubbles in the test tubes 30. This can cause air bubbles to enter the card 28 when the chamber is vented, interfering with the optical analysis of the card.

The absolute pressure transducer 428 continues to gauge the vacuum chamber 402 pressure and send the proportional pressure voltage to the SPN Board 430 while the 4-way solenoid valve 424 is de-energized. The vacuum pump 420 is tumed off, and the proportional valve 422 is closed completely for five seconds when the vacuum target (or set point) pressure of 0.90 PSIA is reached. This is to prevent the possibility of the pressure in the vacuum chamber from varying up and down enough to allow sample fluid to be transported in and out of the test card 28 during the five second dwell period.

The absolute pressure transducer 428 continues to gauge the vacuum chamber 402 pressure and send the proportional pressure voltage to the SPN board 430, while the proportional valve 422 is opened gradually at the end of the five second vacuum dwell period until the programmed pressure increase rate of change is achieved.

The continuously changing voltage from the pressure transducer 428 is sampled by the SPN Board 430 at regular intervals and the rate of change to return to atmospheric pressure is compared to the predetermined programmed rate. If the rate of change is too fast, the proportional valve 422 is sent a lower control voltage to close down, if possible, and decrease the size of the air leak into the vacuum line 406. If the rate of change is too slow, the proportional valve 422 is sent a higher control voltage to open wider, if possible, and increase the size of the air leak into the vacuum line 406. This steady controlled venting permits fluid samples to be drawn into the sample cards 28 in a manner to reduce the risk of bubbles forming in the wells of the card 28, and to insure complete filling of the card 28.

The proportional valve 422 is opened 100% at the complete return to atmospheric pressure and held open while the vacuum chamber 402 is raised from the boat 22. This is to prevent a residual vacuum from occurring in the chamber 402 and lifting the boat 22 within the chamber 402. The proportion valve is closed and the system is ready to repeat the cycle.

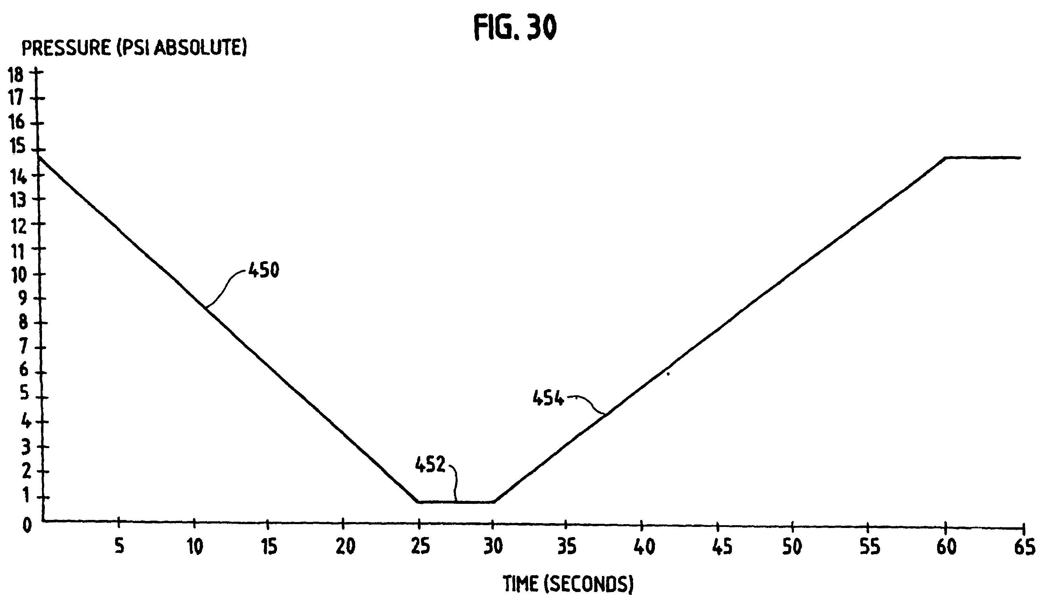

The vacuum generation, dwell, and venting cycle is illustrated in graphical form in Figure 30. Note the linear draw down curve 450 of about -0.54 ± 0.07 PSIA per second, the 5 second dwell period 452 at 0.90 PSIA, and the linear vent rate curve 454 of about + 0.45 ± 0.07 PSIA per second.

For the illustrated embodiment, it is assumed the relative pressure between the test card 28 and the surrounding atmospheric media inside the vacuum chamber 402 to be 0 PSI. In reality, there should be a very small pressure difference inside the test card 28 versus outside the test card 28 in the vacuum chamber throughout the filling cycle. If, however, one considers the pressure changes inside versus outside the vacuum chamber, then the following cycle information applies to the illustrated embodiment Initial: local atmospheric pressure (varies with local barometric pressure). Start filling cycle: -.53 +/-0.07 PSI/sec (23-30 seconds pump down). Vacuum dwell: Approx. 5 seconds. Return to atmospheric pressure: +.53 +/-0.07 PSI/sec (23-30 seconds retum). A return to atmospheric rates faster than this can causes some test card fills to be incomplete. End: Local Atmospheric Pressure (same as initial).

Thus, a method is for loading a test sample card with a fluid sample, comprising the steps of placing the test sample card 28 in fluid communication with said fluid sample in the test tube 30, placing the test sample card 28 and fluid sample in the test tube 30 within a vacuum chamber 402, and lowering the pressure in the vacuum chamber 402 at a substantially constant and predetermined rate to a set point vacuum level, the rate (e.g., as shown in Figure 30) selected so as to not cause air bubbles to form in the fluid sample as air is removed from the card during the vacuum level. The vacuum is maintained at the set point level for a predetermined length of time (as shown in Figure 30), and released at a predetermined rate in a manner so as to avoid air bubbles from forming in the fluid sample in the card.

The steps of lowering, maintaining and releasing said vacuum are performed in a vacuum station 400 of the automated sample testing machine, the machine having a sample tray 22 moveable within the machine from a loading station (e.g., at the front, right comer of the base pan) to said vacuum station 400.

The vacuum station 400 has a vacuum control valve 422 in communication with the vacuum chamber 402 operative to insure that the rate of lowering the pressure in the vacuum chamber occurs at the predetermined rate, such as shown in Figure 30.

In another aspect, a vacuum loading system 400 for test sample cards 28 placed in fluid communication with a fluid test sample stored in an open receptacle 30 has been described, comprising a vacuum chamber 402 in communication with a source of vacuum, the chamber having a lower peripheral sealing surface at the bottom periphery of the chamber 402, a tray 22 for containing the cards 28 and fluid test samples in the test tubes 30 and having a peripheral surface 23 for sealingly engaging the lower peripheral sealing surface of the vacuum chamber 402, and a positioning system 100 for moving the tray 22 from a loading station to the vacuum chamber 402. A drive system 410 or means for raising and lowering the vacuum chamber 402 is provided so as to permit the tray 22 to be moved undemeath the chamber 402, and to permit the tray 22 to be moved from the vacuum chamber 402 to the incubation station 600. When the chamber 402 is in the lower position its lower edge engages the peripheral surface 23 of the tray 22, enabling vacuum to be generated within the chamber 402.

### Transfer Tube Cut and Seal Station Operational Features

Once the card is filled with sample in the vacuum chamber 402, the cassette 26 is moved through a transfer tube cutting and sealing station 500, best seen in Figures 1, 4, and 5. A formed nichrome wire 506 is heated to a precise temperature for cutting through the transfer tubes 30 using a microprocessor-controlled constant current source (not shown).

The cassette 26 is moved past the hot wire 506 at a slow speed to allow the wire to cut and seal the transfer tubes 30 dose to the card 28, forming an external transfer stub. The remainder of the transfer tube 30 remnant is left in the test tube for disposal, as shown in the extreme right hand side of the boat 22 in Figure 5.

The hot cutting wire 506 is mounted to a mechanism including plates 504 that are raised and lowered by a stepper motor/pulley/drive belt drive assembly 502 (Figure 1), allowing the wire 506 to be moved out of the way to allow un-cut transfer tubes to be moved past the cutting and sealing station 500. This function can be used to batch load multiple cassettes or for error recovery purposes.

The cutting and sealing station 500, in cooperation with the test sample positioning system 100, enables multiple transfer tubes to be cut essentially at once as the boat 22 is advanced past the hot cutting wire 506. Control of the cutting of the transfer tube 32 to produce a reliable seal is accomplished by using a constant current source to control the heat output of the hot cutting wire 506, and controlling the speed at which the boat 22 and cassette 26 is moved past the wire 506. Since the electrical properties of the wire 506 are predetermined, and by holding the current constant and controlling the speed at which the wire passes through the plastic transfer tube 30 (i.e., the speed of motor 48C), the station 500 can simply and precisely control the cutting and sealing of the transfer tube 32. This heat control design is very simple and does not need temperature calibration. The wire 506 heats up very quickly, so the wire does not have to be left on all the time. This feature offers safety and energy conservation advantages.

In the prior art cutting and sealing station of the Vitek® sealer, a block of metal is provided with a cartridge heater embedded with a thermocouple connected to a conventional temperature control. This is a fairly expensive, bulky device that needs calibration, cuts only one straw at a time, and requires a long, constantly "ON" heating time. In contrast, the present inventive sealing station 500 is much smaller, more reliable, and less expensive to manufacture. Rather than controlling temperature, as in the prior art, the station 500 controls the power with a constant current source applied to the cutting/sealing wire 506 to control heat. Heat is a function of the square of the current since power (P) = I²R. Typically, the setting for the constant current source is set at the factory once and would not have to be adjusted in the field after installation in the field..

### Sample Card Transport Station Operational Features

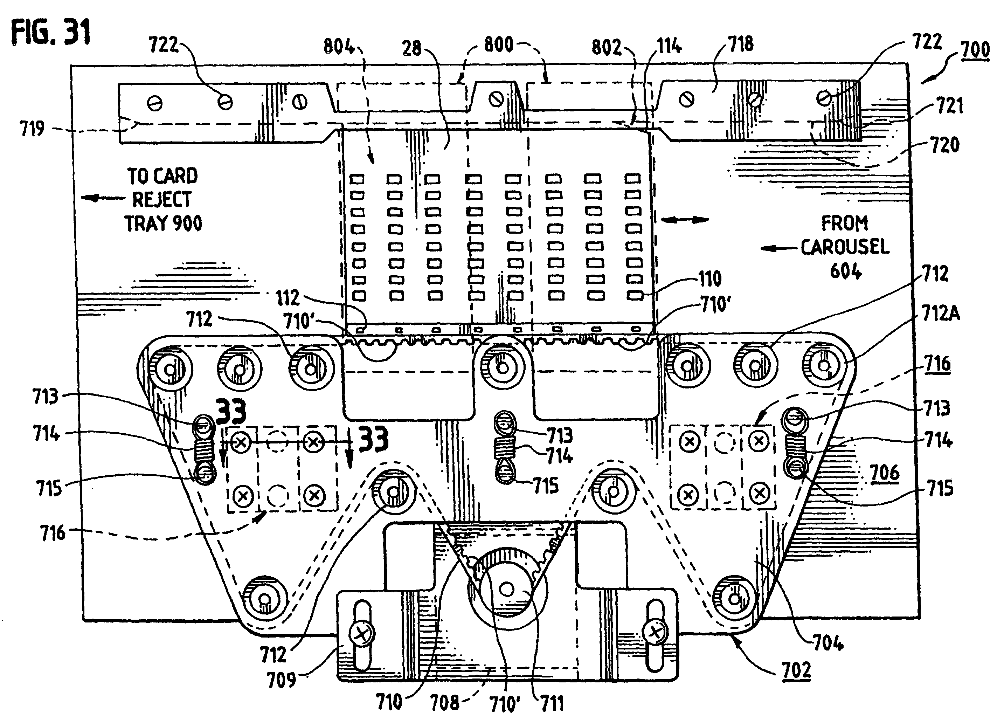

After the cards 28 have been loaded with sample and sealed, they are inserted into the carousel 600 and incubated. Periodically, the cards are removed from the slots in the carousel and moved to optical reading stations for reading and returned to the carousel or sent to a stacking disposal system. The mechanism responsible for moving the cards between the carousel and the optical station and stacking disposal system is the sample card transport station 700, shown in Figure 1 and in greater detail in Figure 31.

Referring now to Figure 31, the sample card transport station 700 for the optical scanners is shown in an elevational view. The station 700 includes a drive assembly 702 having a cover plate 704 which is mounted to a bulkhead or support 706. The optical reader system 800 in the preferred embodiment consists of a transmittance substation 802 and a fluorescence substation 804 mounted to the bulkhead 706, the outlines of which are shown in Figure 31. The sample card 28 is moved from the top of the carousel 604 by the drive assembly 702 through the optical reader system 800 and back to the carousel 604 if the card 28 needs further incubation and additional reading. If the card has been sufficiently incubated (based on the analysis of data from the optical reader system 800), the card 28 is moved to a card reject tray 902 (Figures 2 and 3) to the left of the optical system 800.

The drive assembly 702 consists of a stepper motor 708, shown in dashed lines, positioned behind a mounting bracket 709. The motor 708 drives a timing pulley 711 that moves an endless, substantially inelastic, drive belt 710 having teeth 710' over a series of rollers 712. The belt 710 is supported at the top of the cover plate 704 by a set of rollers 712. The path of the belt through the rollers 712 is shown in dashed lines in Figure 31. It can be seen that the belt 710 passes across the top of the cover plate 704 and beneath the optics in the optical substations 802 and 804. The drive belt 710 engages the bottom edge of the card 28 along the top of the cover plate 704. A suitable drive belt 710 can be obtained from the Gates Rubber Co., of Denver, Colorado, U.S.A.

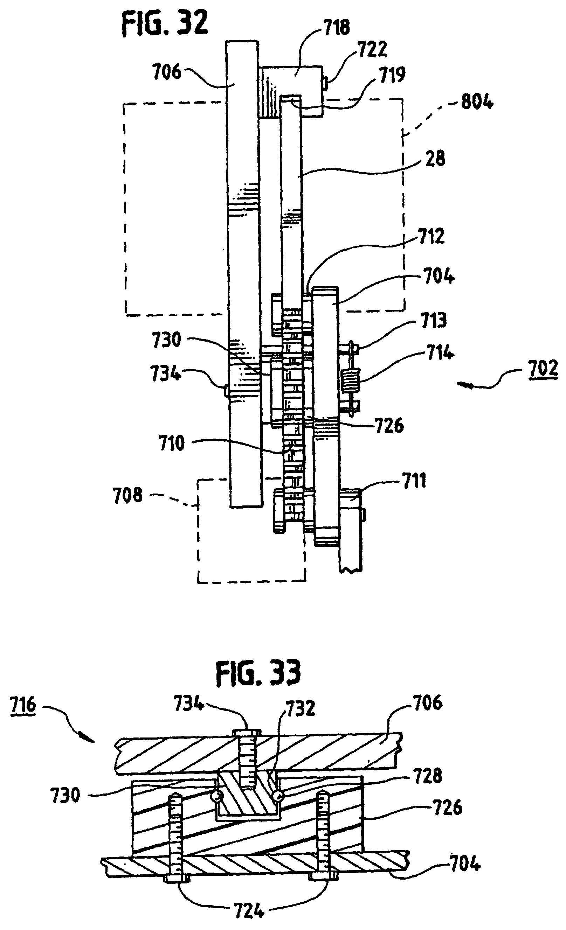

A ledge 718 mounted to the bulkhead 706 is provided above the belt 710 and the optical reading system 800. The ledge has a slot 720 which receives the upper edge of the card 28. The ledge 718 and slot 720 defines a card travel direction. When the card 28 is pushed out of the carousel 604, the card 28 is snugly positioned in the space between the slot 720 and the belt 710. The entire drive assembly 702, including cover plate 704, stepper motor 708 and drive belt 710, is movable relative to the support bulkhead 706. To permit the relative movement, a set of carriage and slide assemblies 716 are provided, one of which is shown in more detail in Figure 33. As seen in Figure 33, each carriage and slide assembly 716 includes a slide 730 mounted to the bulkhead 706 by a bolt 734. The carriage 726 is mounted to the cover plate 704 by a set of four screws 724. The carriage 726 slides relative to the slide member 730 by means of ball bearings 728 which slide along a groove 732. In the preferred embodiment, two of the carriage and slide assemblies 716 are provided, one on each side of the cover plate 704.

The entire drive assembly 702 is biased upwards towards the ledge 718 by biasing springs 714. The springs have a top end 713 engaging a pin mounted to the bulkhead 706, and a bottom end 715 engaging a pin mounted to the cover plate 704. Three springs 714 in all are preferred, and are placed at the center and sides of the cover plate 704. The springs 714 each have a spring constant K of 16.5 lbs/in., for a total of 49.5 lbs/in for the three springs. The purpose of the springs 714 is to constantly maintain the proper upward pressure on the card 28 by the belt 710, such as in the case of some tolerance variation in the height of the cards. The drive belt 710 must provide enough upward force so as to permit the belt to engage the bottom of the card 28 and move the card along the slot 720, but not too much to cause binding by the drive motor or too little force, which would cause the belt to slip relative to the bottom of the card. By maintaining the proper upward force on the card, such that belt travel is directly translated into card travel, precise movement by the stepper motor 708 results is precise movement of the card 28 relative to the optical system 800. This precise movement is discussed in greater detail in conjunction with the operation of the transmittance substation 802.

Referring to Figure 32, the drive assembly 702 and bulkhead 706 are shown in a side view, looking towards the carousel 604 and incubation station 600 of Figure 1. The rollers 712 at the top of the cover plate 704 form a slot, as shown, which helps support the bottom edge of the card 28. The card 28 is snugly positioned between the belt 710 and the slot 720 in the ledge 718. The upward force on the card 28 by the springs 714 causes the belt 710 to grip the bottom edge of the card 28, such that the card 28 is slid along the ledge 718 by the drive belt 710 without any significant slippage between the belt 710 and the card 28. To facilitate the sliding motion, the slot 720 is made from a low friction material such as Delrin or given a low friction coating. The bottom edge of the card 28 can be provided with a knurled texture surface such as parallel raised ridges to better enable the belt 710 to grip the card 28 as the belt 710 moves backward and forwards over the rollers 712.

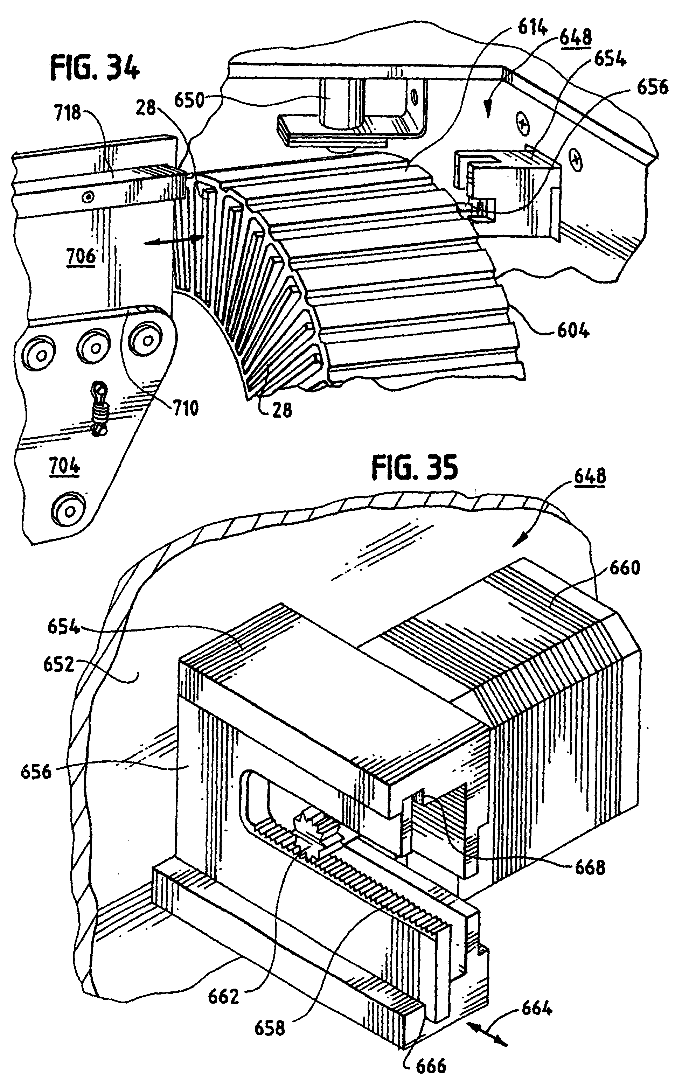

Referring to Figures 34 and 35, in order to place the card into the sample card transport system 700, a push mechanism 648 is provided to push the card 28 out of the carousel 604. Figure 34 is a perspective view of the carousel 604 showing the push mechanism 648 mounted to the front of the carousel bulkhead 652, and Figure 35 shows the mechanism 648 as seen from the rear of the bulkhead 652. The push mechanism 648 includes an alignment block 654 mounted to the bulkhead 652 and a driver 656 that reciprocates back and forth relative to the block 654. A motor 648 having a gear 662 is mounted behind the bulkhead 652. The teeth of the gear 662 cooperate with a set of teeth 658 on the driver 656, such that rotation of the gear 662 backwards and forwards causes the driver 658 to move in the direction shown by the arrow 664 (Figure 35) in the space between a lower slot 666 and an upper slot 668 in the block 654. The end of the driver 656 is positioned in alignment with the top slot 614 in the carousel 604. When the driver 656 is operated by the motor 648 such that the driver 656 is pushed into the slot 614, the card 28 within the slot 614 is pushed out of the slot into the space between the ledge 718 and the drive belt 710. (The construction and operation of the reciprocating cam mechanism that loads the cards 28 into the carousel from the cassette 26 is essentially the same as that for the push mechanism 648). An optical detector 650 (Figure 34) is provided directly above the slot 614 so as to control the rotation of the carousel 604 such that slot 614 is properly positioned adjacent the driver 656 and ledge 718.

The push assembly 648 slides the card 28 out of the slot 614 at the top of the carousel 604 and places the card 28 at the extreme right hand edge of the drive assembly 702 adjacent to the extreme upper right drive roller 712A. The stepper motor 708 is operated in a forward direction (rotating the timing pulling 711 in a counter-clockwise direction), causing the drive belt 710 to move to the left and move the card 28 to the left towards the transmittance substation 802.

When the leading edge of the card 28 reaches the transmittance substation 802, an optical interrupt LED in the transmittance substation transmits radiation through an optical interrupt aperture 112 (Figure 31) at the base of the card 28. An optical interrupt detector senses the radiation and sends a signal to the control system to cause the motor 708 to stop. When the motor 708 stops, the first column of wells 110 in the card 28 are positioned directly opposite a set of eight transmittance LEDs in the transmittance substation 802, which conduct transmittance testing of the column of wells in the card 28.

After an initial illumination of the LEDs, the motor 708 is operated to rapidly move the belt 710 in a series of small steps, such that the transmittance optics illuminates the individual wells at a series of positions across the width of the wells. This precise movement of the cards 28 achieves a large set of data for the wells 110. The transmittance testing at multiple positions across the wells 110 will likely include a detection of any air pockets or debris in the wells, enabling the data processing system to detect and possibly reject an abnormal transmittance measurement.

Where fluorescence testing is called for, after all of the wells of the card 28 have been subject to the transmittance testing by transmittance substation 802, the motor 708 and belt 710 slides the card 28 to the fluorescence substation 804, wherein fluorescence testing of the wells 110 takes place.

Depending on the test status, the card 28 is then either returned to the carousel 604 by moving the motor 708 and belt 710 in the reverse direction, or else the motor 708 and belt 710 are operated to move the card all the way to the left hand edge of the drive assembly 702 to place the card 28 in the card disposal mechanism 900.

Thus, a method has been described for transporting a sample card 28 having first and second (top and bottom) edges from a incubation station 600 to a reading station 800 in a sample testing machine 20, comprising the steps of:
placing the sample card 28 in a snug space defined by (1) a slot 719 in a ledge 718, the slot 719 receiving said top edge of the card and defining a card travel direction, and (2) a drive belt 710 positioned parallel to the slot 719 and supporting the bottom edge of the card 28;
biasing (with the springs 714) the drive belt 710 towards ledge so as to maintain pressure between the drive belt, card and slot;
moving the drive belt in the card travel direction so as to slide the card through the slot 719 to the optical station 800 without substantial slippage of the card 28 relative to the belt 710, thereby permitting precise movement of the card relative to the optical system due to the belt's precise movement by the timing pulley 711 and stepper motor 708.

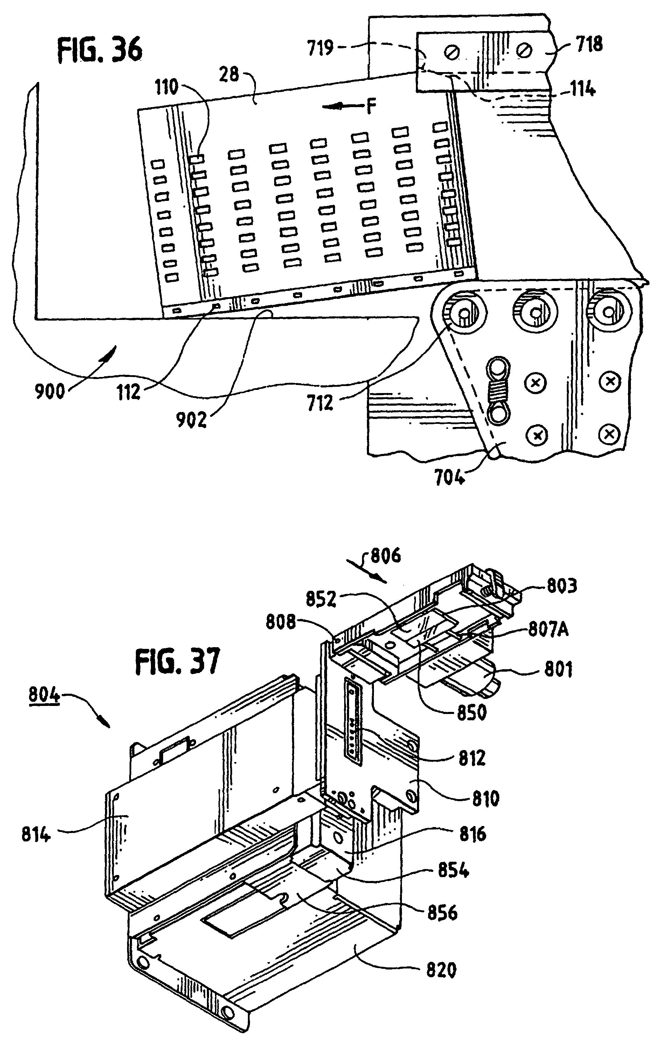

Referring now to Figures 2, 3, 31 and 36, the card disposal mechanism 900 has a tray 902 in which the cards are stacked as they exit the sample card transport system 700. The ledge 718 is provided with a slant portion 719 at the extreme left-hand end of the ledge 718. When the card 28 is moved past the end of the cover plate 704 onto the tray 902, the upper right hand shoulder 114 of the card 28 is placed into contact with the slant portion 719. The tray 902 is slightly lower than the elevation of the belt 710 at the top of the cover plate 704, assisting the placement of the upper shoulder 114 against the slant 719. A resultant force F (Figure 36) is imparted to the card 28 by the drive belt 710 and slant portion 719, causing the card 28 to snap out of the drive assembly 702 into the card reject tray 902.

### Fluorescence Optics Substation Operational Features

Referring now to Figure 37, the fluorescence optics substation 804 is shown in a perspective view isolated from the machine 20. The substation 804 includes a selective reflector assembly 806 mounted via a hinge 808 to an optical head 810. The optical head 810 has a plurality of surface apertures 812 defining six optical channels between a fluorescence illumination source and the middle six wells in a column of wells 100 in the card 28. The placement and number of the optical channels depends on the lamp size (or number) and the geometry of the sample wells in the card 28. The illumination source is placed within a flashlamp cassette 816. An LED and detector cooperate with the optical interrupt aperture 112 along the base of the card 28 to precisely position the card in the space between the front surface apertures and the reflector assembly.

When the hinge 808 is in a closed condition, the selective reflector assembly 806 is positioned parallel to the apertures 812. The card 28 is moved back and forth in the space defined by the front surface apertures 812 and the reflector assembly 806.

The selective reflector assembly 806 has a stepper motor 801 which moves an optical shuttle 803 back and forth. A reflector 852 and a solid reference 850 are mounted to the optical shuttle 803. The purpose of the reflector and solid reference are described in more detail below.

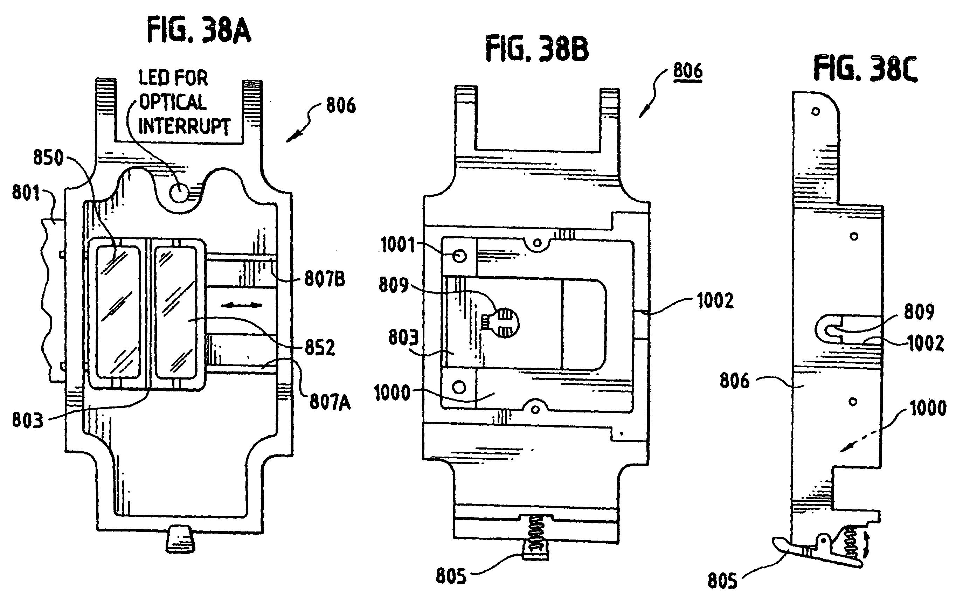

Referring to Figure 38A, the front of the selective reflector assembly 806 is shown isolated from the rest of the station 804 in a plan view. The optical shuttle 803 travels back and forth along a pair of guides 807A and 807B. In normal operation, the shuttle 803 is in a position such that the reflector 852 is placed directly opposite the apertures 812 of the optical head 810. Whenever a calibration of the detectors in the optical head 810 is performed, the motor 801 moves the shuttle 803 such that the solid reference 850 is placed in the optical path opposite the apertures 812. The selective reflector assembly housing includes a housing for an LED for the optical interrupt aperture 112 for the card 28. A spring damp 805 is provided to secure the selective reflector assembly to the head 110 when the assembly 806 is in a closed condition.

Figure 38B shows the rear of the selective reflector assembly 806. The selective reflector assembly 806 is shown in a side view in Figure 38C. Behind the shuttle 803, a well 1000 is provided for a shaft (not shown) from the stepper motor 801. The stepper motor shaft passes through the gap 1002 in the well and is secured to a piece 809 extending upwardly from the rear surface of the optical shuttle 803. A cover plate (not shown) covers the well 1000 by mounting to the screw holes 1001. The back and forth motion of the shaft of the stepper motor 801 causes the shuttle 803 to slide back and forth along the guides 807A and 807B.

Referring again to Figure 37, the removeable flash lamp cassette 816 holds an elongate xenon linear flash lamp, which serves as a fluorescence illumination source for the fluorophores placed in the wells 110 of the card 28. The flash lamp cassette 816 is connected to a high voltage power supply 820. The flashlamp 824 has a high current capacity connection allowing field replacement of the lamp. This is unique for this lamp type due to the high pulse currents generated during the flash (over 350 amps).

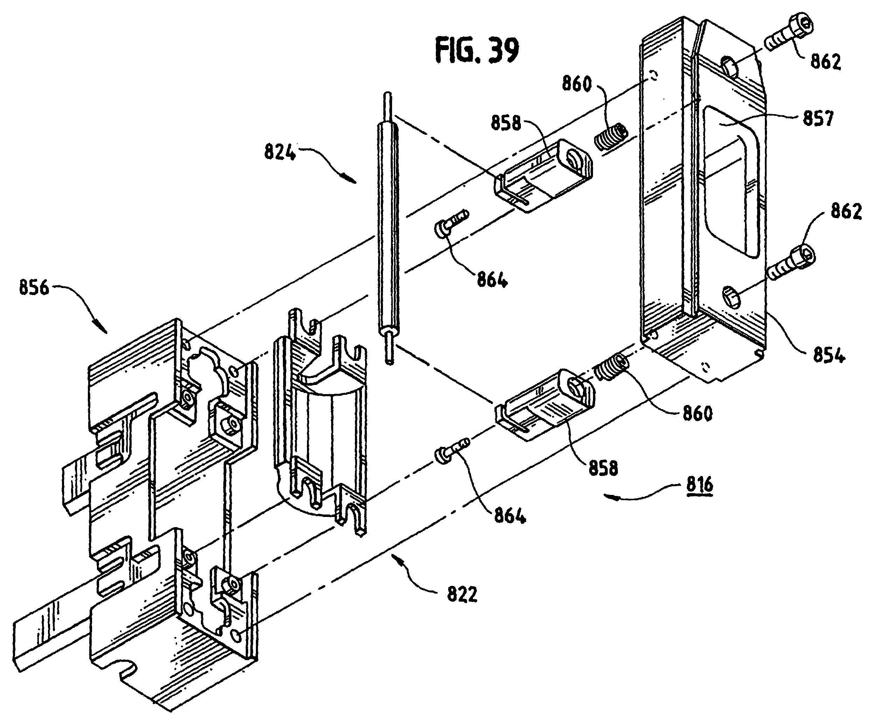

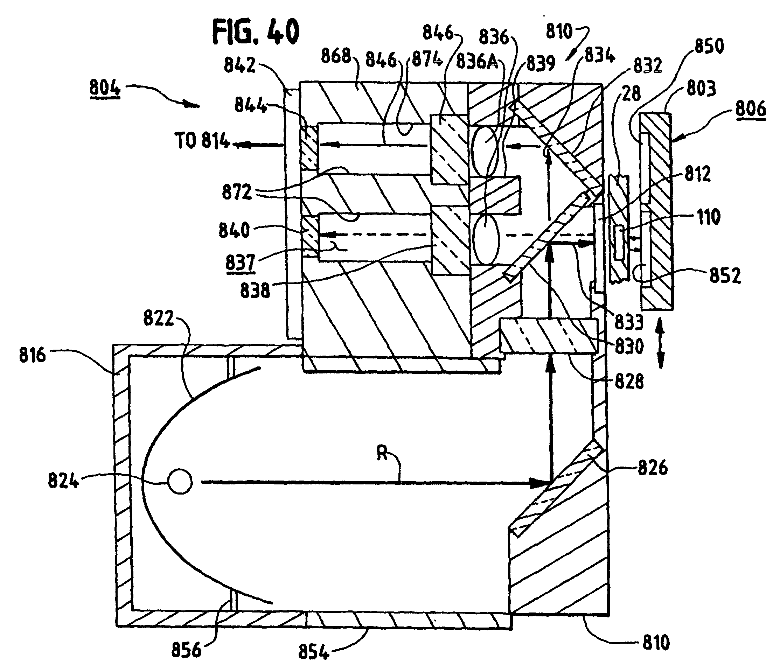

A peak detector 814 and electronics module is mounted behind the optical head 810. The flash lamp cassette 816 includes a interface block 854 and a lamp holder 856 which are shown in further detail in Figure 39.

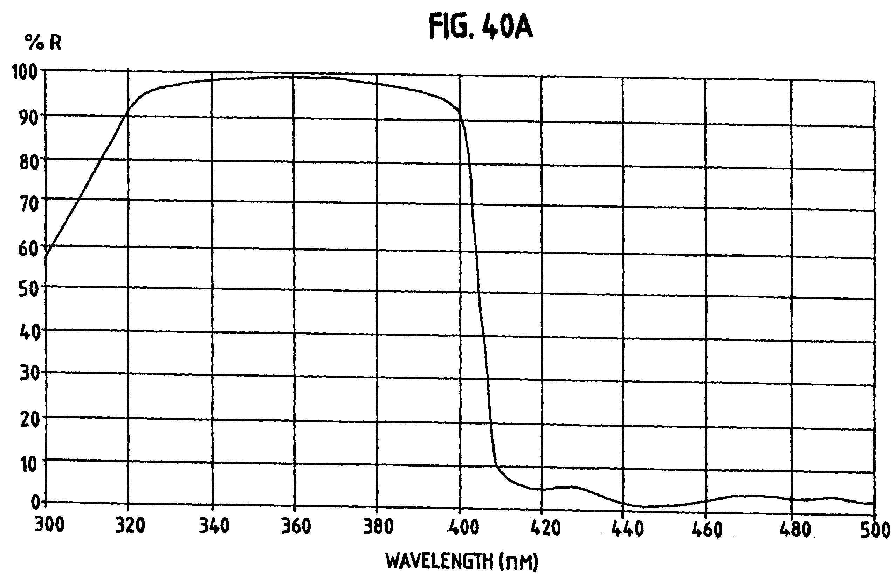

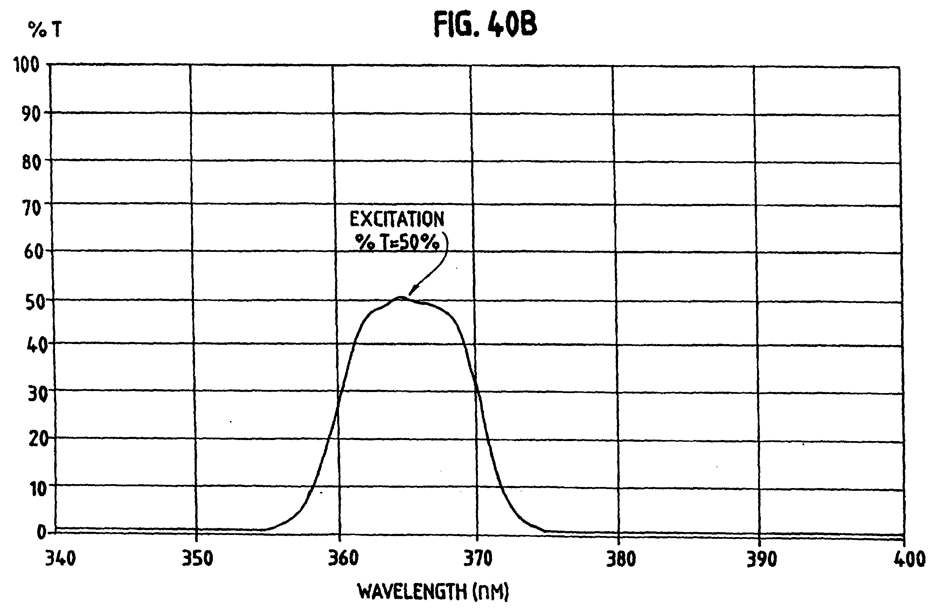

Referring now to Figure 40, the fluorescence optics substation 804 is shown in a sectional view perpendicular to the axis of the flash lamp 824 and the six photodiode detectors. The flash lamp cassette 816 houses the xenon lamp 824, which is mounted at the focus of an elongate cylindrical parabolic reflecting mirror 822. The flash lamp radiation R is reflected off of a cold mirror 826 onto a 365 nM filter 828, which filters the radiation R to pass radiation at the excitation wavelength of the fluorophores. Filter specifications for the cold mirror 826 and the filter 828 are shown in Figures 40A and 40B, respectively. After passing through the filter 828, the radiation R reflects off a dichromatic beam splitter 830 along its optical path 833 and out of the apertures 812 and into the card wells 110. Any radiation passing through the wells 110 is reflected off the reflector 852 in the selective reflector assembly 806 and reflected back into the wells 110. The radiation excites the fluorophores in the well 110, causing the fluorophore to briefly to emit radiation. The emission radiation is shown as a dashed line in Figure 40. The emission radiation passes through the dichromatic beam splitter 830, through a focusing lens 836 and band pass filter 838 onto a photodiode detector 840. There are six photodiode detectors in all for the six optical channels.

The use of a selective reflector 852 enhances the signal-to-noise ratio and minimizes optical cross-talk by doubling the optical path. Further, when the card 28 is positioned for reading by the fluorescence station by means of the optical interrupt, the wells in the card are oriented to promote optical separation of the wells to minimize optical cross-talk and maximize the fluorescence signal. The card 28 material is preferably opaque to minimize cross-talk, and preferably white to maximize the fluorescence signal.

The dichromatic beam splitter 830 is highly reflective to radiation at the excitation wavelength of the fluorophores, reflecting approximately 95% of the radiation into the well 110. However, the dichromatic beam splitter 830 is highly transmissive to radiation at the emission wavelength of the fluorophores, passing most of the radiation from the fluorophore along the same optical path 833 onto the detectors 840.

Approximately 5% of the radiation from the lamp 824 that is not reflected off the dichromatic beam splitter 830 is transmitted along an optical path 834 to a mirror 832. The minor 832 reflects the radiation through a focusing lens 836A and a band pass filter 846 to a reference photodiode detector 844. The reference detector 844 is used by the peak detector circuit 814 to compute the ratio of the signal detected by the detectors 840 divided by the signal detected by reference detector 844. The output of the lamp 824 may vary over time, however the ratio of the output of the channel detector 840 divided by the output of the reference detector 844 remains constant, i.e., independent of changes in lamp output over time. In addition to compensating for changes in lamp intensity, the reference channel 844 can also be used to determine if the lamp 824 is providing sufficient light for proper operation of the fluorescence optical system. By monitoring the lamp output at the reference detector 844, the system can automatically determine when the lamp 824 needs to be changed.

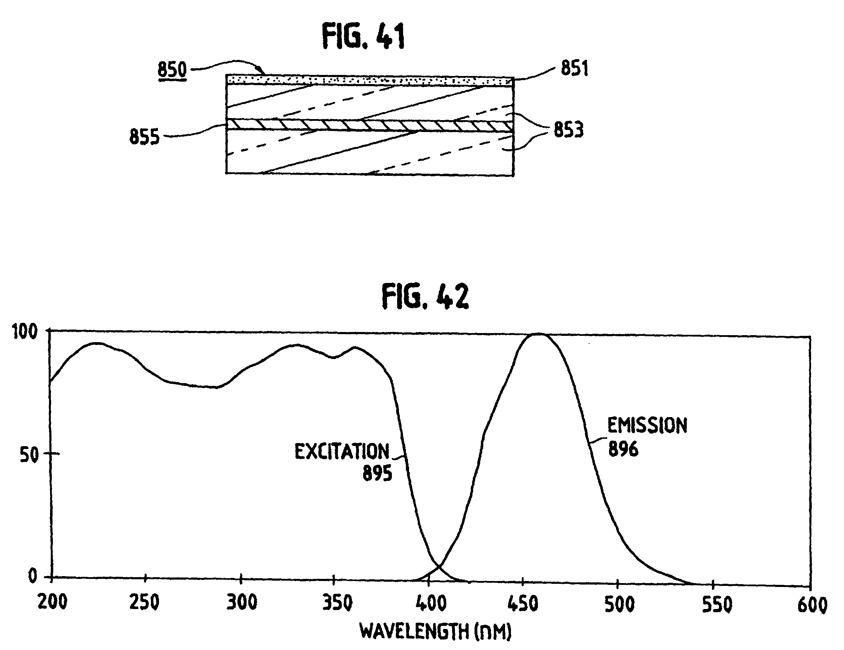

Still referring to Figure 40, the reflector assembly 806 also includes a solid reference 850 which emits radiation at the fluorophore emission wavelength when the reference 850 is moved into the optical path 833. The construction of a preferred solid reference is shown in Figure 41. Preferably, the solid reference 850 is a phosphorescent Europium source 555 sandwiched between glass plates 853 and having a 450 nM filter 851 placed over the front surface of the glass.

Referring to Figure 42, the typical excitation and emission of Europium is shown as a function of wavelength. Note from the excitation curve 895 that Europium responds to excitation radiation between 200 and about 375 nM. Thus, Europium excites at the wavelength that illuminates the fluorophores in the wells 110, i.e., about 365 nM. The Europium emission spectra 896 has a peak between about 455 and 460 nM, which substantially overlaps with the emission wavelength of the fluorophores in the wells 110 of the card 28. Thus, when the solid reference 850 is placed in the optical path 833 and the flash lamp 824 is flashed, the solid reference 850 emits radiation at an emission wavelength similar to that of the fluorophores in the wells 110 of the card 28. The solid reference 850 is thus used to compensate calibration of the output of the detectors 840, as described below. It will be appreciated that other kinds of solid references could be used besides the Europium solid reference of Figure 41. The choice of emission wavelength depends on the type of fluorophore that is used in the wells.

Referring now to Figure 39, the flash lamp cassette 816 is shown in an exploded view. The flash lamp cassette 816 includes a lamp holder 856 which receives the parabolic reflector 822 for the flash lamp 824. The flash lamp 824 is mounted in a pair of adjustment pieces 858 and secured in place by mounting screws 864. The adjustment pieces 858 receive a pair adjustment springs 860 and adjustment screws 862. The adjustment screws 862 pass through apertures in the interface block 854 and seat in the adjustment pieces 858. By loosening and tightening the adjustment screws 862, the tilt of the flash lamp 824 relative to the cylindrical parabolic reflector 822 is adjusted so as to make the long axis of the lamp 824 lie at the focus of the cylindrical parabolic reflector 822. The interface block 854 includes an aperture 857 for allowing radiation from the flash lamp 824 to pass out of the interface block 854 and off the cold mirror 826 (Figure 40) and towards the dichromatic beam splitter 830 and sample wells 110.

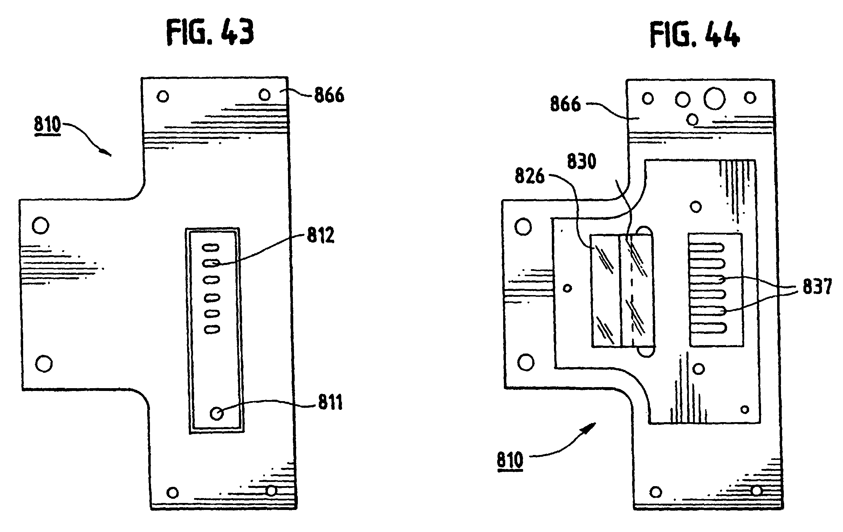

The optical head 810 is shown in Figures 43 and 44. Figure 43 is a plan view of the face of the optical head 810 as seen from the card 28 as it passes the fluorescence substation 804. The head 810 includes a head plate 866 within which the apertures 812 and an optical interrupt aperture 811 are positioned. A photodetector is placed behind the optical interrupt aperture and is used in combination with the optical interrupt aperture 112 of the card 28 to determine when the card 28 is precisely positioned within the fluorescence substation 804. Referring now to Figure 44, the rear of the head plate 866 is shown. The cold mirror 826 and dichromatic beam splitter 830 are placed within the optical head plate 866 and extend lengthwise across a set of six channels 837 positioned parallel in alignment with the middle six wells of a column of wells in the card 28. Of course, persons of skill in the art will recognize that the optical head may provide one channel for every well in the column of wells, including the wells at the extremes of the columns.

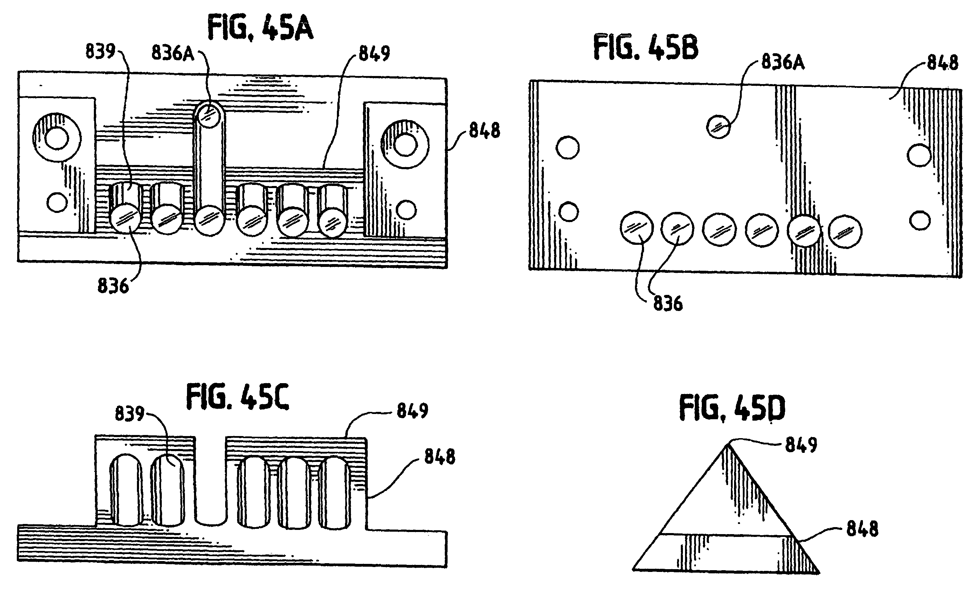

Referring now to Figures 45A-45D, the tenses 836 and 836A of Figure 40 are held by a lens holder piece 848. The lens holder 848 is shown in top plan view in Figure 45A, a bottom plan view in Figure 45B, a side view in Figure 45C, and an end view in Figure 45D. The lens holder 848 includes a peak portion 849 which fits behind the dichromatic beam splitter 830 (see Figures 40 and 44). The lenses 836 are placed at the base of curved walls 839, which cooperate with the channels 837 of Figure 44 to form an optical pathway between the lenses 836 and the detectors 840 and 844. The walls 839 prevent crosstalk between adjacent channels by blocking light from adjacent channels.

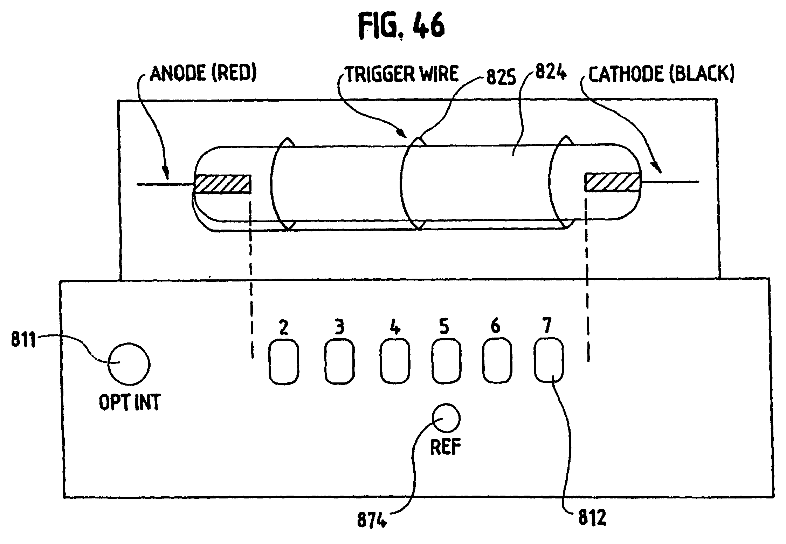

The relationship of the flash lamp 824 to the six optical channels is shown in Figure 46. The flash lamp 824 is of sufficient length such that the space between the anode and cathode of the lamp 824 is greater than or equal to the distance between the six apertures 812 in the optical head. Figure 45 also shows the relative placement of the optical interrupt 811 and the reference channel 874 relative to the six apertures 812. The flash lamp 824 has a trigger wire 825 wrapped around the surface of the lamp 824 that causes the lamp to flash. A suitable flash lamp 824 can be obtained from ILC Technology Inc. of Sunnyvale California, part no. L7752.

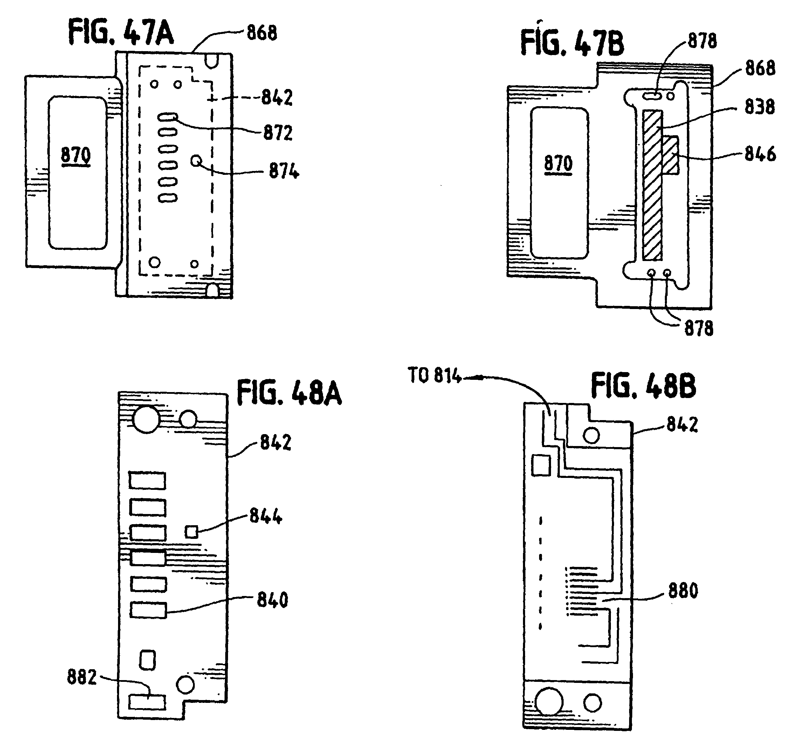

Referring now to Figures 47A and 478, the fluorescence optical system 804 includes an optical interface block 868 which mounts behind the optical head 810 and the lens holder 848. The optical interface block 868 has an open region 870 to allow radiation from the lamp 824 (Figure 40) to pass through the block 868 and off the cold mirror 826. The rear of the block 868 is shown in Figure 47A, and includes six channels or passages 872 for the radiation from the six wells in the card, and a reference channel or passage 874 for the radiation 834 from the lamp 824 (see Figure 40). The photodiode detector board 842 mounts on the rear of the block 868, as shown in dashed lines in Figure 47A. Referring to Figure 47B, the front of the block 868 includes a set of mounting pins 878 to mount the lens holder 848 to the block 868. The 445 nM bandpass filter 838 of Figure 40 is secured in the block 868, as is the 365 nM bandpass filter 846 for the reference channel 874.

Referring now to Figure 48A, the photodiode detector board 842 is shown in a plan view. The six photodiode detectors 840 are placed directly over the six channels 872 when the board 842 is mounted to the rear of the block 868 as shown in Figure 40 and 47A. An optical interrupt detector 882 is provided to detect when light from an optical interrupt LED passes through the optical interrupt aperture 112 of the card 48, indicating proper alignment of the card 28 in the fluorescence substation 804.

Referring to Figure 48B, the backside of the detector board 842 has conventional circuit traces 880 that receive the output of the photodiode detectors 840 and 844 and passes the signals to the peak detector 814 electronics.

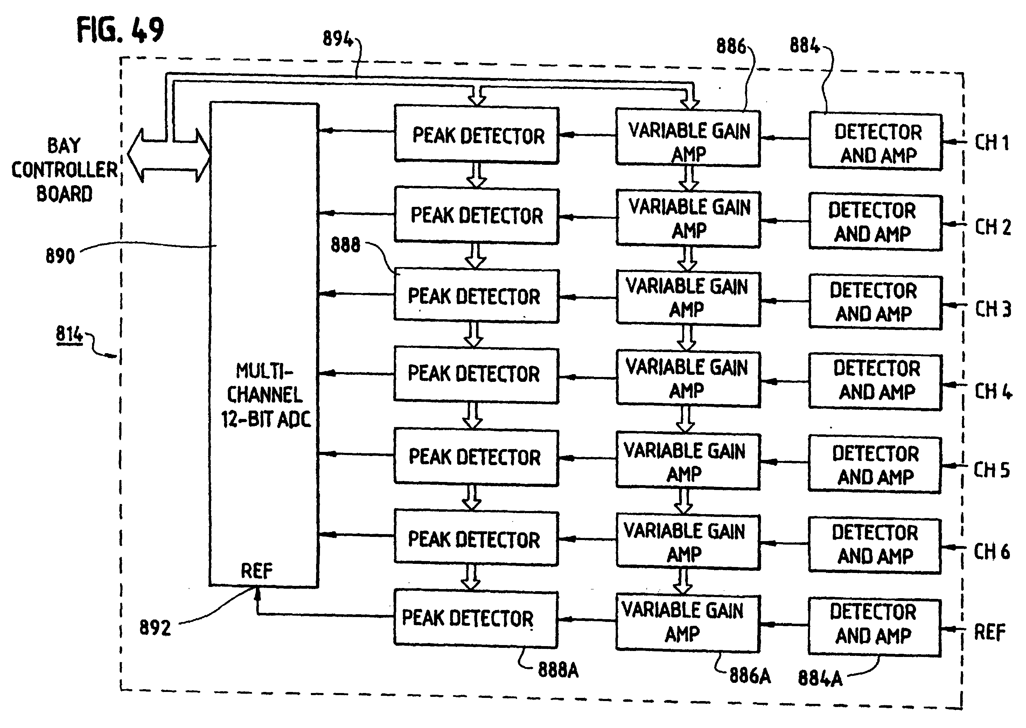

Referring now to Figure 49, the peak detector 814 of Figure 37 is shown in a block diagram form. On the right-hand side of the illustration, the six optical channels CH1, CH2, CH3, CH4, CH5, CH6 represent the inputs from the six photodiode detectors. These signals are input into a set of six detectors and fixed gain amplifiers 884 that convert the current from the photodiode to a voltage signal. The reference channel input signal is supplied to a detector and amplifier 884A. The output of the detectors and fixed gain amplifiers are input into a set of variable gain amplifiers 886. Similarly, the output of the detector amplifier 884A is input to a variable gain amplifier 886A. The variable gain amplifiers 886 and 886A supply an output signal to a set of electronic peak detectors 888.

The peak detectors 888 are all basically the same as the peak detector described in the standard textbook, The Art of Electronics, by Horowitz and Hill, at page 218, Figure 4.40. The standard circuit is modified slightly in that a transconductance amplifier is used as the first stage amplifier, instead of a standard operational amplifier. This device is a voltage-in, current-out amplifier that allows the circuit 888 to operate very fast with a minimum of signal distortion.

The output of the peak detectors 888 is buffered by a buffer amplifier and supplied to a multichannel input Analog to Digital (A-D) converter 890. The output of the peak detector 888A from the reference channel is similarly buffered and supplied to a reference input 892 in the A-D converter 890. A data bus 894 is provided which sends the output of the A-D converter 890 to a microprocessor-based controller board (not shown) which conducts the processing of the signals from the six channels and the reference photodetector. In particular, the controller board takes the ratio of the output of the six channels CH1 to CH6 divided by the output of the reference channel, to thereby compute a relative fluorescence measurements which is independent of the output of the lamp 824.

Once the card 28 is positioned in the fluorescence substation, the lamp 824 is flashed at a 25 Hz rate a number of times, such as ten times. After each flash, the A-D converter 890 computes the ratio of each channel to the reference and the controller board reads the results. After 10 flashes, -the results are averaged for each channel. This process in conducted in parallel for each of the six channels.

The data bus 894 also supplies control signals to the peak detectors 888 and the variable gain amplifiers 886. In the calibration of the detectors, the controller board adjusts the variable gain amplifiers 886 so as to provide an output signal for each channel that matches the output signal when an initial calibration of the detectors was made. For example, at the time of the installation of the machine, the channels are calibrated with a card having wells filled with a control solution, and an initial reading of the detectors is stored in a memory.

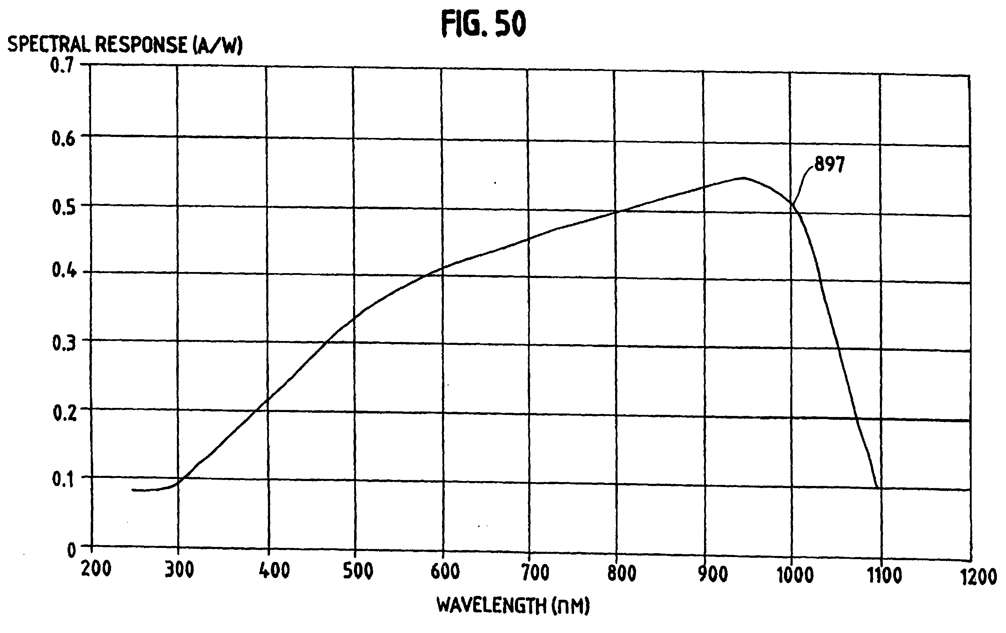

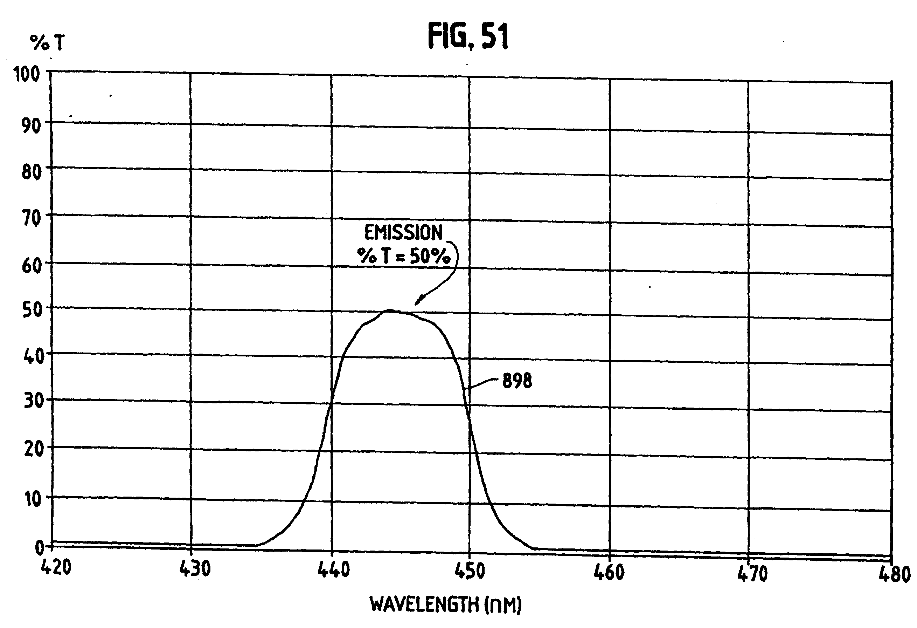

The response curve for the detectors 840 is shown in Figure 50. The response curve 897 has a typical spectral response (A/W) of between 0.2 and 0.35 in the 400 to 500 nM region of interest. The characteristics of the 445 nM pass filter 838 (Figure 40) are shown in Figure 51. The transmittance curve 898 has a maximum of 50% transmittance at 445 nM. The transmittance curve drops off sharply below 440 nM and higher than 450 nM, preventing stray radiation from impinging on the photodiode detectors 840.

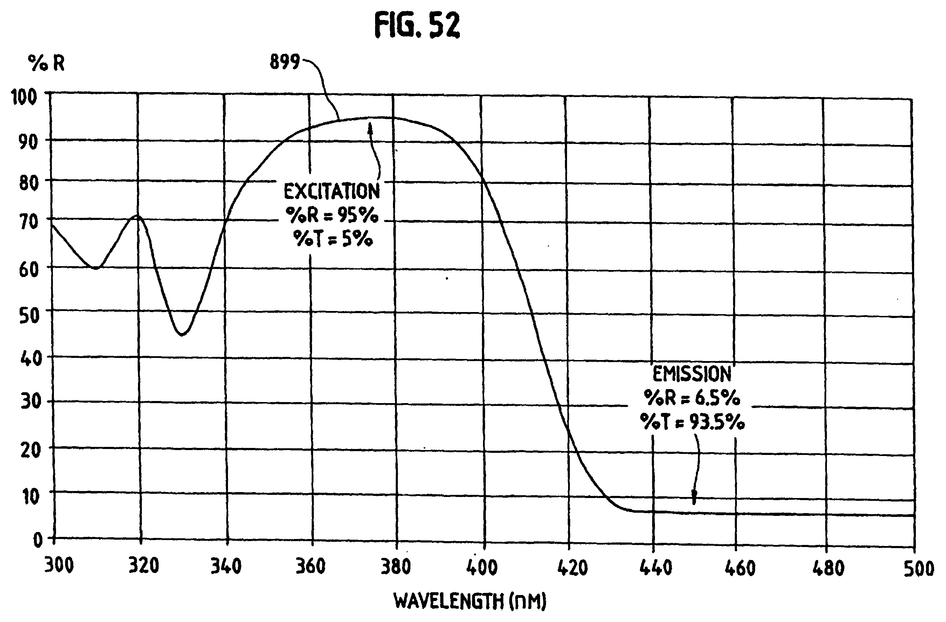

The reflectance specifications of the dichromatic beam splitter 830 of Figure 40 is shown in Figure 52. The reflectance curve 899 shows a reflectance of 95% and a transmittance of 5% at the flashlamp output wavelength of 365 nM. The reflectance curve drops sharply above 380 nM to a low of about 6.5% reflectance and 93.5% transmittance at the emission frequency of the fluorophores, about 445 - 450 nM. Thus, it can be seen from Figure 52 that the dichromatic beam splitter 830 is highly reflective to excitation radiation from the flash lamp 824, but highly transmissive to emission radiation from the fluorophore in the card wells 110 and the solid reference 850.

From the above, it can be seen that a method for conducting fluorescence analysis of a plurality of samples stored in a plurality of wells of a test sample card has been described. The wells 110 are arranged in a column of wells and containing a fluorophore emitting radiation at a emission wavelength. The method comprises the steps of:
positioning the column of wells adjacent to a linear flash lamp 824 (i.e, in the optical path) emitting radiation at an excitation wavelength;
flashing the lamp 824 so as to illuminate simultaneously the wells with the radiation at the excitation wavelength, the radiation traveling along the optical path;
transmitting a portion of the radiation from the flash lamp to a reference photodetector 844, the reference photodetector responsively generating an output signal;
receiving at a plurality of detectors 840 radiation from the wells at the emission wavelength along the optical path, the detectors responsively generating detector output signals; and
comparing the ratio of the detector 840 output signals to the reference 844 output signal to thereby determine the fluorescence of the fluorophore in the well independent of the output of the lamp. In a preferred embodiment, the lamp 824 is operated to flash a number of flashes (e.g. 10) in rapid succession so as to generate a substantial set of data points to generate fluorescence data for the wells.

### Transmittance Substation Operational Features

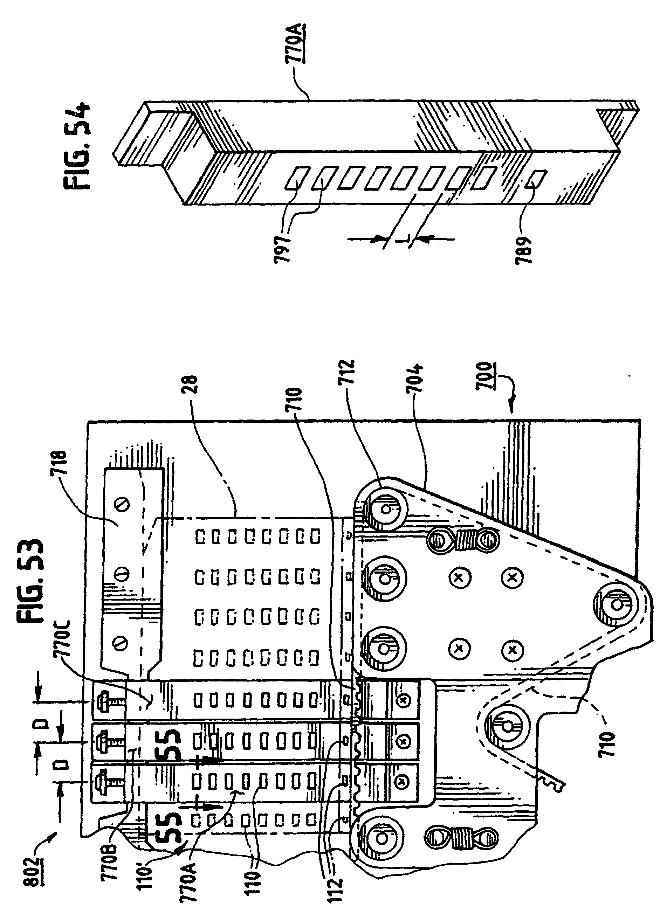

Referring now to Figure 53, a preferred transmittance substation 802 is shown in an elevational view. The substation 802 has up to three transmittance optical sources 770A, 770B and 770C, each of which comprise eight LED sources (one for each well in a column of wells) and an optical interrupt LED source. The optical sources 770A-C are separated from each other by a separation distance D equal to the separation distance between the columns of wells 110 in the card 28. Three sources 770A-C are provided so as to enable transmittance testing at three different sets of wavelengths. The source 770A is shown in perspective view in Figure 54, and has eight LEDS 797 which are separated from each other by a distance L equal to the distance between adjacent wells 110 in the column direction of the card 28. The optical interrupt LED 789 shines light throughout the optical interrupt 112 along the base of the card 28. A set of three columns of transmittance detectors are placed behind the three sources 770A-C to collect radiation from the LEDs 797 and 789 and supply transmission data to the controller board in a well-known manner.

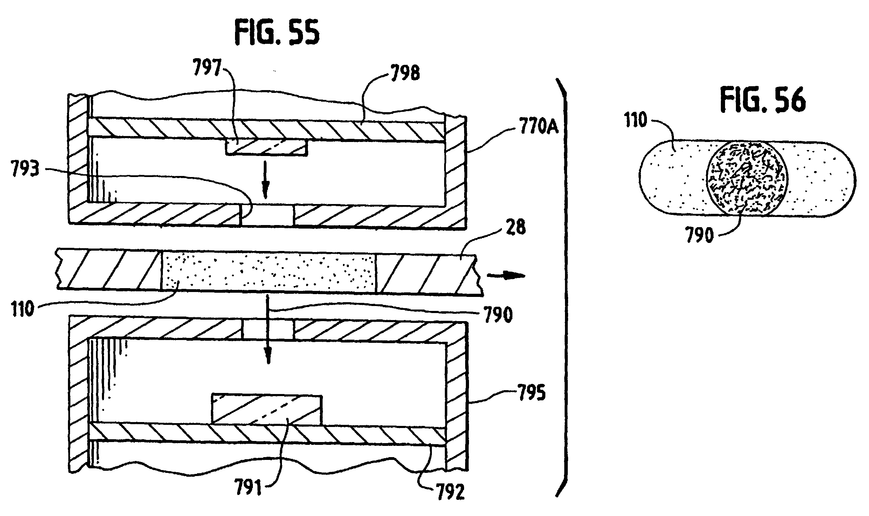

Referring now to Figure 55, the transmittance source 770A and its associated detector 791 are shown in a sectional view, taken along the lines 55-55 in Figure 53. The LED source 797 is mounted to a substrate 798 in a well known manner and transmits light 790 through the aperture 793 to the sample well 110. The radiation falls on the photodiode detector 791, which is also mounted to a substrate 792 in a well known manner. The detector 791 is mounted in a housing 795 that extends vertically directly opposite the detector 770A. The relationship between the beam 790 and the well 110 dimension is shown in Figure 56 for one of the transmission measurements, it being appreciated that the well length is longer then the beam size, enabling transmission measurements to be taken at multiple places in the well as the card is moved past the transmittance station. The construction of light source 770A and detector 795 is the same for the other two sources and detectors in the transmittance station 802.

To perform transmittance analysis of the entire well 110, the card 28 is moved rapidly in a series of small increments relative to the source 770A, for example in ten or fourteen positions, and multiple illuminations of the well 110 are taken at each position. A presently preferred transmittance illumination test is fourteen equidistant positions across the entire width of the well 110, and ten illumination events at each of the fourteen positions. This test can be performed at up to three different transmittance wavelengths for every well, resulting in a large set of transmittance data.

Referring to Figure 53, as the card 28 is moved out of the carousel 604, the first column 110' in the card is moved to the source 770C having LEDs of a first wavelength, whereby the fourteen movement steps and ten illumination events per step are performed. The card 28 is then advanced such that column 110' is positioned opposite the source 770B having LEDs of a second wavelength. The source 770B illuminates the first column 110' while the source 770C illuminates the second column. The card 28 is then moved such that the column 110' is positioned opposite the source 770A having LEDs of a third wavelength, and now sources 770A-C all operate in concert to illuminate three columns of the wells simultaneously. The card 28 is advanced to the left such that all columns are subject to transmittance illumination at the three sets of wavelengths. A column of LEDS could contain up to eight different wavelengths in one column if desired. When the last column has been illuminated by source 770A, the card 28 is moved to the fluorescence substation 804 for fluorescence testing.

Of course, the operation of the transport system 700 and transmittance substation 802 could be controlled such that the card 28 is moved throughout the station 802 from left to right instead of right to left. Further, a lesser or even greater number of transmittance sources 770 could be used if desired.

### Stacking Test Sample Card Disposal Station Operational Features

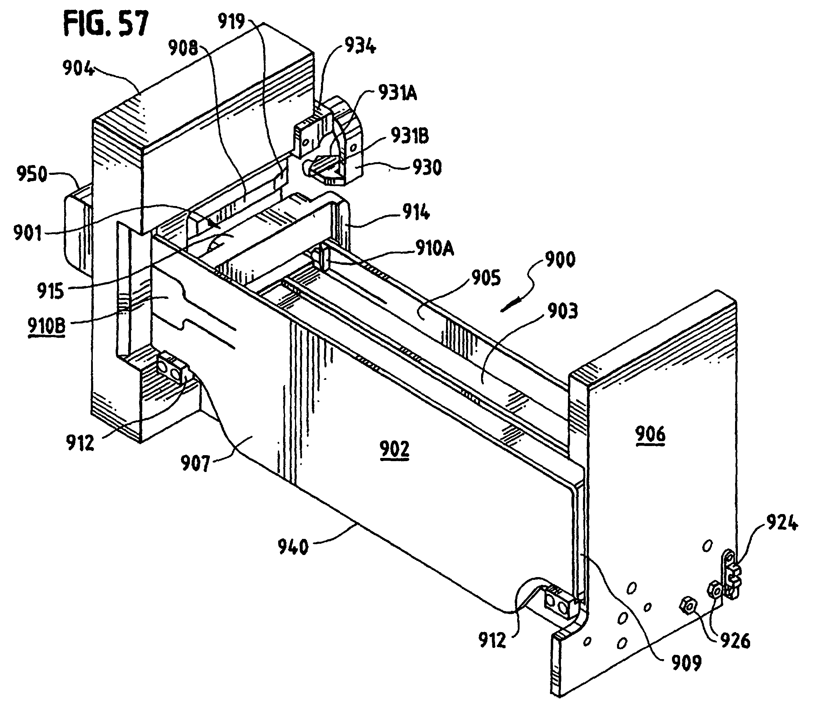

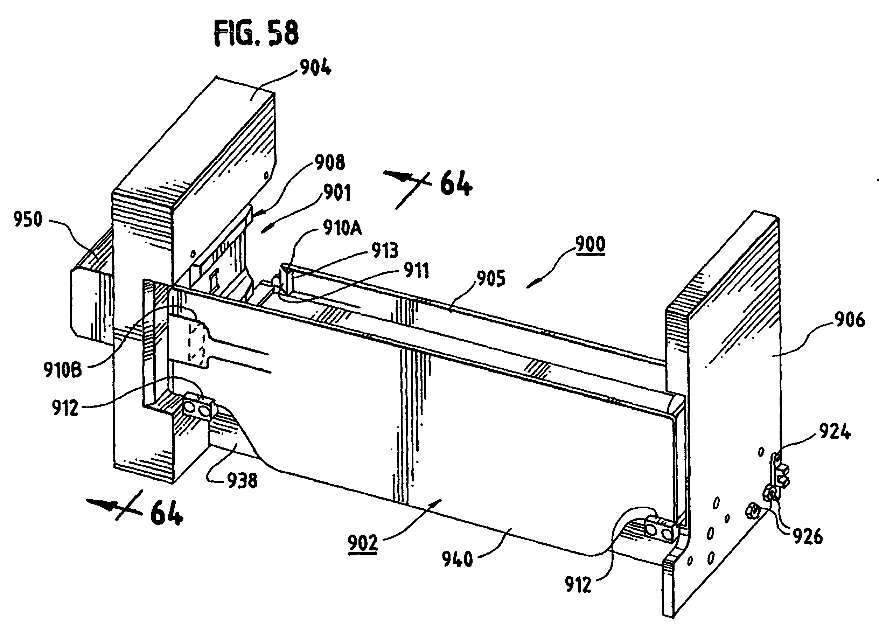

Referring to Figure 57, the stacking test sample card disposal station 900 is shown isolated from the machine 20 in a perspective view, as seen from above and in the same perspective as in Figure 2. Figures 58-61 show the station 900 in various additional perspective views, both above and below the elevation of the magazine 902, in order to better illustrate the various components of the station 900.

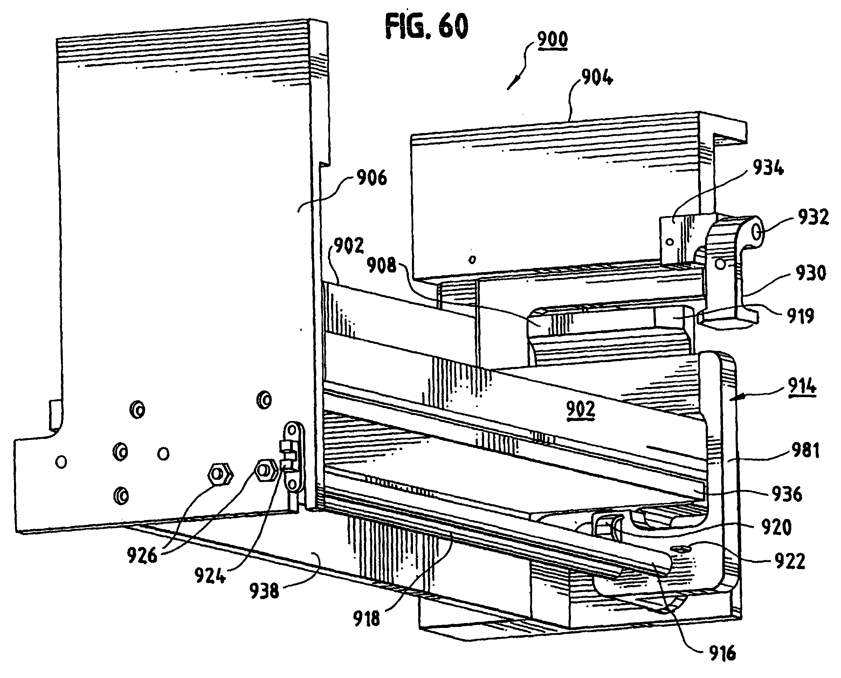

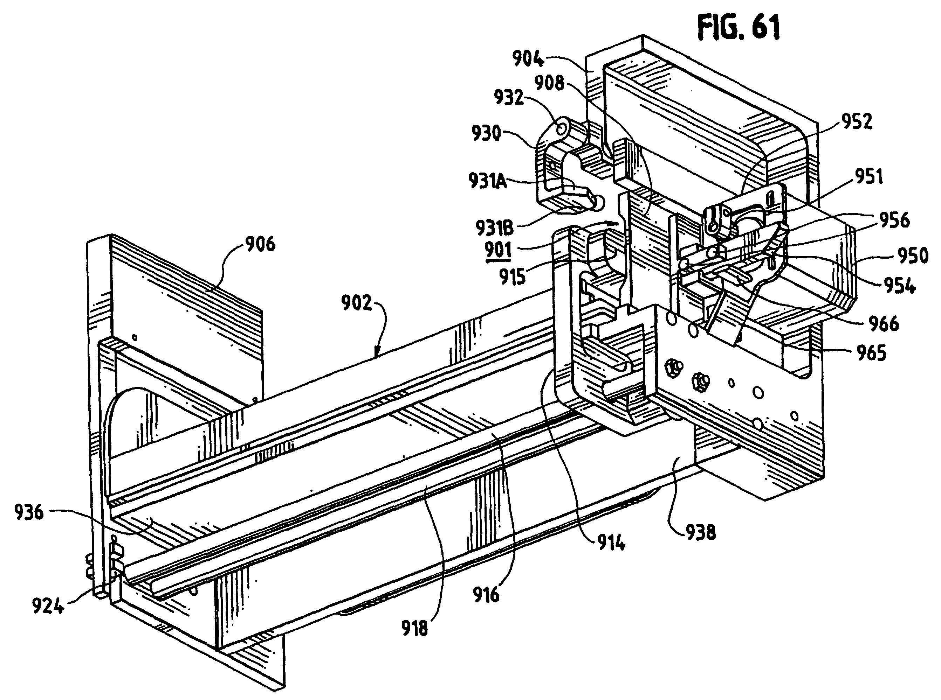

Referring to these figures, and in particular to Figure 57, the station 900 has a left or front support 904, a right or rear support 906, and a removable magazine or card tray 902 which is placed between the front and rear supports 904 and 906 respectively. The magazine 902 is manually removable from the front and rear supports 904 and 906. The magazine 902 has a bottom surface 903, side portions 905 and 907 and an end portion 909 adjacent to the rear support 906. When installed in the station 900, the magazine rests on a horizontal support 936, as best seen in Figures 60 and 61.

When a card is ready to be stacked in the station, it enters the station 900 at a card entrance slot 901. A push plate 908 is provided opposite the front end of the magazine 902 on the other side of the card entrance slot 901. The push plate 908 reciprocates back and forth within the card entrance slot 901 between a retracted position, shown in Figure 57, and an extended position. When the push plate 908 is in the retracted position, a card 28 may be inserted into the slot 901 from the sample card transport station 700 (Figures 2 and 31).

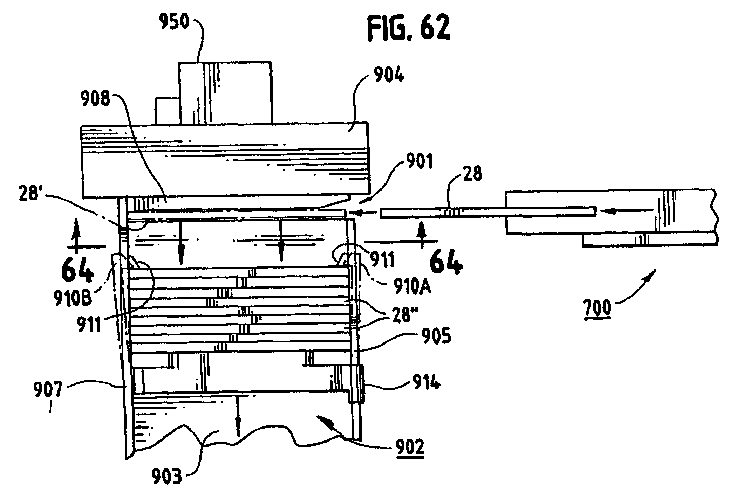

A pair of resilient snap elements 910A and 910B are molded into the sides 905 and 907 of the magazine 902 adjacent to the card entrance slot 901. When the push plate 908 is moved to its extended position, the card 28 in the card entrance slot 901 is pushed by the push plate past the snaps 910 and stacked upright between a pressure plate 914 and the snaps 910. If there are already cards loaded in the magazine 902, the card is stacked in the stack of cards located between the snaps 910 and a pressure plate 914, as shown in Figure 62 and described in greater detail below.

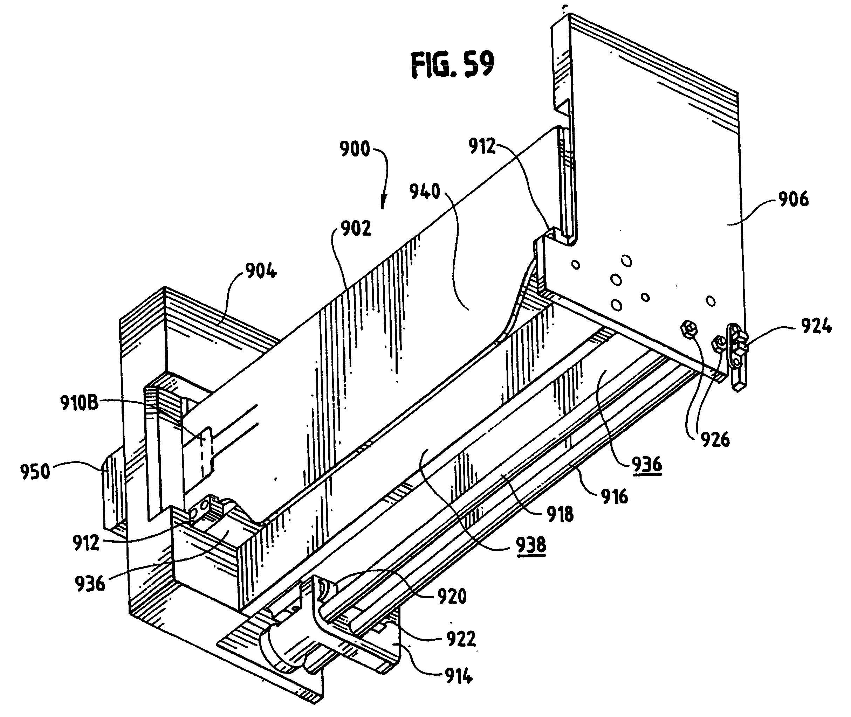

The pressure plate 914 has a card contact portion 915 that is positioned above the bottom of the magazine 902 at approximately the elevation of the middle portion of the cards. The pressure plate 914 is movable along a pair of pressure slides (or guide rails) 916 and 918 (Figure 59), such that the pressure plate 914 is moved towards the rear 909 of the magazine 902 as additional cards are stacked in the magazine 902.

A pair of magazine retainers 912 are mounted to a horizontal support member 936 (Figures 59, 61, 65). When the magazine 902 is mounted to the station 900 as shown in Figure 57, the retainers 912 securely maintain the magazine 902 between the front and rear supports 904 and 906. The magazine 902 has a handle portion 940 in the side 907 which allows the user to grasp the magazine 902 and slide it over the retainers 912 to thereby lift the magazine 902 out of the station 900 for disposal of the cards stacked in the magazine 902. The handle 940 is located at the lowermost portion of the magazine side 907 so as to prevent accidental contact with one of the cards 28 during the magazine removal operation.

Referring to the right hand side of Figure 57, a pair of nuts 926 are provided to secure the pressure slides 916 and 918 against the rear support 906. An optical sensor 924 is mounted to the rear support 906, adjacent to and below the end 909 of the tray 902. The sensor 924 detects when the pressure plate 914 is positioned all the way at the rear of the magazine 902, indicating a full magazine 902.

Referring now to the left-hand side of Figure 57, a stepper motor 950 is mounted behind the front support 904. The motor 950 moves the push plate 908 back and forth between the extended and a retracted positions relative to the card entrance 901 as described above. The push plate 908 has an angled card slide surface 919 which facilitates the insertion of the card into the slot 901. A latch 930 is mounted by a bracket 934 to the front support 904. The latch 930 has a card slide surface 931A which assists the card to easily enter the card entrance slot 901, causing the latch 930 to pivot about the pivot pin 932 (Figure 61). The weight of the latch 930 causes a second card contact surface 931B to push the card 28 into the slot 901, using a wedging effect to ensure that the card 28 is free of the test card transport station 700 and is all the way into the stacking disposal station 900.

Referring now to Figure 58, the stacking disposal station 900 is illustrated in a perspective view with the pressure plate 914 and latch 930 of Figure 57 removed. The snap 910A has a slanted surface 911 and a rear surface 913. When the push plate 908 pushes the card against the snap 910A, the card engages the slanted surface 911 and forces the resilient snap 910A to flex outwardly such that the card is pushed past the snap element 910A, at which point the resilient snap 910A returns back into the position shown in Figure 58. In this position, the card is pushed against the rear surface 913 of the snap 910A by the pressure plate 914 (Figure 57). The structure and operation of the snap element 910B is the same as that just described for the snap element 910A.

Referring now to Figure 59, the stacking disposal station 900 is shown in a perspective view slightly below and towards the support 906 of the station 900. The tray retainers 912 are mounted to the horizontal support member 936 which supports the magazine 902. The horizontal support member 936 is mounted to the front and rear support members 904 and 906 respectively by screws or other suitable fastening devices. A vertical reinforcing support member 938 is provided to support the mass of the horizontal support member 936 and the magazine 902.

The pressure plate 914 is mounted to the device 900 by a pair of pressure slides 916 and 918 which extend transversely underneath the magazine 902. The pressure slides 916 and 918 are received by complimentary apertures in the pressure plate 914. A constant force spring 920 comprising a metal coil is provided with a first end fixed relative to the left support 904 and a second end which is received in a pocket in the pressure slide 914. As the magazine 902 is loaded with cards one by one, the pressure plate 914 is moved stepwise towards the right towards the rear 909 of the tray 902. However, the constant force spring 920 continually biases the pressure plate 914 forward towards the snaps 910 with a force independent of the position of the pressure plate 914 within the magazine 902 (and thus independent of the number of cards loaded in the magazine).

Referring now to Figure 60 the station 900 is shown again from below and slightly to the side of the station 900, on the opposite side shown in Figure 57. The pressure plate 914 has a flag element 922 extending outwardly from its rear surface. When the magazine 902 is fully loaded, the pressure plate 914 has been moved to end of the magazine 902, and the presence of the flag 922 adjacent to the rear support 906 is detected by an optical detector 924. As best shown in Figure 61, the optical detector 924 is placed in the rear support 906.

Referring to Figure 61, the pressure plate 914 has a card contact surface 915 which pushes against the central portion of the card inserted into the card slot 901. Figure 61 also shows the drive assembly for the push plate 908. The push plate stepper motor 950 is mounted to a push slide bracket 952. The motor 950 has a pinion gear 951 having a set of teeth that engage complimentary teeth on the upper edge of a push rack 954. The push rack 954 is mounted to the rear of the push plate 908 via screws 956 and slides back and forth on the push slide 952. The operation of the motor 950, pinion gear 951 and push rack 954 causes the push plate 908 to move back and forth in the card entrance slot 901 between a retracted position shown in Figure 61 and an extended position, in which the push plate 908 pushes a card past the resilient snap elements 910A and 910B.

Figure 62 is a top plan view of the front portion of the magazine 902, illustrating the stacking operation in greater detail. When the test sample card 28 is loaded into the card slot 901, it is located In a position 28' shown in dashed lines in Figure 62. The motor 950 causes the push plate 908 to move to its extended position, pushing the card 28 against the slanted surface 911 of the resilient snap elements 910A and 910B. This causes the snaps 910 to flex outwardly, as shown in dashed lines, pushing and stacking the card 28 against the other cards 28 " that had been positioned between the snap elements 910 and the pressure plate 914. The force of the motor 950 pushes the pressure plate 914 towards the rear of the magazine 902. After the card 28 has been loaded into the magazine 902, the motor 950 operates to retract the push plate 908 thereby permitting another card 28 to be loaded into the card slot 901.

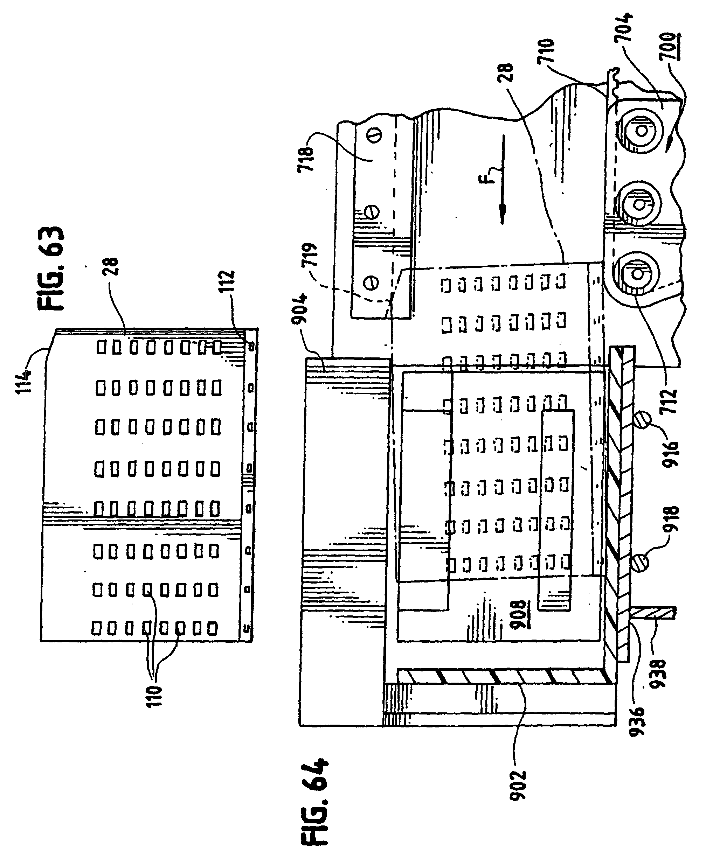

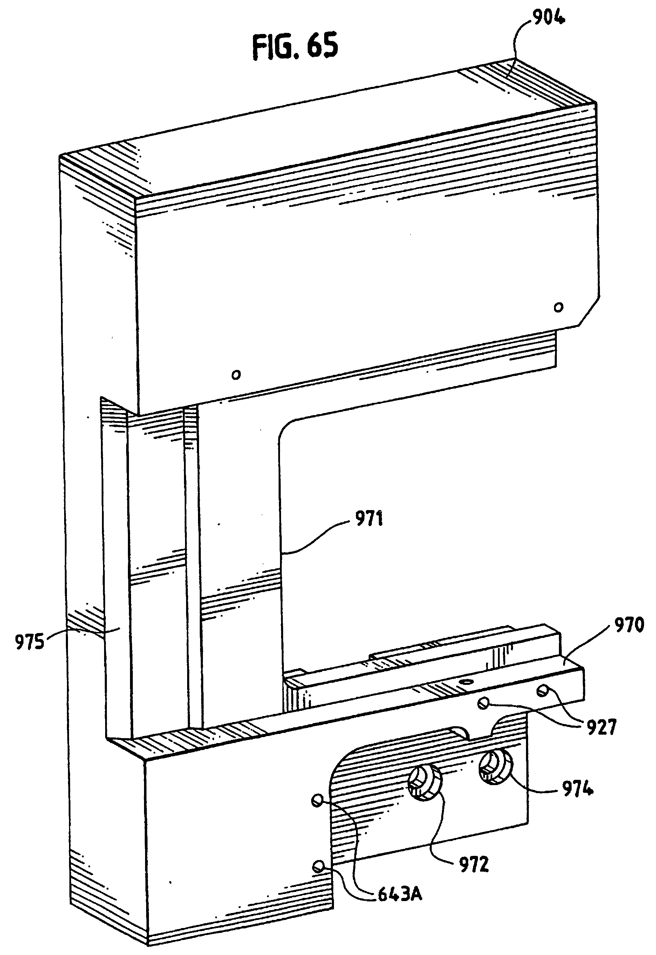

The card 28 for the illustrated embodiment is shown in an elevational view in Figure 63. The card 28 has a plurality of sample wells 110 which are subject to the optical analysis in the reading station 800. A slanted shoulder 114 is provided on the upper edge of the card 28. The loading of the card 28 into the card entrance slot 901 is shown in Figure 64, which is a sectional view of the station 900 along the lines 64-64 of Figure 62. As described above, the sample card transport station 700 has a stepper motor that drives a drive belt 710 along a series of rollers 712 mounted to a cover plate 704. The card 28 is snugly positioned between the drive belt 710 and a ledge 718 mounted to a bulkhead. The ledge 719 has an intemal card slot that receives the top edge of the card 28. The card slot has a slant portion 719 at the extreme left-hand end of the ledge 718. When the card 28 is moved past the end of the cover plate 704 onto the tray 902, the slanted shoulder 114 of the card 28 is placed into contact with the slant portion 719. The tray 902 is slightly lower than the elevation of the belt 710 at the top of the cover plate 704, assisting the placement of the upper shoulder 114 against the slant 719. A resultant pinching force F is imparted to the card 28 by the drive belt 710 and slant portion 719 in the direction of the magazine 902, causing the card 28 to snap out of the drive assembly 700 into the slot 901.

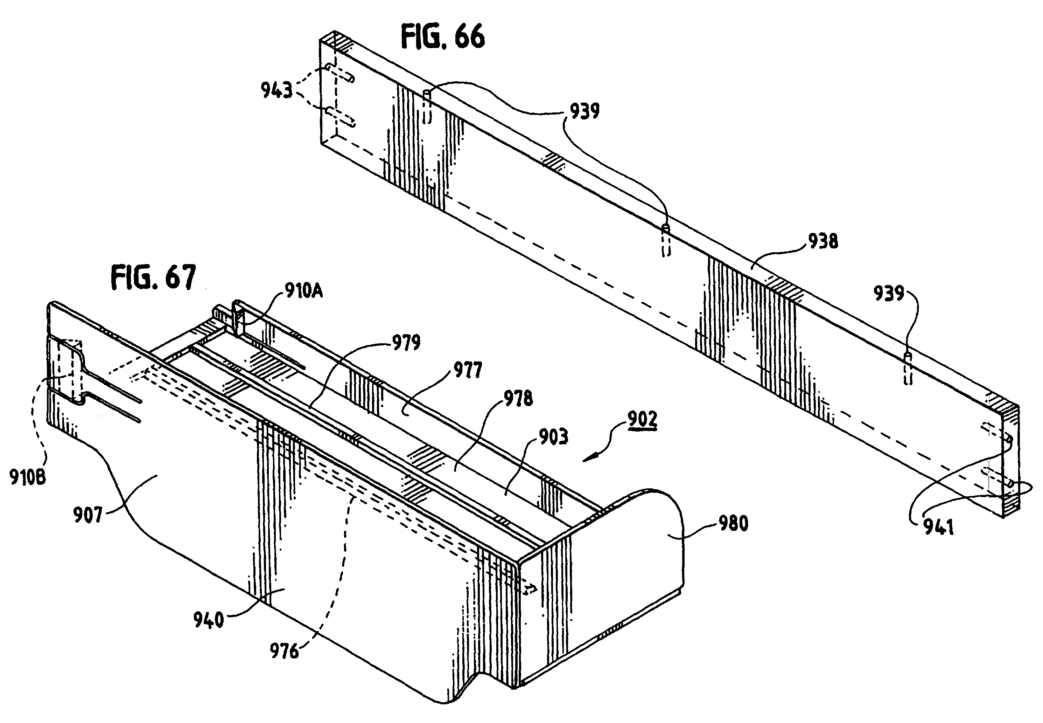

Referring now to Figure 65, the left or front support 904 of Figure 57 is shown isolated in a perspective view. The left support 904 includes a pair of through holes 972 and 974 which receive the guides 918 and 916 for the pressure plate 914. A pair of mounting holes 943A are provided for the vertical support member 938 shown in Figures 59 and 66. A pair of mounting holes 927 are provided to secure the horizontal support member 936. The support 904 has a ledge 970 which supports the far left hand edge of the magazine 902. The tapered portions 975 on the side of the support 904 assist in the easy insertion of the magazine 902 into the station 900. The support 904 has a wall portion 971 which defines an opening for the push plate 908.

The magazine 902 is shown isolated in a perspective view in Figure 67. The location of the large snap 910B on the left hand side 907 of the magazine 902 is set so it does not interfere with the stub of the transfer tube 32 that may be present on the exterior surface of the card 28. The snap elements 910A and 910B are designed so that they are a molded part of the magazine sides. The bottom surface 903 of the magazine 902 has a pair of raised ridge elements 976, 979 which support the card 28 slightly above the bottom surface 903 of the magazine 902. The magazine is designed to hold a small amount of fluid if a card were to leak. Preferably, the magazine 902 is made out of polycarbonate. This material can withstand high temperatures, can be autoclaved, and has excellent flexural properties for the snap elements 910A and 910B. Polycarbonate can be deformed without cracking. Therefore it is not likely that a snap 910A and 910B will break as the cards are pushed over the snaps.

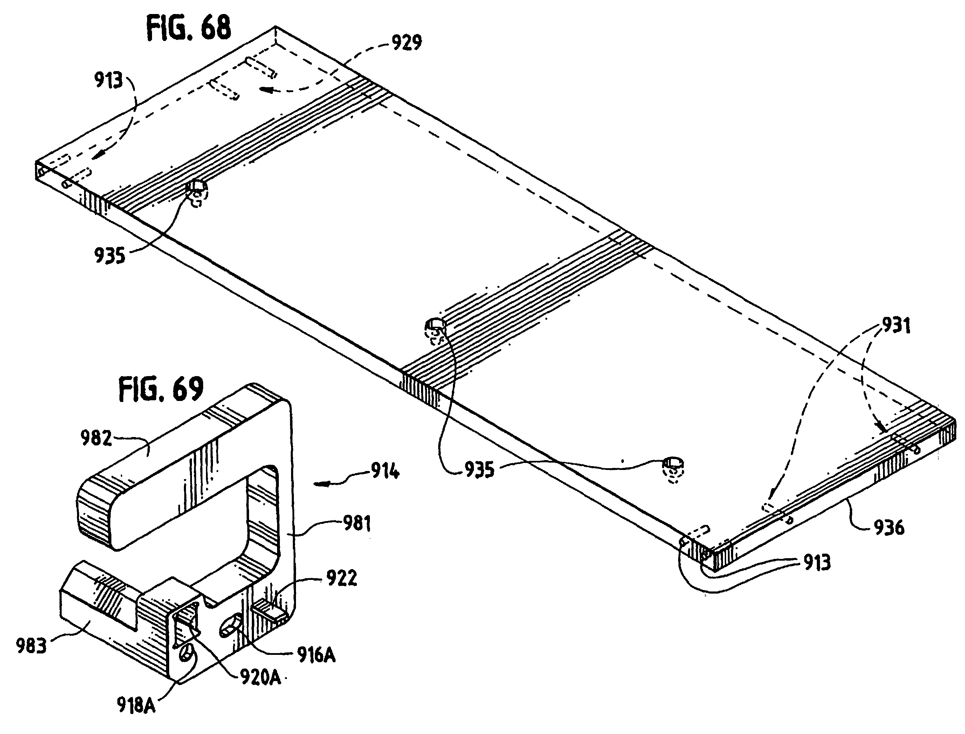

Referring now to Figure 66, the vertical support 938 is shown isolated. The support 938 has a pair of holes 943 that receive mounting screws for mounting the support 938 to the left support 904. The holes 941 are provided for mounting the support 908 to the rear support 906. The holes 939 are for fastening the support 938 to the horizontal support 936. The horizontal support is shown isolated in Figure 68, and includes a set of three recesses 935 for a fastener attaching the vertical support 938 to the horizontal support 936. The horizontal support has a set of holes 929 that receive screws for mounting the horizontal support 936 to the left or front support 904, and a set of holes 931 for mounting the support 936 to the rear support 936. The holes 913 receives the screws for the magazine retainers 912 of Figure 57.

Referring now to Figure 60 and 69, the constant force spring 920 is installed in the pocket 920A in the pressure plate 914, thus eliminating an axle for the spring 920. The spring 920 is located such that it helps prevent binding of the pressure plate 914 by providing a moment in the opposite direction of the moment caused by a card pressing against the card contact surface 915 of the pressure plate 914. A hole 916A in the pressure plate 914 for the guide 916 is provided so that the parallel alignment of the two guide rails 916 and 918 is not critical. The slides 916 and 918 are positioned under the assembly 900 so that they are away from the user.

Referring to Figures 69-71, the pressure plate 914 has a card contact arm 982 having a card contact surface 915, a slide collar 983 receiving the pressure slide guide rail 918 in the aperture 918A, and an integral body portion 981 connecting the slide collar 983 to the card contact arm 982. When the pressure plate 914 is installed, the card contact portion 982 is located above the bottom portion of the tray 902, with the body portion 981 extending on the outside of the magazine 902 adjacent to the side portion 905. When the magazine 902 is inserted in the station 900, the side 905 of the magazine 902 slips undemeath the card contact arm 982.

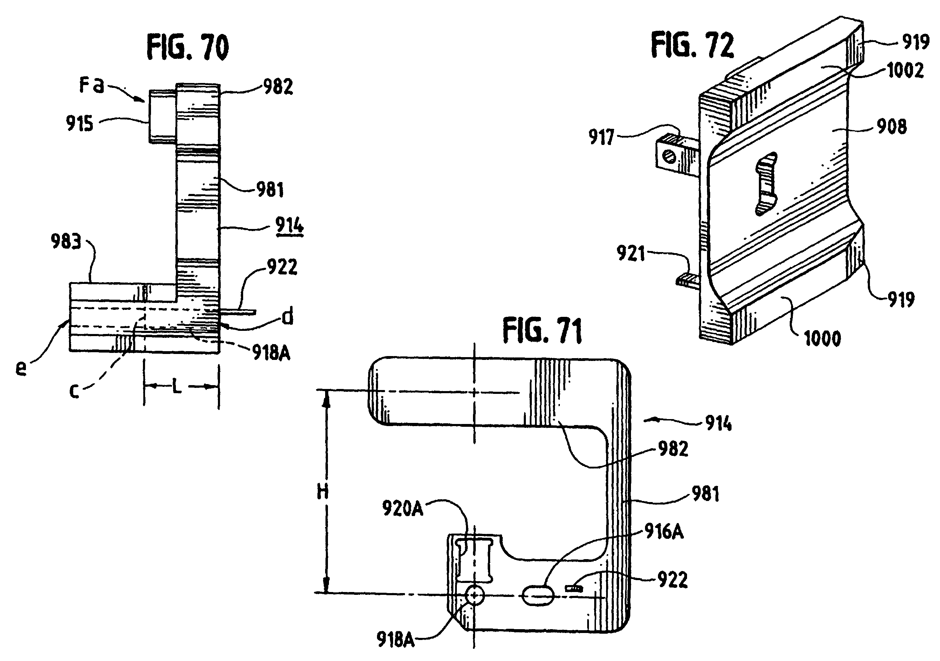

A force analysis of the slide and pressure plate assembly of the Figures 59 and 70 dictates that, for the pressure plate 914 to move towards the rear of the tray 902 and not bind, the force imparted by the push plate 908 onto the card contact surface 915, Fa, must be greater than the frictional forces applied to the pressure plate 914 at points d and e. The frictional forces at d and e are supplied by the moment created around point C, the center of the collar 983. The length L of the surface within the collar portion 983 that bears on the slide rod 918 is chosen to be sufficiently long such that the frictional force between the collar portion 983 and the slides 916 is always less than the force applied by the push plate 908 onto the cards 28. This prevents binding of the pressure plate 914. The clearance fit between the pressure plate 914 and pressure slides 916 and 918 is an ANSI preferred hole basis metric clearance fit, no. H8/f7. In a preferred embodiment, the pressure plate 914 material is chosen to be White Acetron GP having a coefficient of friction of 0.25. The plate 914 has a height H between the center of the aperture 918A and the center of the card contact surface 915 of 59 mm, and the length L must be greater than 14.75 mm, and preferably is 21.4 mm. The ratio of the collar 983 length (distance from d to e) to the distance H between the slide rail and card contact arm is chosen such that the force of friction between the collar 983 and rail 918 will always be less than the force applied by the push plate 908, thereby preventing the pressure plate 914 from binding.

The guides 916 and 917 are preferably stainless steel shafts to prevent corrosion, because parts of the assembly may be chemically contaminated. Preferably, the pressure plate 914 is selected of a light color material to help determine whether cleaning is necessary.

The push plate 908 is shown isolated in a perspective view in Figure 72. The push plate is provided with upper and lower card contact surfaces 1002 and 1000 which contact the top and bottom portions of the card 28. The push plate 908 is made from a light-colored dimensionally stable plastic with a coefficient of friction, such as White Acetron GP. The upper and lower slanted surfaces 919 facilitate the easy insertion of a card 28 into the card slot 901 shown in Figure 57. Extending outwardly from the back side of the push plate 908, a horizontally extending securing member 917 is provided for mounting the push plate from the push rack 954, as shown in Figure 61. Preferably, the push rack 954 is also made from White Acetron GP.

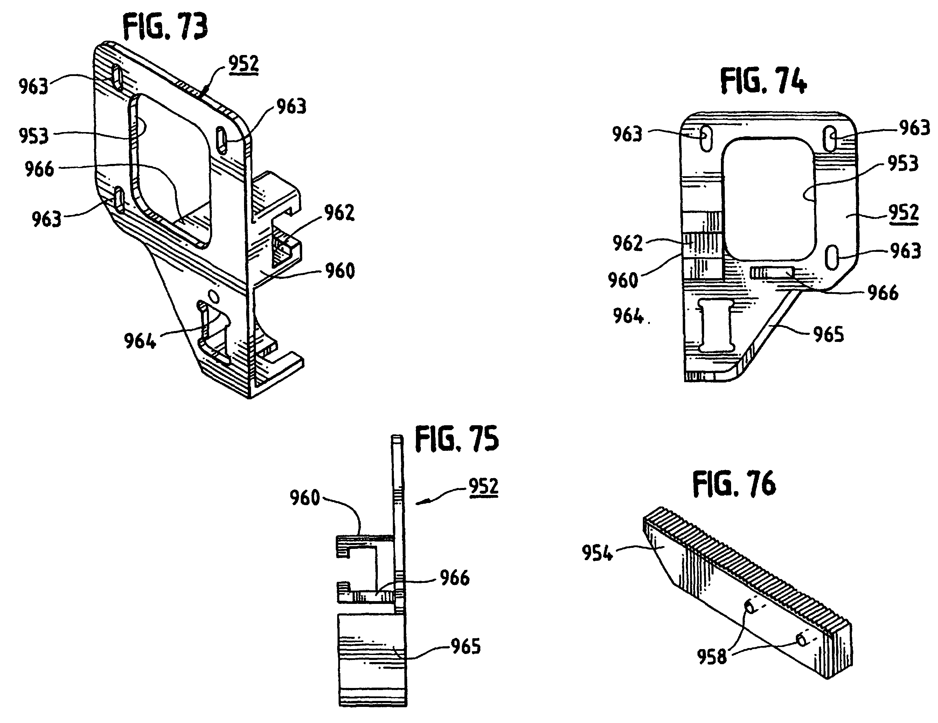

Referring to Figures 61 and 73, the push slide 952 has a central opening 953 which receives the push plate motor 950. A set of 3 slotted motor mount holes 963 are provided in the push slide 952. The slotted mounting holes 963 allow adjustments to the motor 950 position so that the gear 951 of the motor 950 will not make noise. The push slide 952 also contains an optical sensor mounting aperture 964 which receives an optical sensor (not shown) to detect when the push plate 908 is in a retracted position. The push slide 952 also has a C-shaped push rack slide 960 which defines an opening 962 receiving the push rack 954. A horizontal support surface 966 is provided to support the aft end of the push rack 954 as it is slid back and forth by the motor 950 within the C-shaped slide 960. The push slide 952 is shown in an elevational view in Figure 74. The push slide 952 is shown in a side view in Figure 75. Referring to Figure 72, a flag element 921 extends horizontally from the rear surface of the push plate 908. When the push plate is in its retracted position, the flag element 921 is detected by the optical sensor installed in the aperture 964 of the push slide 952.

Referring to Figure 76, the push rack 954 has a set of teeth which are engaged by the pinion gear 951 of the motor 950. A set of mounting holes 958 are provided to secure the push rack 954 to the mounting member 917 on the push plate 908 (Figure 72).

In the preferred embodiment, the firmware code of the station 900 is designed to count the number of steps that the stepper motor 950 takes to move the push plate 908 from its retracted positions to its extended position, and count the number of steps to retract the push plate 908 back to its retracted position. This counting process serves the function of detecting an obstruction in the card slot. For example, the firmware code may count one hundred fourty steps to move the push plate 908 to its extended position. When the push plate 908 is retracted to its retracted position, the program counts the number of steps to move the push plate 908 back until the sensor detects the flag 919 on the rear of the push plate 908. The code then compares the number of steps out to the number of steps in. If they do not match, the cycle is repeated, with the assumption that there must be a jam if the number of steps do not match. If the number of steps do not match after ten cycles then the procedure is aborted and the user notified of the jammed condition. Preferably, the gear size for the motor 950 is selected to maximize the motor speed while minimizing the push plate speed, thereby providing a relatively high number of counts. The electronics that controls the motor 950 uses a chopper driver to provide the necessary torque.

### Cassette Identification and Bar Code Reading Systems

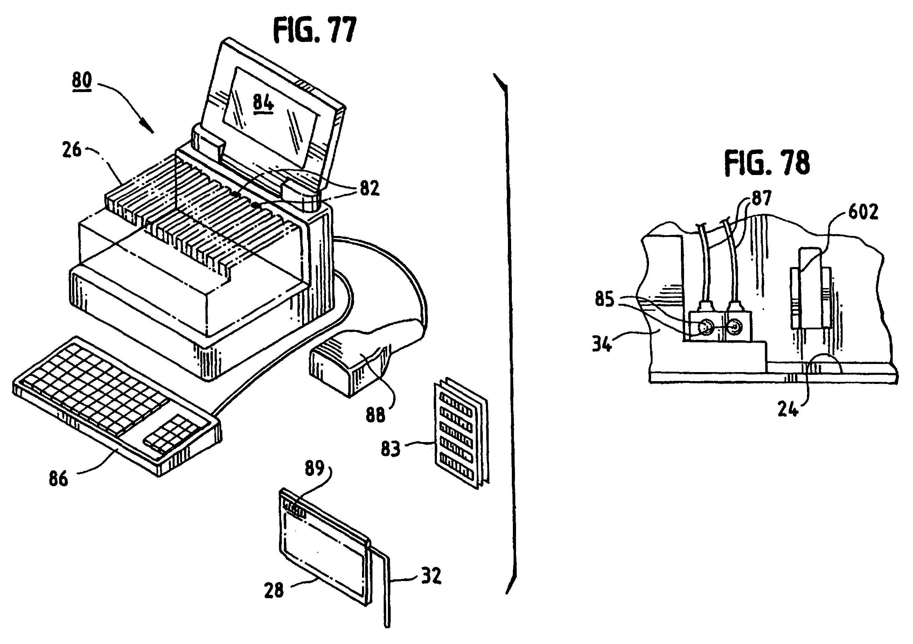

Referring to Figure 77, in a preferred embodiment a stand-alone cassette identification station 80 is provided to facilitate the processing of the cards 28 by the machine 20. The station 80 consists of a computer terminal having a monitor 84 and attached keyboard 86 and bar code reader 88. A conventional host CPU and memory are contained in the station 80, which are not shown. The host CPU runs a menu-driven software program that prompts a technician to enter patient or sample information that is to be associated with each of the cards 28. The station 80 has a data port allowing it to communicate with the machine 20 or another computer.

The station 80 receives patient and sample data from the technician via a bar code scanner and/or keyboard 86, stores the information in its memory, and associates that information with the bar code 89 that is applied to the top of the test sample cards 28. The station 80 can have a bar code reader 88 that reads the bar codes 89 applied to the cards 28. After the cards have been read, the user is prompted to scan or enter the patient or other information that is associated with the cards 28. Bar code cards 83 may be provided with the most commonly entered data to minimize the typing in of information. After each card 28 has been read and the information associated with it loaded into the computer at the station 80, the technician loads the card 28 into a cassette 26.

The base portion of the station 80 below the screen 84 is given a molded contour so as to snugly receive the cassette 26 and position the cassette 26 as shown, such that the two touch buttons mounted on the rear of the cassette 26 are placed into touching contact with the touch button data writing terminals 82 for the station 80. After all the cards 28 have been loaded into the cassette, the information associated with all the cards is loaded onto the touch buttons via the terminals 82. The cassette 26 is now ready to be loaded into a boat 22 in the machine 20.

Referring to Figure 78, the touch buttons are read at an information retrieval station in the machine comprising touch button reader terminals 85 attached to the side of the center mount 34. As the boat 22 is moved along the base pan 24, the touch buttons come into contact with the reader terminals 85. The data from the touch buttons is passed via leads 87 to a central processing unit for the machine 20, which associates the data with the optical data from the optics station 800.

Referring to Figures 3 and 79, the machine 20 further includes a bar code reading station 90 to read the bar codes 89 applied to the cards 28. The bar codes are read by a bar code reader 90 mounted to a bar code reader support structure 92 affixed to the center mount 34. The bar codes are applied to the cards 28 in a location such that when the cards 28 are loaded in the cassette 26, the bar codes are along the "top" of the card 28, where they can be more easily read.

As the boat 22 and cassette 26 are advanced to the left along the front of the machine 22, they pass underneath a card separation device 94 consisting of wheel 94 mounted to a support piece 96. The support piece 96 is mounted via a pin 98 to a bulkhead attached to the center mount 34. The support piece 96 is allowed to pivot about the pin 98 as shown by the arrow in Figure 79, permitting the wheel 94 to ride up and over the cards as the cards 28 pass underneath the wheel 94. In the process of riding up and over the cards 28, the wheel 94 rocks or pushes the cards into a slanted position as shown in Figure 79, where they can be more easily read by a bar code reader 90. Referring to Figure 79 in particular, as card 28C passes under the wheel 94, the wheel pushes the card 28C in its slot to the slanted orientation shown. The wheel 94 rides up and over the top of the card and performs the same operation on the next card 280, pushing card 28D in to the position 28E shown in dashed lines. The wall 70 height and distance between adjacent walls 70 in the cassette 26 is chosen so as to permit enough rocking motion for the cards 28, but not so much so as to create too much play in the positioning of the cards 28 in the cassette 26.

The bar code reader 90 station is positioned along the front side of the machine between the loading station and the diluting station 200. In this position, the reading station is able to check the validity of the test prior to filling the card with the sample. This allows the test sample to be saved in the event of an operator or instrument error.

Thus, an identification system for a card 28 processed by a sample testing machine 20 is provided, with the card 28 having a machine-readable indicator (e.g., bar code 89) applied thereto, comprising a cassette 26 containing a plurality of the cards 28, a reader 90 for the machine-readable indicator 89 placed in the machine 20, and a card separation device 94 in the machine 20 for separating the cards from each other as the cassette 26 is moved relative to the card separation device 94, with the card separation device 94 assisting the reader 90 to remotely read the machine readable indicator 89 applied to the card.

The card separation device 94 comprises a body positioned at approximately the elevation of the top portion of the cards 28 when the cards are loaded in the cassette and the cassette 26 is placed inside and moved relative to the device 94 in the machine. The card separation device 94 pushes the cards to a slanted position in the card slots of the cassette 26 as the card separation device and cassette/card combination move relative to each other, the slanted position facilitating the remote reading of the cards 28 by the card reader 90.

The card separation wheel 94 is pivotably mounted to the machine permitting the wheel 94 to move up and down in a vertical direction with respect to the cards 28, so as to assist the cards 28 to pass below the wheel as the cassette 26 is advanced past the wheel 94.

Further, an identification system for a sample testing machine 20 is provided comprising a a machine-readable indicator 89 identified with each of the test sample cards 28, a machine-readable memory storage device (e.g., touch buttons) applied to said cassette 26 carrying the cards in the machine 20, an information loading station 80 reading the machine-readable indicators 89 for a plurality of test sample cards to be loaded into the cassette 26 storing information regarding the test sample cards onto the machine-readable memory (e.g. touch button) and an information retrieving station 85 in the sample testing machine retrieving information stored in the machine-readable memory storage device.

### User Interface

While the foregoing discussion and illustrations for the machine 20 have described in detail of the construction and operation of the machine 20, it will be understood that the machine per se has a user friendly and attractive panel covering for aesthetic and safety purposes. A user interface connected to the machine's host CPU is preferably included on the front panel, and includes a LCD (liquid crystal display) screen and touch pad for presenting instrument status information to the operator. It is also used for things such as start tests, request information, and perform instrument diagnostics.

## Claims

1. A machine for automatically testing a sample delivered to a reagent-filled test sample card, the said machine comprising:
a loading station;
a tray (22) moveable within the said machine for receiving a plurality of samples in receptacles (30) and a plurality of test sample cards (28), each said sample being placed in fluid communication with a respective said test sample card in the said tray (22);
a vacuum station (400) arranged to load the said samples from the said receptacles (30) into respective said cards (28);
an incubation station (600) arranged to incubate the said cards;
an optical reading station (800) arranged to read the said cards;
a test sample positioning system (100) arranged to move the tray carrying the said cards from the said loading station to the said vacuum station, and from the said vacuum station to the said incubation station, and to move the said test sample cards from the said tray into the said incubation station; and
a test card transport station (700) arranged to transport the said test cards from the said incubation station to the said optical reading station, the said optical reading station conducting optical analysis of the said samples loaded into the said cards.

2. A machine as claimed in claim 1 wherein the said sample is carried by an open receptacle (30) in the said tray (22), and wherein the said machine further comprises a fluid addition station (200) supplying a predetermined volume of fluid to the said receptacle (30).

3. A machine as claimed in claim 2 wherein the said fluid addition station (200) adds a diluent and/or a reagent to the said receptacle (30).

4. A machine as claimed in any of claims 1 to 3 wherein the said tray (22) carries a plurality of samples supplied in a plurality of open receptacles (30), and wherein the said machine further comprises a pipetting station (300) for automatically transferring fluid from one receptacle to another receptacle in the said tray.

5. A machine as claimed in claim 4 wherein the said pipetting station (300) transfers the said fluid with a disposable straw (320).

6. A machine as claimed in claim 5 wherein the said pipetting station has a hopper (304) for storing the said straws (320) and means (314) for automatically removing the said straws one at a time from the said hopper.

7. A machine as claimed in any of claims I to 6 wherein the said vacuum station (400) comprises a vacuum chamber (402) moveable relative to the said tray between upper and lower positions, the said chamber (402) cooperating with the said tray (22) to make a sealing engagement with the said tray (22) in the said lower position, the said vacuum station (400) having means (406, 408) for supplying a vacuum to the said chamber and releasing the said vacuum to atmosphere, thereby loading the said sample into the said card (28).

8. A machine according to claim 1 for testing fluids containing microbiological samples contained in open receptacles, the test sample cards having a plurality of sample wells, the said test sample cards comprising susceptibility cards and identification cards, **characterised in that** the system further comprises:
a base pan (24), the tray (22) being arranged to carry the said receptacles and the said cards across the said base pan;
a diluting station (200) arranged to add a predetermined volume of fluid to at least one of the said receptacles;
a pipetting station (300) arranged to transfer test samples from one of the said receptacles in the said tray to another of the said receptacles in the said tray;
wherein the vacuum station (400) is moveable with respect to the said tray (22) and cooperates with the said tray (22) to form a vacuum enclosure around the said receptacles (30) and the said cards (28), the said vacuum station further comprising a vacuum source (406, 408) for loading the said fluid samples into the said wells of the said cards;
the reading station (800) is arranged to conduct optical analysis of the said wells in the said cards;
the test sample positioning system (100) is arranged to move the said tray (22) over the said base pan (24) from the said vacuum station (400) to the said incubation station (600) and to load the said cards (28) from the said tray (22) into the said incubation station (600).

9. A machine according to claim 8 further comprising a stacking disposal station having a tray removable from the said machine receiving the said cards after reading of the said cards by the said optical system and means for maintaining the said cards in a stacked condition in the said magazine.

10. A system as claimed in claim 8 or 9, wherein
the said diluting station (200) adds a diluent to a first receptacle (30B) in fluid communication with a susceptibility card in the said tray;
the said pipetting station (300) withdraws a fluid containing a microbiological sample from a second receptacle (30A) in the said tray, the said second receptacle being in fluid communication with an identification card;
the said pipetting station (300) transfers the said fluid containing the said microbiological sample to the said first receptacle (30A);
the said vacuum station (400) operates to load the said identification card and the said susceptibility card with the said fluids in the said first and second receptacles;
and
the said optical reading station (800) operates to read the said susceptibility and identification cards whereby identification and susceptibility analysis may be obtained of the said microbiological sample automatically.

11. A machine as claimed in any of claims 1 to 10 further comprising a sealing station (500) for sealing the said card (28) after loading of the said card (28).

12. A machine as claimed in claim 1, for testing a plurality of test sample cards (28) carried by a cassette (26) on said tray (22) for the said test sample cards,
the said cassette (26) on said tray being loaded into the machine, wherein
each of the test sample cards is identified by a machine-readable indicator (89);
and the machine further comprises a machine-readable memory storage device applied to the said cassette (26);
an information loading station (90) for reading the said machine-readable indicators (89) for the said plurality of the said test sample cards and storing information for the said test sample cards onto the said machine-readable memory; the said information loading station further comprising a memory, a user interface for transferring testing information input from a user of the system into the said memory, a reader for the said machine readable indicator and a software program responsive to the said user interface for associating in the said memory the said testing information from the said user with the said machine-readable indicator applied to the said sample testing card;
and
an information retrieving station (94) in the said sample testing machine for retrieving information stored in the said machine-readable memory storage device; and, optionally, a reader for the said machine-readable indicator placed in the said machine for reading the said machine-readable indicators as the said test sample cards are moved within the said machine.

13. A system as claimed in claim 11 wherein the said machine readable memory storage device comprises at least one touch memory button.

14. A machine according to claim 1, for cards having a machine-readable indicator (89) applied thereto, further comprising:
a cassette means (26) carried by said tray (22) for containing a plurality of the said cards (28);
a reader (90) for the said machine-readable indicator (84) placed in the said machine; and
a card separation device (94) in the said machine for separating the said cards (28) from each other as the said cassette means (26) is moved relative to the said card separation device (94), the said card separation device (94) assisting the said reader (90) to read remotely the said machine readable indicator (89) applied to the said card.

15. A machine as claimed in claim 14 wherein the said cassette means (26) comprises a plurality of card slots (61) separated from each other by a wall portion (70) and the said cards have a top portion (23) and are placed in the said card slots (61) in the said cassette means;
and
wherein the said card separation device (94) comprises a body (94) positioned at approximately the elevation of the said top portion of the said cards (28), the said separation device pushing the said cards (28) to a slanted position in the said card slots (61) as the said card separation device (94) is moved relative to the said cards (28), the said slanted position facilitating the remote reading of the said cards (28) by the said card reader (98).

16. Use of a machine in accordance with claim 1, for loading a test sample card (28) with a fluid sample in a machine comprising the steps:
placing the said test sample card (28) in fluid communication with the said fluid sample;
placing the said test sample card and fluid sample within a vacuum chamber (402);
lowering the pressure in the said vacuum chamber (402) at a substantially constant and predetermined rate to a set point vacuum level, the said rate being selected so as not to cause air bubbles to form in the said fluid sample as air is removed from the said card (28);
maintaining the said vacuum at the said set point level for a predetermined length of time;
and
releasing the said vacuum at a predetermined rate.

17. A use as claimed in claim 16 wherein the said lowering, maintaining and releasing the said vacuum are performed in the vacuum station (400);
the vacuum station (400) further comprising a vacuum control valve (422) in communication with the said vacuum chamber (402), the said control valve (422) operating to ensure that the said rate of lowering the pressure in the vacuum chamber occurs at the said predetermined rate.

18. A machine as claimed in claim 1,
wherein the vacuum station comprises a vacuum chamber (402) in communication with a source of vacuum, the said chamber (402) having a lower peripheral sealing surface;
the tray (28) for containing the said cards has a peripheral surface (23) for sealingly engaging the said lower peripheral sealing surface;
and the vacuum station further comprises means for raising and lowering the said vacuum chamber (402) so as to permit the said tray (28) to be moved underneath the said chamber (402), and to permit the said tray (28) to be moved from the said vacuum chamber (402) to the said incubation station, the said chamber (402) in the said lower position engaging the said peripheral surface of the tray (23), enabling vacuum to be generated within the said chamber.

19. A sample processing apparatus as claimed in claim 1:
further comprising a diluting station (200), the said diluting station (200) comprising a source of fluid (204), a rotatable shot tube (202) defining a predetermined volume, and a conduit (206) conveying the said fluid from the said source to the said shot tube;
the said shot tube (202) rotating from a first position during filling of the said shot tube to a second position for dispensing the said fluid into at least one of the said receptacles (30) carried by the said tray (28);
a pipetting station (300), the said pipetting station comprising a source (304) of straws (320) and a means for removing one of the said straws (320) from the said source of straws and for inserting the said straw into one of the said receptacles (30) and withdrawing fluid from the said receptacle;
and
the diluting (200) and pipetting stations (300) permitting at least one of the said receptacles (30) in the said tray to receive the said diluent and permitting transfer of fluid from one of the said receptacles (30) in the said tray to another of the said receptacles (30) in the said tray as the said tray is moved past the said diluting (200) and pipetting (300) station.

20. An apparatus as claimed in claim 19 wherein the said pipetting (300) and diluting (200) stations are closely positioned relative to each other so as to permit simultaneous diluting and pipetting operations to be performed on multiple receptacles of the said tray.

21. A machine as claimed in claim 1 further comprising a cutting and sealing station (500) for sealing test sample cards (28), each of the said test sample cards (28) having a transfer tube (32) for conducting fluid samples into the said cards wherein the station comprises:
a hot cutting wire (506);
the said hot cutting wire (506) cooperating with the said test sample positioning system (100) to cut the said transfer tube and to seal the said test sample cards (28) when the said positioning system operates to move the said tray (22) with the said test sample cards (28) past the said hot cutting wire (506).

22. A machine according to claim 21 further comprising a drive means for moving the said hot cutting wire relative to the said tray from a retracted position to a cutting position,
the said drive means and hot cutting wire cooperating with the said test sample positioning system to cut the said transfer tube (32) and to seal the said test sample cards when the said drive means moves the said hot cutting wire to the said cutting position and the said test sample positioning system operates to move the said tray with the said test sample cards past the said hot cutting wire.

23. A station as claimed in claim 21 or 22 wherein the temperature of the said hot cutting wire is controlled by a constant current source.

24. A method of using an automatic sample testing machine as claimed in claim 1 for conducting identification and susceptibility testing of a biological agent in a fluid sample, the said fluid sample containing the said biological agent placed in a first open receptacle, wherein in that the method comprises:
(a) placing the said first receptacle (30A) on said cassette (26) (22) with the said fluid sample placed in fluid communication with an identification test sample card received by the said cassette;
(b) placing a second open receptacle (30) on said cassette (26), the said second open receptacle being in fluid communication with a susceptibility test sample card received by the said cassette;
(c) placing the said cassette (26) with the said first and second receptacles (30A, 30B) and identification and susceptibility test sample cards (28) into the said automatic sample testing machine;
thereafter, within the said machine,
(d) adding a predetermined volume of diluent to the said second receptacle (30B);
(e) transferring a portion of the said fluid sample from the said first receptacle (30A) to the said second receptacle (30B);
(f) loading the said identification and susceptibility cards (28) with fluids from the said first and second receptacles (30A, 30B), respectively; and
(g) conducting optical analysis of the said identification and susceptibility cards (28);

25. A method according to claim 24 further comprising incubating the said identification cards after loading and before conducting optical analysis.

26. A method as claimed in claim 24 or 25, wherein the said test sample cards (28) are in fluid communication with the said receptacles (30) via transfer tubes extending outwardly from the said test sample cards, and wherein the method further comprises cutting the said transfer tubes (32) after sample loading thereby substantially to seal the said test sample cards.

27. A machine as claimed in claim 1 wherein the test sample positioning system, comprises:
a base pan (24) having first, second, third and fourth side regions, and first, second, third and fourth track sections located in the said first, second, third and fourth side regions, respectively;
the tray (22) with a cassette (26) for containing at least one test sample placed on and moved about the said base pan, the said tray comprising a base member and a plurality of feet (72) protruding therefrom;
and
a drive system (40, 42, 44, 46, 48, 50, 52) for moving the said tray along the said first, second, third and fourth sides of the said base pan such that the said feet of the said sample holder travel in the said track sections, thereby maintaining alignment of the said sample holder with respect to the said base pan as the said drive system moves the said sample holder about the said base pan.

28. A machine as claimed in 27, wherein the said drive system comprises:
a first drive means (38A) engageable with the said tray for moving the said sample holder along a first direction along the said base pan;
a second drive means (38B) engageable with the said tray for moving said sample holder along a second direction along the said base pan;
a third drive means (38C) engageable with the said tray for moving the said sample holder along a third direction along the said base pan; and
a fourth drive means (38D) engageable with the said tray for moving the said sample holder along a fourth direction along the said base pan;
the said first, second, third and fourth drive means being independently operable so as to move the said tray (22) about the said base pan (24) sequentially along the said first, second, third and fourth side regions.

29. A machine as claimed in claim 28 wherein at least one of the said first, second, third and fourth drive means comprises:
a shaft (42);
a paddle (38) movably mounted to the said shaft, the said paddle engaging the said tray;
and
a motor assembly (48) for moving the said paddle (38) relative to the said shaft (42), whereby the said paddle (38) moves the said tray (22) across the said base pan (24) as the said motor assembly (48) moves the said paddle (38) relative to the said shaft (42);
the said shaft (42) being rotatable relative to the said base pan (24) so as to permit the said paddle to rotate between an engagement position with respect to the said tray and a disengagement position with respect to the said tray, thereby permitting the said paddle to be selectively engageable with the said tray.

30. A machine as claimed in claim 1 wherein the tray (22) has a top surface;
and the machine further comprises:
a cassette (26) having a plurality of slots for receiving a plurality of test sample cards (28) and means for receiving a plurality of test tubes (30) associated with the said test sample cards (28), the said cassette (26) received by the said tray (22) within the said machine and removable from the said tray and the said machine thereby to permit loading of the said cassette with the said test sample cards and the said test tubes external of the said machine.

31. A machine as claimed in claim 1 comprising a means, for dispensing a controlled volume of fluid into a receptacle, which comprises:
a source of the said fluid;
a shot tube (202) comprising a tip portion, a hollow body and a fluid port;
a conduit (206) for conducting the said fluid from the said source to the said fluid port of the said shot tube;
means for rotating the said shot tube (202) from a first position, when the said tip portion is oriented at an incline above horizontal relative to the said hollow body during filling of the said shot tube, to a second position, when the said tip portion is oriented downward towards the said receptacle during dispensing of the said fluid;
and
a valve (226) for controlling the flow of the said fluid into the said hollow body of the said shot tube;
whereby air within the said shot tube (202) may be eliminated from the said shot tube (202) during filling of the said shot tube (202) with the said fluid.

32. A machine as claimed in claim 31 further comprising an optical sensor (218) mounted adjacent to the said shot tube (202) at a location such that when the said shot tube is in the said first position, the said tip portion of the said shot tube is disposed adjacent to the said optical sensor.

33. A machine as claimed in claim 31 or 32, wherein the said shot tube (202) further comprises an exhaust port, and wherein the said system further comprises a means (217) for supplying a stream of compressed air to the said shot tube when the said shot tube is rotated to the said second position, thereby enhancing the expulsion of the said fluid from the said shot tube into the said receptacle.

34. A machine as claimed in claim 32 or claim 33, wherein the said valve (226) comprises a thimble valve placed inside the said shot tube and a means for opening and closing the said thimble valve.

35. A machine as claimed in claim 34 wherein the said thimble valve further comprises a wall portion (244) and an annular portion (242) disposed adjacent to the said body of the said shot tube and forming a central chamber (246), and wherein the said means for opening and closing of the said valve comprising a valve plunger (224) disposed within the said chamber (246) and a means for displacing the said valve plunger (224) between extended and retracted positions, the said valve plunger contacting and extending the said wall portion (244) within the said shot tube when the said valve plunger is displaced into the said extended position, thereby urging the said annular portion away from the said body of the said shot tube to allow the said fluid to enter the said shot tube.

36. A machine as claimed in claim 1 further comprising a shot tube (202) for containing a controlled volume of fluid, which comprises:
an elongate hollow body defining an interior region having a predetermined volume, the said body having a first end and a second end, the said second end defining a hollow tip portion;
a fluid port (228) for conducting fluid from a source of fluid to the said interior region;
and
a thimble valve (226) positioned within the said interior region adjacent the said first end, the said thimble valve cooperating with the said fluid port to control the intake of fluid into the said interior region.

37. A machine as claimed in claim 36 wherein the said thimble valve comprises a flexible body (240) having a wall portion (244) and an annular portion (244) forming a central chamber (246), the said annular portion further comprising at least one annular rib (248) sealingly engaging the said interior portion of the said shot tube adjacent to the said first end of the said shot tube.

38. A machine as claimed in claim 36, wherein the said shot tube comprises a tip portion (234) and an fill zone (232) adjacent to the said tip portion, the said fill zone comprising a tapering of the said elongate hollow body so as to provide a reduced volume of fluid, so that a small amount of fluid is added to the said fill zone during the time of the closing of the said thimble valve.

39. A machine as claimed in claim 1 further comprising a system for removing liquid from the receptacles (30), which comprises:
a housing (304) containing a plurality of hollow straws (320) and defining a straw withdrawal opening;
a tapered, tubular transfer pin (330) having a tip portion;
a source of vacuum (366) connected to the said transfer pin;
a drive mechanism for the said transfer pin, the said drive mechanism comprising:
means (370) for moving the said transfer pin along a first axis towards and away from the said straw withdrawal opening, the said tip portion engaging a straw disposed in the said straw withdrawal opening when the said transfer pin is moved towards the said straw withdrawal opening;
means (360, 363, 365) for rotating the said transfer pin and straw in an assembled condition to a vertical orientation above the said receptacle;
and
means (322) for lowering the said transfer pin (330) and straw (320) such that the said straw is placed into contact with the said liquid in the said receptacle and for raising the said transfer pin so as to withdraw fluid from the said receptacle when vacuum is applied to the said transfer pin.

40. A machine according to claim 39 further comprises a tapered pin housing (331) having a pin aperture, wherein the said tapered pin (330) is movable relative to the said tapered pin housing (331) and pin aperture from extended and retracted positions, the said pin housing (331) having a diameter less than the diameter of the said straws (320) so as cause the said straw (320) to become disengaged from the said tapered pin upon retraction of the said pin within the said pin housing.

41. A machine as claimed in claim 39 or 40 wherein the said straw-containing housing comprises a cylindrical housing (304) for containing a plurality of the said straws, the said cylindrical housing having an opening (350) defining a straw withdrawal slot, and wherein the said system further comprises:
a concentric rotatable drum (340) placed within the said cylindrical housing (304), the said rotatable drum comprising a plurality of fingers (342) for sweeping straws within the said cylindrical housing into the said straw withdrawal slot; and
a horizontal slide (314) disposed adjacent the said slot, the said slide being movable from a first position enabling the said straws to be withdrawn from the said cylindrical housing to a second position preventing the said straws from being withdrawn from the said straw withdrawal slot.

42. A machine as claimed in claim 1 further comprising:
a means (732) for ejecting the said sample card from the said incubation station;
a drive system (702) receiving cards from the said incubation station ejected by the said ejecting means and comprising means for moving the said card from the said incubation station in a linear fashion to the said optical station wherein the said optical station is operative to read the said sample well;
and
the said drive system (702) comprises a motor (708) and drive belt (710) operative in a forward direction to move the said sample card from the said incubation station to the said optical reading station (800), and in a reverse direction to move the said sample card from the said optical station back to the said incubation station.

43. A machine as claimed in claim 38 wherein the said optical reading station (800) comprises a transmittance optical system and the said motor (708) and drive belt (710) are operative to move the said card in a plurality of discrete steps in the said forward or the said reverse direction so as to enable a plurality of transmittance measurements at different locations of the said wells in the said card.

44. A machine as claimed in claim 42 or claim 43 wherein it further comprises a card reject station (900) disposed adjacent to the said optical reading station (800), and wherein the said motor and drive belt are operable in a forward direction to transport the said card from the said optical station to the said card reject station upon the completion of the reading of the said sample card.

45. A machine as claimed in any of claims 42 to 44 wherein the said card defines first and second edges, and wherein the said system further comprises:
a ledge (718) extending transversely above the said optical system and maintaining alignment of the said card relative to the said optical system, the said ledge defining a card slot and a card travel direction, the said card slot receiving the said first edge of the said card;
the said drive belt (710) being movable relative to the said ledge in a direction parallel to the said card travel direction, the said drive belt engaging the said second edge of the said card to move the said card relative to the said optical system; and
a plurality of rollers (712) supporting the said drive belt;
the said drive belt (710) sliding the said card relative to the said ledge in the said card travel direction without substantial slippage between the said drive belt and the said second edge of the said card, thereby the permitting said motor to move the said card relative to the said optical system with substantial precision.

46. A machine as claimed in claim I wherein the optical reading station comprises an automatic sample testing system for conducting optical analysis of a test sample card, which comprises, in combination:
a fluorescence optical station (804) and a transmittance optical station (802); and
a card transport system (700) for moving the said test sample card through at least one of the said transmittance station and the said fluorescence optical station to conduct optical analysis of the said card.

47. Use of a machine as claimed in any of claims 42 to 46, comprising the steps of:
placing the said sample card (28) in a snug space defined by (1) a slot in a ledge (718), the said slot receiving a said first edge of the said card and defining a card travel direction, and (2) a drive belt (710) positioned parallel to the said slot and supporting the said second edge of the said card;
biasing the said drive belt (710) towards the said ledge (718) so as to maintain pressure between the said drive belt, the said card and the said slot;
and
moving the said drive belt (710) in the said card travel direction so as to slide the said card through the said slot to the said optical station without substantial slippage of the said card relative to the said belt, permitting precise movement of the said card relative to the said optical system.

48. A use as claimed in claim 47 wherein the said card includes at least one column of sample wells, and the said reading system comprises a transmittance optical station (802); and
wherein the method further comprises moving the said drive belt (710) in a plurality of discrete steps so as to move the said column of sample wells past the said transmittance optical station (802) in a plurality of discrete positions, the said transmittance optical station being operative to take at least one transmittance measurement of the said column of sample wells at each of the said discrete steps.

49. A use as claimed in claim 47 or claim 48 wherein the said reading station comprises a fluorescence optical station (804) and wherein the method further comprises moving the drive belt (710) in a first direction so as to move the said card to the said fluorescence optical station (804) and moving the said drive belt in a second direction opposite to the said first direction so as to move the said card from the said fluorescence optical station (804) back to the said incubation station (600).

50. A machine as claimed in claim 49 wherein it comprises a fluorescence optical system (804) for a test sample card having a plurality of wells arranged in a column of wells, the said wells containing a fluorophore excitable upon the receipt of radiation at a excitation energy level and emitting radiation at a emission energy level, which system comprises:
an excitation lamp (816) for illuminating the said column of wells with an excitation light at the said excitation energy level;
a dichromatic beam splitter (830) reflecting a portion of the said excitation light from the said excitation lamp simultaneously to the said column of wells, the said dichromatic beam splitter being at least partially transparent to radiation at the said emission energy level;
a reference detector (844) receiving excitation light passing from the said excitation lamp through the said dichromatic beam splitter;
a selective reflector assembly (852) disposed opposite the said wells from the said excitation lamp and dichromatic beam splitter for reflecting excitation light passing through the said wells back into the said wells;
a plurality of detectors (840), one for each of the said sample wells, the said detectors receiving radiation at the said emission energy level transmitted from the said sample wells through the said dichromatic beam splitter; and
a peak detector circuit (814) for comparing the output of the said reference detector and said plurality of detectors so as to provide consistent measurements of fluorescence from the said wells independent of a change in output of the said excitation lamp.

51. A machine as claimed in claim 50 wherein the said excitation lamp comprises an elongate lamp enabling the direct illumination of a plurality of the said wells in the said column of wells simultaneously without the use of fiber-optic cables.

52. A machine as claimed in claim 50 or claim 51 wherein the said excitation light passes from the said dichromatic beam splitter (830) to the said well and reflection assembly along an optical path, and wherein the said selective reflector assembly (852) further comprises an optical shuttle (803) having a reference source (850) for emitting radiation at the said emission energy level of the said fluorophore, the said optical shuttle moving the said reference source (850) into the said optical path so as to permit calibration of the said plurality of detectors.

53. A machine as claimed in any of claims 50 to 52 wherein the said peak detector circuit (814) takes the ratio of the said outputs of the said plurality of detectors divided by the said output of the said reference detector to generate consistent measurements of fluorescence independent of the output of the said excitation lamp.

54. Use of a machine in accordance with claim 50, to the said wells being arranged in a column of wells and containing a fluorophore emitting radiation at a emission wavelength, wherein, using a machine, the method comprises:
positioning the said column of wells adjacent to a linear flash lamp (824) emitting radiation at an excitation wavelength;
flashing the said lamp (824) so as to illuminate simultaneously the said wells with the said radiation at the said excitation wavelength, the said radiation travelling along an optical path;
transmitting a portion of the said radiation from the said flash lamp (824) to a reference photodetector (850), the said reference photodetector responsively generating an output signal;
receiving at a plurality of detectors (840) radiation from the said wells at the said emission wavelength along the said optical path, the said detectors responsively generating detector output signals;
and
comparing the, ratio of the said detector output signals to the said reference output signal thereby to determine the fluorescence of the said fluorophore in the said well independent of the output of the said lamp.

55. A use as claimed in claim 54 wherein the said lamp (824) is operated to flash a plurality of times so as to permit multiple fluorescence data sets of the said well.

56. A machine as claimed in claim 1 further comprising a stacking disposal system (900) for a plurality of cards or other similarly shaped rigid objects having a flat surface and parallel sides, which system comprises:
a magazine (902) having a bottom surface, an end portion and first and second sides extending from the said bottom surface;
a card entrance slot (901) for receiving at least one of the said cards to be stacked in the said magazine;
resilient snap means (910) located adjacent to the said card entrance slot for retaining the said cards in a stacked condition in the said magazine;
a pressure plate (914) moveable within the said magazine between the said snap means and the said end of the said magazine, the said cards being stacked in the said magazine between the said snap means and the said pressure plate, the said pressure plate having a card contact surface;
means for biasing (920) the said pressure plate towards the said snap means so as to place the said card contact surface of the said pressure plate in contact with a portion of one of the said cards thereby to urge the said cards against the said snap means; and
push plate means (908), reciprocable relative to the said card entrance slot from a retracted position to an extended position, for displacing the said at least one of the said test sample cards placed in the said card entrance slot past the said snap means when the said push plate means is moved from the said retracted position to the said extended position, thereby placing the said at least one of the said cards in a stacked condition between the said snap means and the said pressure plate, the said push plate means thereafter returning to the said retracted position permitting another of the said test sample cards to be placed in the said card entrance slot.

57. A machine as claimed in claim 52, wherein the said biasing means comprises a constant force spring (920), the said constant force spring biasing the said pressure plate towards the said snap means with a force substantially independent of the number of cards stacked in the said magazine between the said pressure plate and the said snap means.

## Patentansprüche

1. Maschine zum automatischen Analysieren einer Probe, die zu einer Reagenz-gefüllten Probenkarte geliefert wird, wobei die Maschine enthält:
eine Ladestation;
einen innerhalb der Maschine beweglichen Korb (22) zur Aufnahme einer Vielzahl von Proben in Behältern (30) und einer Vielzahl von Probenkarten (28), wobei jede Probe in flüssiger Verbindung mit einer entsprechenden Probenkarte in dem Korb (22) platziert wird;
eine Vakuumstation (400), die so angeordnet ist, um die Proben von den Behältern (30) in die entsprechenden Karten (28) zu laden;
eine Brutstation (600), die so angeordnet ist, um die Karten auszubrüten;
eine optische Lesestation (800), die so angeordnet ist, um die Karten auszulesen;
ein Probenpositioniersystem (100), das so angeordnet ist, um den Korb, der die Karten von der Ladestation zu der Vakuumstation sowie von der Vakuumstation zu der Brutstation trägt, zu bewegen, und um die Probenkarten von dem Korb in die Brutstation zu bewegen; und
eine Station (700) zum Transportieren einer Probenkarte, die so angeordnet ist, um die Probenkarten von der Brutstation zu der optischen Lesestation zu transportieren, wobei die optische Lesestation die optische Analyse der Proben, die in die Karten geladen sind, durchführt.

2. Maschine gemäß Anspruch 1, bei der die Probe von einem offenen Behälter (30) in dem Korb (22) getragen wird und bei der die Maschine ferner eine Station (200) zum Hinzufügen einer Flüssigkeit enthält, um den Behälter (30) mit einem vorbestimmten Flüssigkeitsvolumen zu versorgen.

3. Maschine gemäß Anspruch 2, bei der die Station (200) zum Hinzufügen einer Flüssigkeit dem Behälter (30) einen Verdünner und/oder ein Reagenz hinzufügt.

4. Maschine gemäß einem der Ansprüche 1 bis 3, bei der der Korb (22) eine Vielzahl von Proben, die in einer Vielzahl von offenen Behältern (30) bereitgestellt sind, trägt und bei der die Maschine ferner eine Pipettenstation (300) zum automatischen Übertragen der Flüssigkeit von einem Behälter zu einem anderen in dem Korb angeordneten Behälter enthält.

5. Maschine gemäß Anspruch 4, bei der die Pipettenstation (300) die Flüssigkeit mittels eines Einwegstrohhalms (320) überträgt.

6. Maschine gemäß Anspruch 5, bei der die Pipettenstation einen Fülltrichter (304) zum Lagern der Strohhalme (320) sowie Mittel (340) zur automatischen Entnahme jeweils eines einzelnen Strohhalms aus dem Fülltrichter aufweist.

7. Maschine gemäß einem der Ansprüche 1 bis 6, bei der die Vakuumstation (400) eine Vakuumkammer (402) enthält, die relativ zu dem Korb zwischen einer oberen und einer unteren Position bewegbar ist, wobei die Kammer (402) mit dem Korb (22) zusammenwirkt, um ein dichtendes Ineinandergreifen mit dem Korb (22) in der unteren Position herzustellen, wobei die Vakuumstation (400) Mittel (406, 408) zur Versorgung der Kammer mit einem Vakuum und zur Freigabe des Vakuums an die Atmosphäre aufweist, wodurch die Probe in die Karte (28) geladen wird.

8. Maschine gemäß Anspruch 1 zum Analysieren von Flüssigkeiten, welche in offenen Behältern enthaltene mikrobiologische Proben enthalten, wobei die Probenkarten eine Vielzahl von Probenquellen aufweisen, wobei die Probenkarten Suszeptilitätskarten und Identifikationskarten enthalten, **dadurch gekennzeichnet, dass** das System ferner enthält:
eine Grundplatte (24), wobei der Korb (22) so angeordnet ist, um die Behälter und die Karten über die Grundplatte hinweg zu tragen;
eine Verdünnungsstation (200), die so angeordnet ist, um zumindest einem der Behälter ein vorbestimmtes Flüssigkeitsvolumen hinzuzufügen;
eine Pipettenstation (300), die so angeordnet ist, um Proben von einem der Behälter in dem Korb zu einem anderen Behälter in dem Korb zu übertragen;
bei dem die Vakuumstation (400), was den Korb (22) betrifft, beweglich ist, und mit dem Korb (22) zusammenwirkt, um eine Vakuumumgebung um die Behälter (30) und die Karten (28) zu bilden, wobei die Vakuumstation ferner eine Vakuumquelle (406, 408) zum Beladen der Flüssigkeitsproben in die Quelle der Karten enthält;
eine Lesestation (800) ist so angeordnet, um eine optische Analyse der Quellen in den Karten vorzunehmen;
das Probenpositioniersystem (100) ist so angeordnet, um den Korb (22) über die Grundplatte (24) von der Vakuumstation (400) zu der Brutstation (600) zu bewegen und um die Karten (28) von dem Korb (22) in die Brutstation (600) hinein zu laden.

9. Maschine gemäß Anspruch 8, die ferner eine Stapelbeseitigungsstation enthält, mit einem von der Maschine auswechselbaren Korb, der die Karten nach dem Lesen der Karten durch das optische System aufnimmt, und mit Mitteln zum Beibehalten eines gestapelten Zustandes der Karten in dem Magazin.

10. System gemäß einem der Ansprüche 8 oder 9, bei dem
die Verdünnerstation (200) einen Verdünner zu einem ersten, in Flüssigkeitsverbindung mit einer Suszeptilitätskarte in dem Korb stehenden Behälter (30B) hinzufügt;
die Pipettenstation (300) eine Flüssigkeit, die eine mikrobiologische Probe enthält, aus einem zweiten Behälter (30A) in dem Korb entnimmt, wobei der zweite Behälter in Flüssigkeitsverbindung mit einer Identifikationskarte steht;
die Pipettenstation (300) die Flüssigkeit, welche die mikrobiologische Probe enthält, zu dem ersten Behälter (30A) überführt;
die Vakuumstation (400) arbeitet, um die Identifikationskarte und die Suszeptilitätskarte mit den Flüssigkeiten in den ersten und zweiten Behältern zu laden;
und
die optische Lesestation (800) arbeitet, um die Suszeptilitäts- und Identifikationskarten zu lesen, wodurch automatisch eine Identifikations- und Suszeptilitätsanalyse der mikrobiologischen Probe erlangt werden kann.

11. Maschine gemäß einem der Ansprüche 1 bis 10, welche ferner eine Dichtungsstation (500) zum Dichten der Karte (28) nach einem Beladen der Karte (28) enthält.

12. Maschine gemäß Anspruch 1 zum Analysieren einer Vielzahl von Probenkarten (28), die von einer Kassette (26) in dem Korb (22) für die Probenkarten getragen werden,
wobei die Kassette (26) auf dem Korb in die Maschine hinein geladen wird, bei dem
jede der Probenkarten von einem Maschinen lesbaren Indikator (89) identifiziert wird;
und die Maschine ferner eine Maschinen lesbare Speichervorrichtung enthält, die auf die Kassette (26) angewendet wird;
eine Informationsladestation (90) zum Lesen des Maschinen lesbaren Indikators (89) für die Vielzahl der Probenkarten und zum Speichern der für die Probenkarten bestimmten Informationen auf dem Maschinen lesbaren Speicher; wobei die Informationsladestation ferner einen Speicher, eine Benutzerschnittstelle zum Übertragen von Analyseinformationseingaben von einem Systemnutzer in den Speicher, ein Leser für den Maschinen lesbaren Indikator und ein Softwareprogramm, welche empfindlich sind auf die Nutzerschnittstelle zum Verbinden der Analyseinformationen in den Speicher von dem Nutzer mittels des Maschinen lesbaren Indikators, der auf die Probenkarten angewendet wird, enthält;
und
einer Informations-Wiederauffindestation (94) in der Probenanalysiermaschine zum Wiederauffinden von Informationen, die in der Maschinen lesbaren Speichervorrichtung abgespeichert sind; und, wahlweise einen Leser für den Maschinen lesbaren Indikator, der in der Maschine platziert ist, um die Maschinen lesbaren Indikatoren, wenn die Probenkarten innerhalb der Maschine bewegt werden, zu lesen.

13. System gemäß Anspruch 11, bei dem die Maschinen lesbare Speichervorrichtung zumindest einen Speichertastknopf enthält.

14. Maschine gemäß Anspruch 1, für Karten mit einem Maschinen lesbaren Indikator (89), der auf diese angewendet wird, ferner enthaltend:
Kassettenmittel (26), die von dem Korb (22) getragen werden, zum Aufnehmen einer Vielzahl von Karten (28);
einem Leser (90) für den Maschinen lesbaren Indikator (84), der in der Maschine platziert ist; und
einer in der Maschine angeordneten Kartentrennvorrichtung (94) zum Trennen der Karten (28) voneinander, wenn das Kassettenmittel (26) relativ zu der Kartentrennvorrichtung (94) bewegt wird, wobei die Kartentrennvorrichtung (94) den Leser (90) unterstützt, ferngesteuert den Maschinen lesbaren Indikator (89), der auf die Karte angewendet wird, zu lesen.

15. Maschine gemäß Anspruch 14, bei der das Kassettenmittel (25) eine Vielzahl von Kartenschlitzen (61) enthält, die voneinander durch einen Wandbereich (70) getrennt sind, wobei die Karten einen oberen Bereich (23) aufweisen und in den Kartenschlitzen (61) in dem Kassettenmittel platziert sind;
und
bei dem die Kartentrennvorrichtung (94) einen Körper (94) enthält, der etwa bei der Erhöhung des oberen Bereiches der Karten (28) positioniert ist, wobei die Trennvorrichtung die Karten (28) zu einer geneigten Position in den Kartenschlitzen (61) schiebt, wenn die Kartentrennvorrichtung (94) relativ zu den Karten (28) bewegt wird, wobei die geneigte Position das ferngesteuerte Lesen der Karten (28) durch den Kartenleser (98) erleichtert.

16. Verwendung einer Maschine gemäß Anspruch 1 zum Beladen einer Probenkarte (28) mit einer flüssigen Probe in eine Maschine, enthaltend die Schritte:
Platzieren der Probenkarte (28) in Flüssigkeitsverbindung mit der flüssigen Probe;
Platzieren der Probenkarte (28) und der flüssigen Probe im Inneren einer Vakuumkammer (402);
Absenken des Druckes in der Vakuumkammer (402) auf ein im wesentlichen konstantes und vorbestimmtes Verhältnis zu einem Sollwert des Vakuumniveaus, wobei das Verhältnis so gewählt ist, um keine Luftblasen zu verursachen, die in der flüssigen Probe gebildet werden, wenn Luft von der Karte (28) beseitiget wird;
Beibehalten des Vakuums bei dem Niveau des Sollwertes für eine vorbestimmte Zeitdauer;
und
Herauslassen des Vakuums bei einem vorbestimmten Verhältnis.

17. Verwendung gemäß Anspruch 16, bei dem das Absenken, das Beibehalten und das Herauslassen des Vakuums in der Vakuumstation (400) durchgeführt werden;
Die Vakuumstation (400) enthält ferner ein Vakuumsteuerventil (422), welches in Verbindung mit der Vakuumkammer (402) steht, wobei das Kontrollventil (422) betrieben wird, um sicherzustellen, dass das Verhältnis des Absenkens des Druckes in der Vakuumkammer sich bei einem vorbestimmten Verhältnis ereignet.

18. Maschine gemäß Anspruch 1,
bei der die Vakuumstation eine in Verbindung mit der Vakuumquelle stehende Vakuumkammer (402) enthält, wobei die Kammer (402) eine untere periphere Dichtoberfläche aufweist;
der Korb (28) zur Aufnahme der Karten weist eine periphere Oberfläche (23) zum dichtenden Ankuppeln der unteren peripheren Dichtoberfläche auf;
und die Vakuumstation enthält ferner Mittel zum Hochheben und Absenken der Vakuumkammer (420), um so zu erlauben, dass der Korb (28) unter der Kammer (402) hindurch bewegt werden kann, und um zu erlauben, dass der Korb (28) von der Vakuumkammer (402) zu der Brutstation bewegt wird, wobei die Kammer (402) in der unteren Position die periphere Oberfläche des Korbes (23) ankuppelt, um das Vakuum in die Lage zu versetzen, innerhalb der Kammer erzeugt zu werden.

19. Apparat zur Probenbearbeitung gemäß Anspruch 1:
ferner enthaltend eine Verdünnerstation (200), wobei die Verdünnerstation (200) eine Flüssigkeitsquelle (204), ein drehbares Injektionsrohr (202), welches ein vorbestimmtes Volumen definiert, und eine Rohrleitung (206) zur Beförderung der Flüssigkeit von der Quelle zu dem Injektionsrohr;
das Injektionsrohr (202) dreht sich während des Auffüllens des Injektionsrohres von einer ersten Position zu einer zweiten Position, um die Flüssigkeit in zumindest eine der Behälter (30), die von dem Korb. (28) getragen werden, zu verteilen;
eine Pipettenstation (300), wobei die Pipettenstation eine Quelle (304) mit Strohhalmen (320) und Mittel zum Entfernen eines dieser Strohhalme (320) aus der Strohhalmquelle und zum Einfügen der Strohhalme in einen der Behälter (30) und zum Entnehmen der Flüssigkeit aus dem Behälter enthält;
und
die Verdünner- (200) und Pipettenstationen erlauben zumindest einem der Behälter (30) in dem Korb den Verdünner aufzunehmen, und erlauben einen Transfer der Flüssigkeit von einem der Behälter (30) in dem Korb zu einem anderen Behälter (30) in dem Korb, wenn der Korb an der Verdünner- (200) und Pipettenstation (300) vorbeibewegt wird.

20. Apparat gemäß Anspruch 19, bei dem die Pipetten- (300) und Verdünnerstationen (200) relativ zueinander sehr nah beieinander positioniert werden, um so gleichzeitige Verdünner- und Pipettenbetriebe, die an einer Vielzahl von Behältern in dem Korb durchgeführt werden müssen, zu erlauben.

21. Maschine gemäß Anspruch 1, ferner enthaltend eine Schneide- und Dichtstation (500) zum Dichten der Probenkarten (28), wobei jede der Probenkarten (28) ein Transferrohr (32) zum Einleiten der flüssigen Proben in die Karten aufweist, wobei die Station enthält:
einen heißen Schneidedraht (506);
der heiße Schneidedraht (506) arbeitet mit dem Probenpositioniersystem (100) zusammen, um das Transferrohr abzuschneiden und um die Probenkarten (28) abzudichten, wenn das Probenpositioniersystem arbeitet, um den Korb (22) mit den Probenkarten (28) an dem heißen Schneidedraht (506) vorbei zu bewegen.

22. Maschine gemäß Anspruch 21, ferner enthaltend Antriebsmittel zum Bewegen des heißen Schneidedrahtes von einer zurückgezogenen Position zu einer Schneidposition relativ zu dem Korb,
die Antriebsmittel und der heiße Schneidedraht arbeiten mit dem Probenpositioniersystem zusammen, um das Transferrohr (32) abzuschneiden und um die Probenkarte abzudichten, wenn das Antriebsmittel den heißen Schneidedraht zu der Schneideposition bewegt und das Probenpositioniersystem arbeitet, um den Korb mit den Probenkarten an dem heißen Schneidedraht vorbei zu bewegen.

23. Station gemäß Anspruch 21 oder 22, bei dem die Temperatur des heißen Schneidedrahtes von einer konstanten Stromquelle gesteuert wird.

24. Verfahren zur Verwendung einer automatischen Probeanalysenmaschine gemäß Anspruch 1, zur Durchführung einer Identifikations- und Suszeptilitätsanalyse eines biologischen Agens in einer flüssigen Probe, wobei die flüssige Probe das biologische Agens, das in einem ersten offenen Behälter platziert ist, enthält, wobei das Verfahren die Schritte umfasst:
a) Platzieren des ersten Behälters (30A) in einer Kassette (26) mit der flüssigen Probe, die in flüssiger Verbindung mit einer von der Kassette empfangenen Identifikationsprobenkarte platziert ist;
b) Platzieren eines zweiten offenen Behälters (30) in eine Kassette (26), wobei der zweite offene Behälter in flüssiger Verbindung mit einer von der Kassette empfangenen Suszeptilitäts-Probenkarte steht;
c) Platzieren der Kassette (26) mit den ersten und zweiten Behältern (30A, 30B) und der Identifikations- und Suszeptilitäts-Probenkarten (28) in eine automatische Probenanalysiermaschine;
danach erfolgt innerhalb der Maschine:
d) Hinzufügen eines vorbestimmten Verdünnervolumens zu dem zweiten Behälter (30B) ;
e) Übertragen eines Teils der flüssigen Probe von dem ersten Behälter (30A) zu dem zweiten Behälter (30B);
f) Beladen der Identifikations- und Suszeptilitätskarten (28) mit Flüssigkeiten von den ersten bzw. den zweiten Behältern (30A, 30B); und
g) Durchführen einer optischen Analyse der Identifikations- und Suszeptilitätskarten (28).

25. Verfahren gemäß Anspruch 24, ferner enthaltend, Ausbrüten der Identifikationskarten nach dem Beladen und vor dem Durchführen der optischen Analyse.

26. Verfahren gemäß Anspruch 24 oder 25, bei dem die Probenkarten (28) über die Transferrohre, die sich von den Probenkarten nach außen hin erstrecken, in flüssiger Verbindung mit den Behältern (30) stehen, und bei dem das Verfahren ferner das Abschneiden der Transferrohre (32) nach dem Probenbeladen enthält, wobei dadurch im wesentlichen die Probenkarten abgedichtet werden.

27. Maschine gemäß Anspruch 1, bei der das System zur Positionierung der Proben enthält:
eine Grundplatte (24) mit ersten, zweiten, dritten und vierten seitlichen Bereichen und ersten, zweiten, dritten und vierten Gleisabschnitten, die in den ersten, zweiten, dritten, bzw. vierten seitlichen Bereichen angeordnet sind;
der Korb (22) mit einer Kassette (26) zum Aufnehmen zumindest einer Probe, die auf der Grundplatte platziert ist und die um die Grundplatte bewegt wird, wobei der Korb ein Basisteil und eine Vielzahl von Füßen (72), die von diesem abstehen, enthält;
und
ein Antriebssystem (40, 42, 44, 46, 48, 50, 52) zum Bewegen des Korbes entlang der ersten, zweiten, dritten und vierten Seite der Grundplatte derart, dass die Füße des Probenhalters sich in den Gleisabschnitten bewegen,
wobei dadurch die Ausrichtung des Probenhalters bezüglich der Grundplatte beibehalten wird, wenn das Antriebssystem den Probenhalter um die Grundplatte bewegt.

28. Maschine gemäß Anspruch 27, bei dem das Antriebssystem enthält:
einem ersten Antriebsmittel (38A), welches einrastbar mit dem Korb ist, um den Probenhalter entlang einer ersten Richtung entlang der Grundplatte zu bewegen;
einem zweiten Antriebsmittel (38B), welches einrastbar mit dem Korb ist, um den Probenhalter entlang einer zweiten Richtung entlang der Grundplatte zu bewegen;
einem dritten Antriebsmittel (38C), welches einrastbar mit dem Korb ist, um den Probenhalter entlang einer dritten Richtung entlang der Grundplatte zu bewegen; und
einem vierten Antriebsmittel (38D), welches einrastbar mit dem Korb ist, um den Probenhalter entlang einer vierten Richtung entlang der Grundplatte zu bewegen;
wobei die ersten, zweite, dritte und vierte Antriebsmittel unabhängig voneinander derart betreibbar sind, um den Korb (22) um die Grundplatte (24) sequentiell entlang des ersten, zweiten, dritten und vierten seitlichen Bereiches zu bewegen.

29. Maschine gemäß Anspruch 28, bei der zumindest eines der ersten, zweiten, dritten und vierten Antriebsmittel enthält:
einen Schaft (42);
eine drehbar um den Schaft montierte Schaufel (38), wobei die Schaufel in den Korb eingreift;
und
eine Motoranordnung (48) zum Bewegen der Schaufel (38) relativ zu dem Schaft (42), wobei die Schaufel (38) den Korb (22) über die Grundplatte (24) hinweg bewegt, wenn die Motoranordnung (48) die Schaufel (38) relativ zu dem Schaft (42) bewegt;
der Schaft (42) ist relativ zu der Grundplatte (24) drehbar, um so der Schaufel zu erlauben, zwischen einer Einkuppelstellung bezüglich des Korbes und einer Loskuppelstellung bezüglich des Korbes sich zu drehen, und dadurch der Schaufel zu erlauben, selektiv mit dem Korb einkuppelbar zu sein.

30. Maschine gemäß Anspruch 1, bei der der Korb (22) eine oberste Oberfläche aufweist;
und die Maschine ferner enthält:
eine Kassette (26) mit einer Vielzahl von Schlitzen zur Aufnahme einer Vielzahl von Probenkarten (28) und Mittel zur Aufnahme einer Vielzahl von Probenröhrchen (30), die mit den Probenkarten (28) verbunden sind, wobei die Kassette (26) innerhalb der Maschine von dem Korb (22) aufgenommen wird und von dem Korb weg bewegbar ist und die Maschine dadurch ein bezüglich der Maschine externes Aufladen der Kassette mit den Probenkarten und den Proberöhrchen erlaubt.

31. Maschine gemäß Anspruch 1, enthaltend Mittel zum Verteilen eines regulierten Flüssigkeitsvolumens in einen Behälter, welches enthält:
eine Flüssigkeitsquelle;
ein Injektionsrohr (202), das ein Düsenteil, einen Hohlkörper und eine Flüssigkeitsöffnung aufweist;
eine Führung (206) zum Durchleiten der Flüssigkeit von der Quelle zu der Flüssigkeitsöffnung des Injektionsrohrs;
Mittel zum Drehen des Injektionsrohrs (202) von einer ersten Stellung, wenn das Düsenteil an einem Gefälle oberhalb der Horizontalen relativ zu dem Hohlkörper während dem Auffüllen des Injektionsrohrs orientiert ist, zu einer zweiten Stellung, wenn das Düsenteil nach unten gegen den Behälter während dem Verteilen der Flüssigkeit orientiert ist;
und
ein Ventil (226) zum Regulieren des Flüssigkeitsstroms in den Hohlkörper des Injektionsrohrs hinein;
wodurch Luft innerhalb des Injektionsrohrs (202) während dem Auffüllen des Injektionsrohrs (202) mit der Flüssigkeit aus dem Injektionsrohr (202) entfernt werden kann.

32. Maschine gemäß Anspruch 31, ferner enthaltend einen optischen Sensor (218), der benachbart zu dem Injektionsrohr (202) an einem Platz so montiert ist, dass, wenn das Injektionsrohr in der ersten Stellung angeordnet ist, das Düsenteil des Injektionsrohrs benachbart zu dem optischen Sensor angeordnet ist.

33. Maschine gemäß Anspruch 31 oder 32, bei der das Injektionsrohr (220) ferner eine Austrittsöffnung enthält und wobei das System ferner Mittel (217) zur Versorgung eines Stroms verdichteter Luft zu dem Injektionsrohr enthält, wenn das Injektionsrohr zu der zweiten Stellung gedreht wird und dadurch das Ausstoßen der Flüssigkeit aus dem Injektionsrohr in den Behälter erhöht.

34. Maschine gemäß Anspruch 32 oder 33, bei der das Ventil (226) ein fingerhutartiges Ventil, welches innerhalb des Injektionsrohrs platziert ist, und Mittel zum Öffnen und Schließen des fingerhutartigen Ventils enthält.

35. Maschine gemäß Anspruch 34, bei der das fingerhutartige Ventil ferner einen Wandbereich (244) und einen ringförmigen Bereich (242) enthält, die benachbart zu dem Körper des Injektionsrohrs angeordnet sind und die eine zentrale Kammer (246) ausbilden, und wobei das Mittel zum Öffnen und Schließen des Ventils einen Ventilkolben (224) enthält, der innerhalb der Kammer (246) angeordnet ist und Mittel zum Verschieben des Ventilkolbens (224) zwischen einer ausgedehnten und einer zurückgezogenen Stellung enthält, wobei der Ventilkolben den Wandbereich (244) berührt und innerhalb des Injektionsrohrs ausdehnt, wenn der Ventilkolben in der ausgedehnten Stellung angeordnet ist, und dadurch der ringförmige Bereich weg von dem Körper des Injektionsrohrs gedrängt wird, um der Flüssigkeit zu erlauben, in das Injektionsrohr einzudringen.

36. Maschine gemäß Anspruch 1, ferner enthaltend ein Injektionsrohr (202) zur Aufnahme eines regulierten Flüssigkeitsvolumens, welches enthält:
einen verlängerten Hohlkörper, der einen inneren Bereich mit einem vorbestimmten Volumen definiert, wobei der Körper ein erstes und eine zweites Ende aufweist, und das zweite Ende ein hohles Düsenteil definiert;
eine Flüssigkeitsöffnung (228) zum Durchleiten einer Flüssigkeit von einer Flüssigkeitsquelle zu dem inneren Bereich;
und
ein fingerhutartiges Ventil (226), welches innerhalb des inneren Bereiches, benachbart zum den ersten Ende positioniert ist, wobei das fingerhutartige Ventil mit der Flüssigkeitsöffnung zusammenwirkt, um das Ansaugen der Flüssigkeit in den inneren Bereich zu regulieren.

37. Maschine gemäß Anspruch 36, bei dem das fingerhutartige Ventil einen biegsamen Körper (240) enthält, der einen Wandbereich (244) und einen ringförmigen Bereich (244) aufweist, die eine zentrale Kammer (246) ausbilden, wobei der ringförmige Bereich ferner zumindest eine ringförmige Ritze (248) aufweist, die in abdichtender Weise in den inneren Bereich des Injektionsrohrs, der benachbart zu dem ersten Ende des Injektionsrohrs angeordnet ist, eingreift.

38. Maschine gemäß Anspruch 36, bei der das Injektionsrohr ein Düsenteil (234) und eine Füllzone (232) benachbart zu dem Düsenteil enthält, wobei die Füllzone eine Verjüngung des verlängerten Hohlkörpers enthält, um so ein verringertes Flüssigkeitsvolumen bereitzustellen, so dass eine geringe Flüssigkeitsmenge der Füllzone während der Dauer des Schließens des fingerhutartigen Ventils hinzu gefügt wird.

39. Maschine gemäß Anspruch 1, ferner enthaltend ein System zum Entfernen einer Flüssigkeit aus dem Behälter (30), ferner enthaltend:
ein Gehäuse (304), welches eine Vielzahl von Strohhalmen (320) enthält und welches eine Strohhalmentnahmeöffnung definiert;
ein verjüngter, röhrenförmiger Transferpin (330) mit einem Düsenteil;
eine Vakuumquelle (366), die mit dem Transferpin verbunden ist;
ein Antriebsmechanismus für den Transferpin, wobei der Antriebsmechanismus enthält:
Mittel (370) zum Bewegen des Transferpins entlang einer ersten Achse hin zu und weg von der Strohhalmentnahmeöffnung, wobei das Düsenteil einen in der Strohhalmentnahmeöffnung angeordneten Strohhalm greift, wenn der Transferpin hin zu der Strohhalmentnahmeöffnung bewegt wird;
Mittel (360, 363, 365) zum Drehen des Transferpins und Strohhalms in einem zusammengesetzten Zustand in eine vertikale Ausrichtung oberhalb des Behälters;
und
Mittel (322) zum Absenken des Transferpins (330) und des Strohhalms (320) derart, dass der Strohhalm in Kontakt mit der Flüssigkeit in dem Behälter platziert wird, und zum Anheben des Transferpins, um so Flüssigkeit aus dem Behälter abzusaugen, wenn ein Vakuum an den Transferpin angelegt wird.

40. Maschine gemäß Anspruch 39, ferner enthaltend ein Pingehäuse (331) mit einer Pinöffnung, bei der der verjüngte Pin (330) relativ zu dem verjüngten Pingehäuse (331) und Pinöffnung von einer ausgedehnten und zurückgezogenen Stellung bewegbar ist, wobei das Pingehäuse (331) einen Durchmesser aufweist, der geringer ist, als der Durchmesser der Strohhalme (320), um den Strohhalm (320) so zu veranlassen, von dem verjüngten Pin auf ein Zurückziehen des Pins innerhalb des Pingehäuses losgelassen zu werden.

41. Maschine gemäß Anspruch 39 oder 40, bei der das die Strohhalme enthaltende Gehäuse ein zylindrisches Gehäuse (304) zur Aufnahme einer Vielzahl von Strohhalmen enthält, wobei das zylindrische Gehäuse eine Öffnung (350), die ein Strohhalmentnahmeschlitz definiert, aufweist, und bei dem das System ferner enthält:
eine konzentrische, drehbare Trommel, die innerhalb des zylindrischen Gehäuses (304) platziert ist, wobei die drehbare Trommel eine Vielzahl von Fingern (342) zum Vorsichherschieben von Strohhalmen innerhalb des zylindrischen Gehäuses in den Strohhalmentnahmeschlitz enthält; und
ein horizontaler, benachbart zu dem Schlitz angeordneter Schieber (314), wobei der Schieber von einer ersten Position, die erlaubt, dass die Strohhalme von dem zylindrischen Gehäuse entnommen werden können, zu einer zweiten Position, die verhindert, dass die Strohhalme von dem Strohhalmentnahmeschlitz entnommen werden können, bewegbar ist.

42. Maschine gemäß Anspruch 1, ferner enthaltend:
Mittel (732) zum Aufwerfen der Probenkarte aus der Brutstation;
ein Antriebssystem (702), das Karten von der Brutstation, die von den Auswurfmitteln ausgeworfen wurden, aufnimmt, und Mittel zum Bewegen der Karten von der Brutstation in linearer Art zu der optischen Station enthält, bei der die optische Station betreibbar ist, die Probenquelle zu lesen;
und
das Antriebssystem (702) einen Motor (708) und einen in einer Vorwärtsrichtung betreibbaren Antriebsriemen (710) enthält, um die Probenkarte von der Brutstation zu der optischen Lesestation (800) zu bewegen, und um in der Gegenrichtung die Probenkarte von der optischen Station zurück zur Brutstation zu bewegen.

43. Maschine gemäß Anspruch 38, bei der die optische Lesestation (800) ein durchlässiges optisches System enthält und der Motor (708) und Antriebsriemen (710) betreibbar sind, um die Karte in einer Vielzahl diskreter Schritte in die Vorwärts- oder Rückwärtsrichtung zu bewegen, um so eine Vielzahl von Durchlässigkeitsmessungen an verschiedenen Orten der Quellen in den Karten zu ermöglichen.

44. Maschine gemäß Anspruch 42 oder Anspruch 43, die ferner eine Kartenauswurfstation (900) enthält, die benachbart zu der optischen Lesestation (800) angeordnet ist, und bei der der Motor und Antriebsriemen in einer Vorwärtsrichtung betreibbar sind, um die Karte von der optischen Station zu der Kartenauswurfstation auf den Abschluss des Lesens der Probenkarte hin zu transportieren.

45. Maschine gemäß einem der Ansprüche 42 bis 44, bei dem die Karte erste und zweite Kanten definiert, und bei der das System ferner enthält:
eine Leiste (718), die sich oberhalb des optischen Systems in traverser Richtung erstreckt und die die Ausrichtung der Karte relativ zu dem optischen System beibehält, wobei die Leiste einen Kartenschlitz und eine Transportrichtung der Karte definiert, wobei der Kartenschlitz die erste Kante der Karte aufnimmt.
Der Antriebsriemen (710) ist relativ zu der Leiste in einer parallelen Richtung zur Transportrichtung der Karte bewegbar, wobei der Antriebsriemen in die zweite Kante der Karte eingreift, um die Karte relativ zu dem optischen System zu bewegen; und
eine Vielzahl von Walzen (712), die den Antriebsriemen stützen;
der Antriebsriemen (710) lässt die Karte relativ zu der Leiste in die Transportrichtung der Karte ohne ein wesentliches Rutschen zwischen dem Antriebsriemen und der zweiten Kante der Karte gleiten, und erlaubt dem Motor dadurch, die Karte mit beträchtlicher Genauigkeit relativ zu dem optischen System zu bewegen.

46. Maschine gemäß Anspruch 1, bei der die optische Lesestation ein automatisches Probenanalysiersystem zur Durchführung optischer Analysen der Probenkarten enthält, die in Kombination enthält:
eine optische Fluoreszenzstation (804) und eine optische Durchgangsstation (802); und
ein Kartentransportsystem (700) zum Bewegen der Probenkarte durch zumindest die Durchgangsstation und die optische Fluoreszenzstation, um eine optische Analyse der Karte durchzuführen.

47. Verwendung einer Maschine gemäß einem der Ansprüche 42 bis 46, enthaltend die Schritte:
Platzieren der Probenkarte (28) in einem engen Raum, der durch (1) einen Schlitz in einer Leiste (718) definiert ist, wobei der Schlitz eine erste Kante der Karte aufnimmt und eine Kartentransportrichtung definiert, und der (2) einen Antriebsriemen (710) definiert, der parallel zu dem Schlitz positioniert ist und der die zweite Kante der Karte abstützt;
Vorspannen des Antriebsriemens (710) gegen die Leiste (718), um so einen Druck zwischen dem Antriebsriemen, der Karte und dem Schlitz beizubehalten;
und
Bewegen des Antriebsriemens (710) in die Kartentransportrichtung, um so die Karte durch den Schlitz hindurch zu der optischen Station ohne eine wesentliches Abgleiten der Karte relativ zu dem Riemen gleitet zu lassen und eine genaue Bewegung der Karte relativ zu dem optischen System zu ermöglichen.

48. Verwendung gemäß Anspruch 47, bei der die Karte zumindest eine Säule Probenquellen einschließt und das Lesesystem eine optische Durchgangsstation (802) enthält; und
bei der das Verfahren ferner das Bewegen des Antriebsriemens (710) in eine Vielzahl diskreter Schritte enthält, um so die Säule der Probenquellen entlang der optischen Durchgangsstation (802) in einer Vielzahl diskreter Stellung zu bewegen, wobei die optische Durchgangsstation betreibbar ist, um zumindest eine Durchlässigkeitsmessung der Säule der Probenquellen bei jedem diskreten Schritt vorzunehmen.

49. Verwendung gemäß Anspruch 47 oder Anspruch 48, bei der die Lesestation eine optische Fluoreszenzstation (804) enthält, und bei der das Verfahren ferner das Bewegen des Antriebsriemens (710) in eine erste Richtung enthält, um so die Karte zu der optischen Fluoreszenzstation (804) zu bewegen, und das Bewegen des Antriebsriemens in eine zweite Richtung enthält, die entgegengesetzt zur ersten Richtung ist, um so die Karte von der optischen Fluoreszenzstation (804) zurück zu der Brutstation (600) zu bewegen.

50. Maschine gemäß Anspruch 49, bei der es ein optisches Fluoreszenzsystem für eine Probenkarte mit einer Vielzahl von in Quellensäulen angeordneten Quellen enthält, wobei die Quellen ein Fluorophor enthalten, welches auf den Empfang einer Strahlung bei einer Anregbarkeitsschwelle der Energie anregbar ist und die Strahlung bei einem Emissionsenergieniveau emittiert wird, wobei das System enthält:
eine Anregungslampe (816) zum Beleuchten der Wellenreihe mit einem Anregungslicht bei einem Anregungsenergieniveau;
ein dichromatischer Strahlenteiler (830), der einen Teil des Anregungslichts von der Anregungslampe gleichzeitig zu der Quellensäule reflektiert, wobei der dichromatische Strahlenteiler zumindest teilweise transparent auf Strahlung des Emissionsenergieniveaus ausgebildet ist;
ein Referenzdetektor (844), der das Anregungslicht, welches von der Anregungslampe durch den dichromatischen Strahlenteiler hindurch geht, aufnimmt;
eine selektive Reflektoranordnung (852), die entgegengesetzt der Quellen von der Anregungslampe und dem dichromatischen Strahlenteiler angeordnet ist, zum Reflektieren des Anregungslichtes, welches durch die Quellen hindurch zurück in die Quellen geht;
eine Vielzahl von Detektoren (840), jeweils eine für die Probenquellen, wobei die Detektoren Strahlung bei einem Emissionsenergieniveau aufnehmen, welches von den Probenquellen durch den dichromatischen Strahlenteiler übermittelt wird; und
eine Scheitelwertdetektorschaltung (814) zum Vergleichen des Ausgangs des Referenzdetektors und der Vielzahl der Detektoren, um so übereinstimmende Messungen der Fluoreszenz von den Quellen unabhängig von einer Änderung im Ausgang der Anregungslampe bereit zu stellen.

51. Maschine gemäß Anspruch 50, bei der die Anregungslampe eine langgestreckte Lampe enthält, die ohne Verwendung fiberoptischer Kabel gleichzeitig die direkte Beleuchtung einer Vielzahl der Quellen in der Quellensäule ermöglicht.

52. Maschine gemäß Anspruch 50 oder 51, bei der das Anregungslicht von dem dichromatischen Strahlenteiler (830) zu der Quellen- und Reflektionsanordnung entlang eines optischen Pfades entlang geht, und bei der die selektive Reflektoranordnung (852) ferner ein optisches Shuttle (803) mit einer Referenzquelle (850) zum Aussenden von Strahlung bei dem Emissionsenergieniveau des Fluorophors aufweist, wobei das optische Shuttle die Referenzquelle (850) in den optischen Pfad hinein bewegt, um so eine Kalibrierung der Vielzahl von Detektoren zu erlauben.

53. Maschine gemäß einem der Ansprüche 50 bis 52, bei der die Scheitelwertdetektorschaltung (814) das Verhältnis der Ausgänge der Vielzahl von Detektoren geteilt durch den Ausgang des Referenzdetektors heranzieht, um übereinstimmende Messungen der Fluoreszenz unabhängig von dem Ausgang der Anregungslampe zu erzeugen.

54. Verwendung einer Maschine gemäß Anspruch 50, bei der die Quellen in einer Quellensäule angeordnet worden sind und Fluorophor enthalten, das Strahlung bei einer Emissionswellehlänge emittiert, bei der die Verwendung der Maschine das Verfahren enthält:
Positionieren der Quellensäule benachbart zu einer linearen Blitzlampe (824), die Strahlung bei einer Anregungswellenlänge emittiert;
Aufblitzen der Lampe (824), um so gleichzeitig die Quellen mit der Strahlung bei der Anregungswellenlänge zu beleuchten, wobei sich die Strahlung entlang einem optischen Pfad bewegt;
Übertragen eines Teils der Strahlung von der Blitzlampe (824) zu einem Referenzphotodetektor (850), wobei der Referenzphotodetektor auf das Erzeugen eines Ausgangssignals empfindlich ist;
Aufnehmen einer Strahlung von den Quellen bei der Emissionswellenlänge entlang des optischen Pfades von einer Vielzahl von Detektoren (840), wobei die Detektoren auf das Erzeugen von Detektorausgangssignalen empfindlich sind;
und
Vergleichen des Verhältnisses der Detektorausgangssignale zu dem Referenzausgangssignal, um dadurch die Fluoreszenz des Fluorophors in der Quelle unabhängig von dem Ausgang der Lampe zu bestimmen.

55. Verwendung gemäß Anspruch 54, bei der die Lampe (824) betreibbar ist, um mehrere Male zu blitzen, um so vielfache Fluoreszenzdatensätze der Quelle zu ermöglichen.

56. Maschine gemäß Anspruch 1, ferner enthaltend ein Stapelbeseitigungssystem (900) für eine Vielzahl von Karten oder andere, ähnlich geformte starre Objekte mit einer flachen Oberfläche und parallelen Seiten, wobei das System enthält:
ein Magazin (902) mit einer untersten Oberfläche, einem Endbereich und ersten und zweiten Seiten, die sich von der untersten Oberfläche erstrecken;
einen Karteneingangsschlitz (901) zum Aufnehmen zumindest einer der in dem Magazin aufzustapelnden Karten;
elastische Schnappmittel (910), die sich zum Zurückhalten der Karten in einem gestapelten Zustand in dem Magazin benachbart zu dem Karteneingangsschlitz befinden;
eine Druckplatte (914), die innerhalb des Magazins zwischen dem Schnappmittel und dem Ende des Magazins bewegbar ist, wobei die Karten im Magazin zwischen dem Schnappmittel und der Druckplatte aufgestapelt worden sind, wobei die Druckplatte eine Kartenkontaktoberfläche aufweist;
Mittel zum Vorspannen (920) der Druckplatte zu den Schnappmitteln hin, um dadurch die Kartenkontaktoberfläche der Druckplatte in Kontakt mit einem Teil einer der Karten zu platzieren, um dadurch die Karten gegen die Schnappmittel zu drängen; und
Abschabmittel (908), wechselseitig relativ zu dem Karteneingangsschlitz von einer zurückgezogenen Stellung zu einer ausgedehnten Stellung, zum Verschieben mindestens einer der Probenkarten, die in dem Karteneingangsschlitz angeordnet ist, entlang der Schnappmittel, wenn das Abschabmittel von der zurückgezogenen Stellung zu der ausgedehnten Stellung bewegt wird, um dadurch zumindest eine der Karten in einem gestapelten Zustand zwischen dem Schnappmittel und der Druckplatte zu platzieren, wobei die Abschabmittel danach zu der zurückgezogenen Stellung zurückkehren, um einer anderen Probenkarte zu erlauben, in den Karteneingangsschlitz platziert zu werden.

57. Maschine gemäß Anspruch 52, bei der das Vorspannmittel eine konstante Kraftfeder (920) aufweist, wobei die konstante Kraftfeder die Druckplatte zu dem Schnappmittel mit einer Kraft vorspannt, die im wesentlichen unabhängig ist von der Anzahl der Karten, die in dem Magazin zwischen der Druckplatte und dem Schnappmittel gestapelt sind.

## Revendications

1. Machine pour tester automatiquement un échantillon délivré à une carte d'échantillon de test remplie d'agent réactif, ladite machine comprenant :
une station de chargement ;
un bac (22) déplaçable à l'intérieur de ladite machine pour recevoir une pluralité d'échantillons dans des réceptacles (30) et une pluralité de cartes d'échantillon de test (28) ; chacun desdits échantillons étant placé en communication fluidique avec une desdites cartes respectives d'échantillon de test dans ledit bac (22) ;
une station de vide (400) agencée pour charger lesdits échantillons provenant desdits réceptacles (30) dans lesdites cartes respectives (28) ;
une station d'incubation (600) agencée pour incuber lesdites cartes ;
une station de lecture optique (800) agencée pour lire lesdites cartes ;
un système de positionnement d'échantillon de test (100) agencé pour déplacer le bac portant lesdites cartes de ladite station de chargement à ladite station de vide, et de ladite station de vide à ladite station d'incubation, et pour déplacer lesdites cartes d'échantillon de test depuis ledit bac dans ladite station d'incubation ; et,
une station de transport de carte de test (700) agencée pour transporter lesdites cartes de test de ladite station d'incubation à ladite station de lecture optique, ladite station de lecture optique conduisant l'analyse optique desdits échantillons chargés dans lesdites cartes.

2. Machine selon la revendication 1, dans laquelle ledit échantillon est porté par un réceptacle ouvert (30) dans ledit bac (22), et dans laquelle ladite machine comprend en outre une station d'addition de fluide (200) délivrant un volume prédéterminé de fluide audit réceptacle (30).

3. Machine selon la revendication 2, dans laquelle ladite station d'addition de fluide (200) ajoute un diluant et/ou un réactif audit réceptacle (30).

4. Machine selon l'une quelconque des revendications 1 à 3, dans laquelle ledit bac (22) porte une pluralité d'échantillons délivrés dans une pluralité de réceptacles ouverts (30), et dans laquelle ladite machine comprend en outre une station de pipetage (300) pour transférer automatiquement le fluide d'un réceptacle à un autre réceptacle dans ledit bac.

5. Machine selon la revendication 4, dans laquelle ladite station de pipetage (300) transfère ledit fluide avec une paille jetable (320).

6. Machine selon la revendication 5, dans laquelle ladite station de pipetage comporte une trémie (304) pour stocker lesdites pailles (320) et un moyen (314) pour enlever automatiquement lesdites pailles une à une de ladite trémie.

7. Machine selon l'une quelconque des revendications 1 à 6, dans laquelle ladite station de vide (400) comprend une chambre à vide (402) déplaçable par rapport audit bac entre des positions supérieure et inférieure, ladite chambre (402) coopérant avec ledit bac (22) pour établir une mise en prise étanche avec ledit bac (22) dans ladite position inférieure, ladite station de vide (400) ayant un moyen (406, 408) pour délivrer un vide à ladite chambre et pour libérer ledit vide vers l'atmosphère, chargeant ainsi ledit échantillon dans ladite carte (28).

8. Machine selon la revendication 1, pour tester des fluides contenant des échantillons microbiologiques contenus dans des réceptacles ouverts, les cartes d'échantillon de test ayant une pluralité de puits d'échantillon, lesdites cartes d'échantillon de test comprenant des cartes de sensibilité et des cartes d'identification, **caractérisée en ce que** le système comprend en outre :
un plateau de base (24), le bac (22) étant agencé pour porter lesdits réceptacles et lesdites cartes à travers ledit plateau de base ;
une station de dilution (200) agencée pour ajouter un volume prédéterminé de fluide à au moins un desdits réceptacles ;
une station de pipetage (300) agencée pour transférer les échantillons de test d'un desdits réceptacles dudit bac vers un autre desdits réceptacles dudit bac ;
dans laquelle la station de vide (400) est déplaçable par rapport audit bac (22) et coopère avec ledit bac (22) pour former une enceinte sous vide autour desdits réceptacles (30) et desdites cartes (28), ladite station de vide comprenant en outre une source de vide (406, 408) pour charger lesdits échantillons de fluide dans lesdits puits desdites cartes ;
la station de lecture (800) est agencée pour conduire une analyse optique desdits puits dans lesdites cartes ;
le système de positionnement d'échantillon de test (100) est agencé pour déplacer ledit bac (22) sur ledit plateau de base (24) depuis ladite station de vide (400) vers ladite station d'incubation (600) et pour charger lesdites cartes (28) provenant dudit bac (22) dans ladite station d'incubation (600).

9. Machine selon la revendication 8, comprenant en outre une station de rejet par empilement ayant un bac pouvant être enlevé de ladite machine recevant lesdites cartes après lecture desdites cartes par ledit système optique et un moyen pour maintenir lesdites cartes dans une condition empilée dans ledit magasin.

10. Système selon la revendication 8 ou 9, dans lequel
ladite station de dilution (200) ajoute un diluant à un premier réceptacle (30B) en communication fluidique avec une carte de sensibilité dans ledit bac ;
ladite station de pipetage (300) extrait un fluide contenant un échantillon microbiologique d'un second réceptacle (30A) dans ledit bac, ledit second réceptacle étant en communication fluidique avec une carte d'identification ;
ladite station de pipetage (300) transfère ledit fluide contenant ledit échantillon microbiologique audit premier réceptacle (30A) ;
ladite station de vide (400) opère pour charger ladite carte d'identification et ladite carte de sensibilité avec lesdits fluides dans lesdits premier et second réceptacles ;
et,
ladite station de lecture optique (800) fonctionne pour lire lesdites cartes de sensibilité et d'identification moyennant quoi une analyse d'identification et de sensibilité peut être obtenue automatiquement dudit échantillon microbiologique.

11. Machine selon l'une quelconque des revendications 1 à 10, comprenant en outre une station d'étanchéité (500) pour fermer de manière étanche ladite carte (28) après chargement de ladite carte (28).

12. Machine selon la revendication 1, pour tester une pluralité de cartes d'échantillon de test (28) portées par une cassette (26) sur ledit bac (22) pour lesdites cartes d'échantillon de test,
ladite cassette (26) sur ledit bac étant chargée dans la machine, dans laquelle
chacune des cartes d'échantillon de test est identifiée par un indicateur exploitable par une machine (89) ;
et la machine comprend en outre un dispositif de mémorisation d'indicateur exploitable par une machine appliqué à ladite cassette (26) ;
une station de chargement d'informations (90) pour lire lesdits indicateurs lisibles par machine (89) pour ladite pluralité desdites cartes d'échantillon de test et pour mémoriser les informations pour lesdites cartes d'échantillon de test dans ladite mémoire exploitable par une machine ; ladite station de chargement d'informations comprenant en outre une mémoire, une interface utilisateur pour transférer les informations de test entrées par un utilisateur du système dans ladite mémoire, un lecteur pour ledit indicateur exploitable par une machine et un programme logiciel sensible à ladite interface utilisateur pour associer dans ladite mémoire lesdites informations de test provenant dudit utilisateur avec ledit indicateur exploitable par une machine appliqué à ladite carte de test d'échantillon ;
et,
une station d'extraction d'informations (94) dans ladite machine de test d'échantillon pour extraire les informations mémorisées dans ledit dispositif de mémorisation exploitable par une machine ; et, éventuellement, un lecteur pour ledit indicateur exploitable par une machine placé dans ladite machine pour lire lesdits indicateurs exploitables par une machine à mesure que lesdites cartes d'échantillon de test sont déplacées à l'intérieur de ladite machine.

13. Système selon la revendication 11, dans lequel ledit dispositif de mémorisation exploitable par une machine comprend au moins une commande électronique de mémoire.

14. Machine selon la revendication 1, pour des cartes ayant un indicateur exploitable par une machine (89) appliqué à celles-ci, comprenant en outre :
un moyen de cassette (26) porté par ledit bac (22) pour contenir une pluralité desdites cartes (28) ;
un lecteur (90) pour ledit indicateur exploitable par une machine (84) placé dans ladite machine ; et,
un dispositif de séparation de cartes (94) dans ladite machine pour séparer lesdites cartes (28) les unes des autres à mesure que ledit moyen de cassette (26) est déplacé par rapport audit dispositif de séparation de cartes (94), ledit dispositif de séparation de cartes (94) aidant ledit lecteur (90) à lire à distance ledit indicateur exploitable par une machine (89) appliqué à ladite carte.

15. Machine selon la revendication 14, dans laquelle ledit moyen de cassette (26) comprend une pluralité de fentes de carte (61) séparées les unes des autres par une partie de paroi (70) et lesdites cartes ont une partie supérieure (23) et sont placées dans lesdites fentes de carte (61) dans ledit moyen de cassette ;
et,
dans laquelle ledit dispositif de séparation de cartes (94) comprend un corps (94) positionné approximativement à la hauteur de ladite partie supérieure desdites cartes (28), ledit dispositif de séparation poussant lesdites cartes (28) à une position inclinée dans lesdites fentes de carte (61) à mesure que ledit dispositif de séparation de cartes (94) est déplacé par rapport auxdites cartes (28), ladite position inclinée facilitant la lecture à distance desdites cartes (28) par ledit lecteur de carte (98).

16. Utilisation d'une machine selon la revendication 1, pour charger une carte d'échantillon de test (28) avec un échantillon de fluide dans une machine comprenant les étapes consistant à :
placer ladite carte d'échantillon de test (28) en communication fluidique avec ledit échantillon de fluide ;
placer ladite carte d'échantillon de test et ledit échantillon de fluide à l'intérieur d'une chambre à vide (402) ;
abaisser la pression dans ladite chambre à vide (402) à une vitesse essentiellement constante et prédéterminée jusqu'à un niveau de vide correspondant à un point de consigne, ladite vitesse étant sélectionnée de manière à ne pas amener des bulles d'air à se former dans ledit échantillon de fluide à mesure que l'air est enlevé de ladite carte (28) ;
maintenir ledit vide audit niveau du point de consigne pendant une durée prédéterminée ;
et,
libérer ledit vide à une vitesse prédéterminée.

17. Utilisation selon la revendication 16, dans laquelle ledit abaissement, ledit maintien et ladite libération dudit vide sont effectués dans la station de vide (400) ;
la station de vide (400) comprenant en outre une soupape de commande à vide (422) en communication avec ladite chambre à vide (402), ladite soupape de commande (422) opérant pour s'assurer que ladite vitesse d'abaissement de la pression dans la chambre à vide correspond à ladite vitesse prédéterminée.

18. Machine selon la revendication 1,
dans laquelle la station de vide comprend une chambre à vide (402) en communication avec une source de vide, ladite chambre (402) ayant une surface d'étanchéité périphérique inférieure ;
le bac (28) pour contenir lesdites cartes présente une surface périphérique (23) pour mise en prise de manière étanche avec ladite surface d'étanchéité périphérique inférieure ;
et la station de vide comprend en outre un moyen pour relever et abaisser ladite chambre à vide (402) de manière à permettre audit bac (28) de se déplacer en dessous de ladite chambre (402), et pour permettre audit bac (28) de se déplacer de ladite chambre à vide (402) à ladite station d'incubation, ladite chambre (402) dans ladite position inférieure mettant en prise ladite surface périphérique du bac (23), permettant au vide d'être généré à l'intérieur de ladite chambre.

19. Appareil de traitement d'échantillon selon la revendication 1 :
comprenant en outre une station de dilution (200), ladite station de dilution (200) comprenant une source de fluide (204), un tuyau d'injection rotatif (202) définissant un volume prédéterminé, et un conduit (206) transportant ledit fluide de ladite source audit tuyau d'injection ;
ledit tuyau d'injection (202) tournant depuis une première position pendant le remplissage dudit tuyau d'injection à une seconde position pour distribuer ledit fluide dans au moins un desdits réceptacles (30) portés par ledit bac (28) ;
une station de pipetage (300), ladite station de pipetage comprenant une source (304) de pailles (320) et un moyen pour enlever une desdites pailles (320) de ladite source de pailles et pour insérer ladite paille dans un desdits réceptacles (30) et extraire le fluide dudit réceptacle ;
et,
les stations de dilution (200) et de pipetage (300) permettant à au moins un desdits réceptacles (30) dans ledit bac de recevoir ledit diluant et permettant le transfert du fluide depuis un desdits réceptacles (30) dans ledit bac à un autre desdits réceptacles (30) dans ledit bac à mesure que ledit bac est déplacé au-delà de ladite station de dilution (200) et ladite station de pipetage (300).

20. Appareil selon la revendication 19, dans lequel lesdites stations de pipetage (300) et de dilution (200) sont positionnées à proximité l'une de l'autre de manière à permettre que des opérations de dilution et de pipetage simultanées soient effectuées sur les multiples réceptacles dudit bac.

21. Machine selon la revendication 1, comprenant en outre une station de découpe et d'étanchéité (500) pour fermer de manière étanche des cartes d'échantillon de test (28), chacune desdites cartes d'échantillon de test (28) ayant un tuyau de transfert (32) pour conduire des échantillons de fluide dans lesdites cartes, la station comprenant :
un fil de découpe à chaud (506) ;
ledit fil de découpe à chaud (506) coopérant avec ledit système de positionnement d'échantillon de test (100) pour couper ledit tuyau de transfert et pour fermer de manière étanche lesdites cartes d'échantillon de test (28) lorsque ledit système de positionnement opère pour déplacer ledit bac (22) avec lesdites cartes d'échantillon de test (28) au-delà dudit fil de découpe à chaud (506).

22. Machine selon la revendication 21, comprenant en outre un moyen d'entraînement pour déplacer ledit fil de découpe à chaud par rapport audit bac d'une position rétractée à une position de découpe,
ledit moyen d'entraînement et ledit fil de découpe à chaud coopérant avec ledit système de positionnement d'échantillon de test pour découper ledit tuyau de transfert (32) et pour fermer de manière étanche lesdites cartes d'échantillon de test lorsque ledit moyen d'entraînement déplace ledit fil de découpe à chaud à ladite position de découpe et que ledit système de positionnement d'échantillon de test opère pour déplacer ledit bac avec lesdites cartes d'échantillon de test au-delà dudit fil de découpe à chaud.

23. Station selon la revendication 21 ou 22, dans laquelle la température dudit fil de découpe à chaud est commandée par une source à courant constant.

24. Procédé d'utilisation d'une machine de test d'échantillon automatique selon la revendication 1, pour conduire le test d'identification et de sensibilité d'un agent biologique dans un échantillon de fluide, ledit échantillon de fluide contenant ledit agent biologique placé dans un premier réceptacle ouvert, le procédé comprenant les étapes consistant à :
(a) placer ledit premier réceptacle (30A) dans une cassette (26) avec ledit échantillon de fluide placé en communication fluidique avec une carte d'échantillon de test d'identification reçue par ladite cassette ;
(b) placer un second réceptacle ouvert (30) dans une cassette (26), ledit second réceptacle ouvert étant en communication fluidique avec une carte d'échantillon de test de sensibilité reçue par ladite cassette ;
(c) placer ladite cassette (26) avec lesdits premier et second réceptacles (30A, 30B) et les cartes d'échantillon de test d'identification et de sensibilité (28) dans ladite machine de test d'échantillon automatique ;
ensuite, à l'intérieur de ladite machine,
(d) ajouter un volume prédéterminé du diluant audit second réceptacle (30B) ;
(e) transférer une partie dudit échantillon de fluide dudit premier réceptacle (30A) audit second réceptacle (30B) ;
(f) charger lesdites cartes d'identification et de sensibilité (28) avec des fluides provenant desdits premier et second réceptacles (30A, 30B), respectivement ; et,
(g) conduire l'analyse optique desdites cartes d'identification et de sensibilité (28).

25. Procédé selon la revendication 24, comprenant en outre l'incubation desdites cartes d'identification après chargement et avant conduite de l'analyse optique.

26. Procédé selon la revendication 24 ou 25, dans lequel lesdites cartes d'échantillon de test (28) sont en communication fluidique avec lesdits réceptacles (30) via des tuyaux de transfert s'étendant vers l'extérieur depuis lesdites cartes d'échantillon de test, et le procédé comprenant en outre la découpe desdits tuyaux de transfert (32) après chargement des échantillons pour ainsi fermer de manière sensiblement étanche lesdites cartes d'échantillon de test.

27. Machine selon la revendication 1, dans laquelle le système de positionnement d'échantillon de test comprend :
un plateau de base (24) ayant des première, seconde, troisième et quatrième régions latérales et des première, seconde, troisième et quatrième sections de piste placées dans lesdites première, seconde, troisième et quatrième régions latérales, respectivement ;
le bac (22) avec une cassette (26) pour contenir au moins un échantillon de test placé sur et déplacé autour dudit plateau de base, ledit bac comprenant un élément de base et une pluralité de pieds (72) dépassant de celui-ci ;
et,
un système d'entraînement (40, 42, 44, 46, 48, 50, 52) pour déplacer ledit bac le long desdits premier, second, troisième et quatrième côtés dudit plateau de base de sorte que lesdits pieds dudit porte-échantillons se déplacent dans lesdites sections de piste, maintenant ainsi l'alignement dudit porte-échantillons par rapport audit plateau de base à mesure que ledit système d'entraînement déplace ledit porte-échantillons autour dudit plateau de base.

28. Machine selon la revendication 27, dans laquelle ledit système d'entraînement comprend :
un premier moyen d'entraînement (38A) pouvant être mis en prise avec ledit bac pour déplacer ledit porte-échantillons le long d'une première direction le long dudit plateau de base ;
un second moyen d'entraînement (38B) pouvant être mis en prise avec ledit bac pour déplacer ledit porte-échantillons le long d'une seconde direction le long dudit plateau de base ;
un troisième moyen d'entraînement (38C) pouvant être mis en prise avec ledit bac pour déplacer ledit porte-échantillons le long d'une troisième direction le long dudit plateau de base ; et,
un quatrième moyen d'entraînement (38D) pouvant être mis en prise avec ledit bac pour déplacer ledit porte-échantillons le long d'une quatrième direction le long dudit plateau de base ;
les premier, second, troisième et quatrième moyens d'entraînement pouvant fonctionner de manière indépendante de manière à déplacer ledit bac (22) autour dudit plateau de base (24) séquentiellement le long des première, seconde, troisième et quatrième régions latérales.

29. Machine selon la revendication 28, dans laquelle au moins un desdits premier, second, troisième et quatrième moyens d'entraînement comprend :
un arbre (42) ;
une palette (38) montée de manière déplaçable sur ledit arbre, ladite palette mettant en prise ledit bac ;
et,
un ensemble moteur (48) pour déplacer ladite palette (38) par rapport audit arbre (42), moyennant quoi ladite palette (38) déplace ledit bac (22) à travers ledit plateau de base (24) à mesure que ledit ensemble moteur (48) déplace ladite palette (38) par rapport audit arbre (42) ;
ledit arbre (42) pouvant être mis en rotation par rapport audit plateau de base (24) de manière à permettre à ladite palette de tourner entre une position d'engagement par rapport audit bac et une position de désengagement par rapport audit bac, permettant ainsi à ladite palette d'être engagée de manière sélective avec ledit bac.

30. Machine selon la revendication 1, dans laquelle le bac (22) comporte une surface supérieure ;
et la machine comprend, en outre :
une cassette (26) ayant une pluralité de fentes pour recevoir une pluralité de cartes d'échantillon de test (28) et un moyen pour recevoir une pluralité de tubes à essais (30) associés auxdites cartes d'échantillon de test (28), ladite cassette (28) étant reçue par ledit bac (22) à l'intérieur de ladite machine et pouvant être enlevée dudit bac et de ladite machine pour permettre ainsi le chargement de ladite cassette avec lesdites cartes d'échantillon de test et lesdits tubes à essais à l'extérieur de ladite machine.

31. Machine selon la revendication 1, comprenant un moyen pour distribuer un volume contrôlé de fluide dans un réceptacle, qui comprend :
une source dudit fluide ;
un tuyau d'injection (202) comprenant une partie de pointe, un corps creux et un orifice fluidique ;
un conduit (206) pour conduire ledit fluide de ladite source audit orifice fluidique dudit tuyau d'injection ;
un moyen pour faire tourner ledit tuyau d'injection (202) d'une première position, lorsque ladite partie de pointe est orientée selon une certaine inclinaison au-dessus de l'horizontale par rapport audit corps creux pendant le remplissage dudit tuyau d'injection, à une seconde position, lorsque ladite partie de pointe est orientée vers le bas vers ledit réceptacle pendant la distribution dudit fluide ;
et,
une soupape (226) pour commander l'écoulement dudit fluide dans ledit corps creux dudit tuyau d'injection ;
moyennant quoi l'air à l'intérieur dudit tuyau d'injection (202) peut être éliminé dudit tuyau d'injection (202) pendant le remplissage dudit tuyau d'injection (202) avec ledit fluide.

32. Machine selon la revendication 31, comprenant en outre un capteur optique (218) monté de manière adjacente audit tuyau d'injection (202) à un emplacement tel que lorsque ledit tuyau d'injection est dans ladite première position, ladite partie de pointe dudit tuyau d'injection est disposée de manière adjacente audit capteur optique.

33. Machine selon la revendication 31 ou 32, dans laquelle ledit tuyau d'injection (202) comprend en outre un orifice d'évacuation, et dans laquelle ledit système comprend en outre un moyen (217) pour délivrer un flux d'air comprimé audit tuyau d'injection lorsque ledit tuyau d'injection est mis en rotation dans ladite seconde position, accentuant ainsi l'expulsion dudit fluide dudit tuyau d'injection dans ledit réceptacle.

34. Machine selon la revendication 32 ou 33, dans laquelle ladite soupape (226) comprend une soupape à douille placée à l'intérieur dudit tuyau d'injection et un moyen pour ouvrir et fermer ladite soupape à douille.

35. Machine selon la revendication 34, dans laquelle ladite soupape à douille comprend en outre une partie de paroi (244) et une partie annulaire (242) disposées de manière adjacente audit corps dudit tuyau d'injection et formant une chambre centrale (246), et dans laquelle ledit moyen pour ouvrir et fermer ladite soupape comprend un plongeur de soupape (224) disposé à l'intérieur de ladite chambre (246) et un moyen pour déplacer ledit plongeur de soupape (242) entre des dépositions étendue et rétractée, ledit plongeur de soupape entrant en contact avec et étendant ladite partie de paroi (244) à l'intérieur dudit tuyau d'injection lorsque ledit plongeur de soupape est déplacé dans ladite position étendue, poussant ainsi ladite partie annulaire à l'opposé dudit corps dudit tuyau d'injection pour permettre audit fluide d'entrer dans ledit tuyau d'injection.

36. Machine selon la revendication 1, comprenant en outre un tuyau d'injection (202) pour contenir un volume contrôlé de fluide, qui comprend :
un corps creux allongé définissant une région intérieure ayant un volume prédéterminé, ledit corps ayant une première extrémité et une seconde extrémité, ladite seconde extrémité définissant une partie de pointe creuse ;
un orifice fluidique (228) pour conduire le fluide d'une source de fluide à ladite région intérieure ;
et,
une soupape à douille (226) positionnée à l'intérieur de ladite région intérieure adjacente à ladite première extrémité, ladite soupape à douille coopérant avec ledit orifice fluidique pour commander l'admission de fluide dans ladite région intérieure.

37. Machine selon la revendication 36, dans laquelle ladite soupape à douille comprend un corps flexible (240) ayant une partie de paroi (244) et une partie annulaire (244) formant une chambre centrale (246), ladite partie annulaire comprenant en outre au moins une nervure annulaire (248) en prise étanche avec ladite partie intérieure dudit tuyau d'injection adjacente à ladite première extrémité dudit tuyau d'injection.

38. Machine selon la revendication 36, dans laquelle ledit tuyau d'injection comprend une partie de pointe (234) et une zone de remplissage (232) adjacente à ladite partie de pointe, ladite zone de remplissage comprenant un effilement dudit corps creux allongé de manière à délivrer un volume de fluide réduit, de sorte qu'une faible quantité de fluide soit ajoutée à ladite zone de remplissage pendant la durée de la fermeture de ladite soupape à douille.

39. Machine selon la revendication 1, comprenant en outre un système pour enlever le liquide des réceptacles (30), qui comprend :
un logement (304) contenant une pluralité de pailles creuses (320) et définissant une ouverture d'extraction de paille ;
une broche de transfert tubulaire et effilée (330) ayant une partie de pointe ;
une source de vide (366) raccordée à ladite broche de transfert ;
un mécanisme d'entraînement pour ladite broche de transfert, ledit mécanisme d'entraînement comprenant :
un moyen (370) pour déplacer ladite broche de transfert le long d'un premier axe vers et à l'opposé de ladite ouverture d'extraction de paille, ladite partie de pointe mettant en prise une paille disposée dans ladite ouverture d'extraction de paille lorsque ladite broche de transfert est déplacée vers ladite ouverture d'extraction de paille ;
un moyen (360, 363, 365) pour faire tourner ladite broche de transfert et ladite paille dans une condition assemblée dans une orientation verticale au-dessus dudit réceptacle ;
et,
un moyen (322) pour abaisser ladite broche de transfert (330) et ladite paille (320) de sorte que ladite paille soit placée en contact avec ledit liquide dans ledit réceptacle et pour monter ladite broche de transfert de manière à extraire du fluide dudit réceptacle lorsqu'un vide est appliqué à ladite broche de transfert.

40. Machine selon la revendication 39, comprenant en outre un logement de broche effilée (331) ayant une ouverture de broche, dans laquelle ladite broche effilée (330) est déplaçable par rapport audit logement de broche effilée (331) et à ladite ouverture de broche à partir des positions étendue et rétractée, ledit logement de broche (331) ayant un diamètre inférieur au diamètre desdites pailles (320) de manière à amener ladite paille (320) à sortir de ladite broche effilée lors de la rétraction de ladite broche à l'intérieur dudit logement de broche.

41. Machine selon la revendication 39 ou 40, dans laquelle ledit logement contenant les pailles comprend un logement cylindrique (304) pour contenir une pluralité desdites pailles, ledit logement cylindrique ayant une ouverture (350) définissant une fente d'extraction de paille, et dans laquelle ledit système comprend en outre :
un tambour rotatif concentrique (340) placé à l'intérieur dudit logement cylindrique (304), ledit tambour rotatif comprend une pluralité de doigts (342) pour balayer les pailles à l'intérieur dudit logement cylindrique dans ladite fente d'extraction de paille ;
et,
une glissière horizontale (314) disposée de manière adjacente à ladite fente, ladite glissière étant déplaçable d'une première position permettant auxdites pailles d'être extraites dudit logement cylindrique, à une seconde position empêchant lesdites pailles d'être extraites de ladite fente d'extraction de paille.

42. Machine selon la revendication 1, comprenant en outre :
un moyen (732) pour éjecter ladite carte d'échantillon de ladite station d'incubation ;
un système d'entraînement (702) recevant les cartes de ladite station d'incubation éjectées par ledit moyen d'éjection et comprenant un moyen pour déplacer ladite carte de ladite station d'incubation de manière linéaire vers ladite station optique, dans laquelle ladite station optique est fonctionnelle pour lire le puits d'échantillon ;
et,
ledit système d'entraînement (702) comprend un moteur (708) et une courroie d'entraînement (710) fonctionnelle dans une direction vers l'avant pour déplacer ladite carte d'échantillon de ladite station d'incubation à ladite station de lecture optique (800), et dans la direction inverse pour faire revenir ladite carte d'échantillon de ladite station optique vers ladite station d'incubation.

43. Machine selon la revendication 38, dans laquelle ladite station de lecture optique (800) comprend un système optique de mesure du coefficient de transmission et ledit moteur (708) et ladite courroie d'entraînement (710) sont fonctionnels pour déplacer ladite carte en une pluralité de pas discrets dans lesdites directions avant et arrière de manière à permettre une pluralité de mesures du coeffficient de transmission à des emplacements différents desdits puits dans ladite carte.

44. Machine selon la revendication 42 ou la revendication 43, dans laquelle elle comprend en outre une station de rejet de carte (900) disposée de manière adjacente à ladite station de lecture optique (800), et dans laquelle ledit moteur et ladite courroie d'entraînement peuvent fonctionner dans la direction avant pour transporter ladite carte de ladite station optique à ladite station de rejet de carte à la fin de la lecture de ladite carte d'échantillon.

45. Machine selon l'une quelconque des revendications 42 à 44, dans laquelle ladite carte définit des premier et second bords, et dans laquelle ledit système comprend en outre :
une pièce d'appui (718) s'étendant transversalement au-dessus dudit système optique et maintenant l'alignement de ladite carte par rapport audit système optique, ladite pièce d'appui définissant une fente de carte et une direction de déplacement de carte, ladite fente de carte recevant ledit premier bord de ladite carte ;
ladite courroie d'entraînement (710) étant déplaçable par rapport à ladite pièce d'appui dans une direction parallèle à ladite direction de déplacement de carte, ladite courroie d'entraînement mettant en prise ledit second bord de ladite carte pour déplacer ladite carte par rapport audit système optique ; et,
une pluralité de rouleaux (712) supportant ladite courroie d'entraînement ;
ladite courroie d'entraînement (710) faisant coulisser ladite carte par rapport à ladite pièce d'appui dans ladite direction de déplacement de carte sans glissement substantiel entre ladite courroie d'entraînement et ledit second bord de ladite carte, permettant ainsi audit moteur de déplacer ladite carte par rapport audit système optique avec une précision substantielle.

46. Machine selon la revendication 1, dans laquelle la station de lecture optique comprend un système de test d'échantillon automatique pour conduire l'analyse optique d'une carte d'échantillon de test, qui comprend, en combinaison :
une station optique de fluorescence (804) et une station optique de coefficient de transmission (802) ; et
un système de transport de carte (700) pour déplacer ladite carte d'échantillon de test à travers au moins une station parmi ladite station de coefficient de transmission et ladite station optique de fluorescence pour conduire l'analyse optique de ladite carte.

47. Utilisation d'une machine selon l'une quelconque des revendications 42 à 46, comprenant les étapes consistant à :
placer ladite carte d'échantillon (28) dans un espace serré défini par (1) une fente dans une pièce d'appui (718), ladite fente recevant un dit premier bord de ladite carte et définissant une direction de déplacement de carte, et (2) une courroie d'entraînement (710) positionnée parallèle à ladite fente et supportant ledit second bord de ladite carte ;
solliciter ladite courroie d'entraînement (710) vers ladite pièce d'appui (718) de manière à maintenir la pression entre ladite courroie d'entraînement, ladite carte et ladite fente ;
et,
déplacer ladite courroie d'entraînement (710) dans ladite direction du déplacement de carte de manière à faire coulisser ladite carte à travers ladite fente vers ladite station optique sans glissement substantiel de ladite carte par rapport à ladite courroie, permettant un déplacement précis de ladite carte par rapport audit système optique.

48. Utilisation selon la revendication 47, dans laquelle ladite carte comprend au moins une colonne de puits d'échantillon, et ledit système de lecture comprend une station optique de coefficient de transmission (802) ; et,
dans laquelle le procédé comprend en outre le déplacement de ladite courroie d'entraînement (710) en une pluralité de pas discrets de manière à déplacer ladite colonne des puits d'échantillon au-delà de ladite station optique de coefficient de transmission (802) en une pluralité de positions discrètes, ladite station optique de coefficient de transmission étant fonctionnelle pour prendre au moins une mesure du coefficient de transmission de ladite colonne de puits d'échantillon à chacun desdits pas discrets.

49. Utilisation selon la revendication 47 ou la revendication 48, dans laquelle ladite station de lecture comprend une station optique de fluorescence (804) et dans laquelle le procédé comprend en outre le déplacement de la courroie d'entraînement (710) dans une première direction de manière à déplacer ladite carte vers ladite station optique de fluorescence (804) et le déplacement de ladite courroie d'entraînement dans une seconde direction opposée à ladite première direction de manière à faire revenir ladite carte de ladite station optique de fluorescence (804) vers ladite station d'incubation (600).

50. Machine selon la revendication 49, comprenant un système optique de fluorescence (804) pour une carte d'échantillon de test ayant une pluralité de puits agencés en une colonne de puits, lesdits puits contenant un fluorophore pouvant être excité lors de la réception du rayonnement à un niveau d'énergie d'excitation et émettant un rayonnement à un niveau d'énergie d'émission, lequel système comprend :
un lampe d'excitation (816) pour éclairer ladite colonne de puits avec une lumière d'excitation audit niveau d'énergie d'excitation ;
un séparateur de faisceau dichromatique (830) refléchissant une partie de ladite lumière d'excitation provenant de ladite lampe d'excitation vers ladite colonne de puits simultanément, ledit séparateur de faisceau dichromatique étant au moins partiellement transparent au rayonnement audit niveau d'énergie d'émission ;
un détecteur de référence (844) recevant la lumière d'excitation passant depuis ladite lampe d'excitation à travers ledit séparateur de faisceau dichromatique ;
un ensemble réflecteur sélectif (852) disposé à l'opposé desdits puits par rapport à ladite lampe d'excitation et audit séparateur de faisceau dichromatique pour refléchir la lumière d'excitation passant à travers lesdits puits de nouveau dans lesdits puits ;
une pluralité de détecteurs (840), un pour chacun desdits puits d'échantillon, lesdits détecteurs recevant le rayonnement audit niveau d'énergie d'émission transmis depuis lesdits puits d'échantillon à travers ledit séparateur de faisceau dichromatique ; et,
un circuit de détection de crête (814) pour comparer la sortie dudit détecteur de référence et de ladite pluralité de détecteurs de manière à donner des mesures homogènes de la fluorescence provenant desdits puits indépendamment d'un changement de la sortie de ladite lampe d'excitation.

51. Machine selon la revendication 50, dans laquelle ladite lampe d'excitation comprend une lampe allongée permettant l'éclairage direct d'une pluralité desdits puits dans ladite colonne de puits simultanément sans utiliser de câbles à fibre optique.

52. Machine selon la revendication 50 ou la revendication 51, dans laquelle ladite lumière d'excitation passe depuis ledit séparateur de faisceau dichromatique (830) vers ledit puits et l'ensemble réflecteur le long d'un trajet optique, et dans laquelle ledit ensemble réflecteur sélectif (852) comprend en outre une navette optique (803) ayant une source de référence (850) pour émettre un rayonnement audit niveau d'énergie d'émission dudit fluorophore, ladite navette optique déplaçant ladite source de référence (850) dans ledit trajet optique de manière à permettre l'étalonnage de ladite pluralité de détecteurs.

53. Machine selon l'une quelconque des revendications 50 à 52, dans laquelle ledit circuit de détection de crête (814) évalue le rapport desdites sorties de ladite pluralité de détecteurs divisées par ladite sortie dudit détecteur de référence pour générer des mesures homogènes de fluorescence indépendamment de la sortie de ladite lampe d'excitation.

54. Utilisation d'une machine selon la revendication 50, lesdits puits étant agencés en une colonne de puits et contenant un fluorophore émettant un rayonnement à une certaine longueur d'onde d'émission, dans laquelle, en utilisant une machine, le procédé comprend les étapes consistant à :
positionner ladite colonne de puits adjacente à une lampe flash linéaire (824) émettant un rayonnement à une certaine longueur d'onde d'excitation ;
faire flasher ladite lampe (824) de manière à éclairer simultanément lesdits puits avec ledit rayonnement à ladite longueur d'onde d'excitation, ledit rayonnement se déplaçant le long d'un trajet optique ;
transmettre une partie dudit rayonnement depuis ladite lampe flash (824) à un photodétecteur de référence (850), ledit photodétecteur de référence générant en réponse un signal de sortie ;
recevoir au niveau d'une pluralité de détecteurs (840) le rayonnement provenant desdits puits à ladite longueur d'onde d'émission le long dudit trajet optique, lesdits détecteurs générant en réponse des signaux de sortie de détecteur ;
et,
comparer le rapport desdits signaux de sortie de détecteur audit signal de sortie de référence pour déterminer ainsi la fluorescence dudit fluorophore dans ledit puits indépendamment de la sortie de ladite lampe.

55. Utilisation selon la revendication 54, dans laquelle ladite lampe (824) est mise en oeuvre pour flasher une pluralité de fois de manière à permettre des ensembles de données de fluorescence multiples dudit puits.

56. Machine selon la revendication 1, comprenant en outre un système de rejet par empilement (900) pour une pluralité de cartes ou autres objets rigides formés de manière similaire ayant une surface plate et. des côtés parallèles, lequel système comprend :
un magasin (902) ayant une surface inférieure, une partie d'extrémité et des premier et second côtés s'étendant depuis ladite surface inférieure ;
une fente d'entrée de carte (901) pour recevoir au moins une desdites cartes qui doivent être empilées dans ledit magasin ;
un moyen d'encliquetage résilient (910) placé de manière adjacente à ladite fente d'entrée de carte pour maintenir lesdites cartes dans une condition empilée dans ledit magasin ;
une plaque de pression (914) déplaçable à l'intérieur dudit magasin entre ledit moyen d'encliquetage et ladite extrémité dudit magasin, lesdites cartes étant empilées dans ledit magasin entre ledit moyen d'encliquetage et ladite plaque de pression, ladite plaque de pression ayant une surface de contact de carte ;
un moyen pour solliciter (920) ladite plaque de pression vers ledit moyen d'encliquetage de manière à placer ladite surface de contact de carte de ladite plaque de pression en contact avec une partie d'une desdites cartes pour pousser ainsi lesdites cartes contre ledit moyen d'encliquetage ; et,
un moyen de plaque de poussée (908), déplaçable en va-et-vient par rapport à ladite fente d'entrée de carte d'une position rétractée à une position étendue, pour déplacer ladite au moins une desdites cartes d'échantillon de test placées dans ladite fente d'entrée de carte au-delà dudit moyen d'encliquetage lorsque ledit moyen de plaque de poussée est déplacé de ladite position rétractée à ladite position étendue, plaçant ainsi ladite au moins une desdites cartes dans une condition empilée entre ledit moyen d'encliquetage et ladite plaque de pression, ledit moyen de plaque de poussée revenant par la suite à ladite position rétractée permettant à une autre desdites cartes d'échantillon de test d'être placée dans ladite fente d'entrée de carte.

57. Machine selon la revendication 52, dans laquelle ledit moyen de sollicitation comprend un ressort à force constante (920), ledit ressort à force constante sollicitant ladite plaque de pression vers ledit moyen d'encliquetage avec une force sensiblement indépendante du nombre de cartes empilées dans ledit magasin entre ladite plaque de pression et ledit moyen d'encliquetage.
